# EUROPÄISCHE PATENTSCHRIFT

(11) **EP 4 472 874 B1**
(45) Veröffentlichungstag und Bekanntmachung des Hinweises auf die Patenterteilung: **13.05.2026**
(21) Anmeldenummer: 23708659.0
(22) Anmeldetag: 03.02.2023
(51) Int. Cl.: B61B 3/02, B65G 17/20, B65G 17/48, B65G 47/71

(54) **VERBESSERTE HÄNGEFÖRDERVORRICHTUNG FÜR EIN KOMMISSIONIERSYSTEM**
IMPROVED OVERHEAD CONVEYING DEVICE FOR AN ORDER-PICKING SYSTEM
DISPOSITIF DE TRANSPORT SUSPENDU AMÉLIORÉ POUR UN SYSTÈME DE PRÉPARATION DE COMMANDES

(30) Priorität: 04.02.2022 AT 500682022
(43) Veröffentlichungstag der Anmeldung: 11.12.2024
(73) Patentinhaber: TGW Logistics GmbH, 4614 Marchtrenk (AT)
(72) Erfinder: KRIECHBAUM, Thomas, 4701 Bad Schallerbach (AT); REISCHL, Josef, 4623 Gunskirchen (AT); PAUZENBERGER, Christoph, 4720 Neumarkt i. H. (AT); OEGGER, Bernhard, 4675 Weibern (AT); KAMEL, Hussam, 4600 Wels (AT)
(74) Vertreter: Burger, Hannes Alfred
(86) Internationale Anmeldenummer: PCT/AT2023/060031
(87) Internationale Veröffentlichungsnummer: WO 2023/147619

(56) Entgegenhaltungen:
- EP-A1- 3 476 685
- EP-A1- 3 792 204
- WO-A1-2021/195682
- DE-A1- 102018 128 417
- DE-T2- 69 938 081
- DE-U1- 202020 107 545
- JP-A- 2002 220 111
- KR-A- 20160 092 159
- US-A1- 2017 057 750

## Beschreibung

Die Erfindung betrifft eine Hängefördervorrichtung für ein Kommissioniersystem, welche eine als Führungsschiene ausgebildete Tragstruktur mit einer entlang der Führungsschiene verlaufenden Lauffläche umfasst. Weiterhin umfasst die genannte Hängefördervorrichtung einen Transportträger zum Transport von Hängeware, welcher einen Basiskörper aufweist, und eine Antriebsvorrichtung zum Bewegen des Transportträgers auf der Führungsschiene. Die Antriebsvorrichtung weist einen elektrisch betriebenen Motor auf, welcher am Transportträger gelagert ist. Ein Rad der genannten mehreren Räder ist als Antriebsrad ausgebildet ist, das mit dem Motor gekoppelt ist. Die Führungsschiene ist zweigeteilt und umfasst eine erste Führungsteilschiene mit einer ersten Lauffläche und eine zweite Führungsteilschiene mit einer zweiten Lauffläche, wobei die erste Lauffläche und die zweite Lauffläche mit gegenseitigem Horizontalabstand parallel oder geneigt zueinander verlaufen, wobei der elektrisch betriebene Motor oberhalb der Führungsschiene, wenn der Transportträger an der Führungsschiene hängt. Der Transportträger weist einen Tragkörper mit einer Aufnahme zum Aufhängen der Hängeware auf. Darüber hinaus betrifft die Erfindung einen Transportträger für eine Hängefördervorrichtung zum Transport von Hängeware.

Eine Hängefördervorrichtung und ein Transportträger sind aus dem Stand der Technik bekannt.

Beispielsweise offenbart die WO 2020/160585 A2 in diesem Zusammenhang ein Transportträgersystem für eine Hängefördervorrichtung. Insbesondere weist der Transportträger dabei einen universell verwendbaren Basiskörper und einen über eine Verbindungsvorrichtung auswechselbaren Tragkörper auf, welcher in einer ersten Konfiguration mit einer vollständig umschlossenen Aufnahmeöffnung zum Transport von Transporttaschen und in einer zweiten Konfiguration mit einem Haken zum Transport von Ware auf Kleiderbügeln versehen ist.

Aus der WO 2021/195682 A1 sowie der DE 10 2018 209 722 A1 ist ein Transportträgersystem für eine Hängefördervorrichtung bekannt, wobei die Transportträger über einen Linearantrieb entlang einer Führungsschiene bewegt werden. Hierbei wird eine Antriebskraft von einem an der Führungsschiene angeordneten stationären Primärelement des Linearantriebs auf ein am Transportträger angeordnetes Sekundärelement des Linearantriebs übertragen. Hierbei können eine Vielzahl von individuell ansteuerbaren Antriebssegmenten vorgesehen sein, wobei sämtliche Transportträger innerhalb eines Antriebssegmentes im Wesentlichen gemeinsam angesteuert werden.

Die US 2017/057750 A1 offenbart eine Hängefördervorrichtung für ein Kommissioniersystem gemäß dem Oberbegriff des Anspruchs 1, umfassend eine als Führungsschiene ausgebildete Tragstruktur mit einer entlang der Führungsschiene verlaufenden Lauffläche, einen Transportträger zum Transport von Hängeware, welcher einen Basiskörper und mehrere am Basiskörper drehbar gelagerten Räder aufweist, und eine Antriebsvorrichtung zum Bewegen des Transportträgers entlang der Führungsschiene, wobei die Antriebsvorrichtung einen elektrisch betriebenen Motor aufweist, welcher an Transportträger gelagert ist. Ein Rad der genannten Räder ist als mit dem Motor gekoppeltes Antriebsrad ausgebildet. Die Führungsschiene ist zweigeteilt, wobei zwei Führungsteilschienen jeweils eine Lauffläche umfassen, die mit gegenseitigem Horizontalabstand parallel zueinander verlaufen. Der elektrisch betriebene Motor ist oberhalb der Führungsschiene angeordnet, wenn der Transportträger an der Führungsschiene hängt.

Nachteilig an diesen und an anderen bekannten Transportträgersystemen ist, dass diese kein individuelles Bewegen eines Transportträgers durch ein Kommissioniersystem erlauben. Stattessend werden Transportträger in bekannten Kommissioniersystemen im Kollektiv mit anderen Transportträgern bewegt. Dies führt zu Leistungseinbußen im Betrieb bekannter Kommissioniersysteme und dazu, dass bekannte Kommissioniersysteme vergleichsweise viel Bauraum benötigen. Auch kann die Tragstruktur bei bekannten Kommissioniersystemen nicht sehr flexibel gestaltet werden.

Eine Aufgabe der Erfindung ist es daher, eine verbesserte Hängefördervorrichtung anzugeben.

Die Aufgabe der Erfindung wird mit einer Hängefördervorrichtung für ein Kommissioniersystem gemäß Anspruch 1 gelöst, wobei der Transportträger Stromabnehmer aufweist, welche elektrisch mit dem Motor verbunden sind. Es ist ein elektrisches Energieversorgungssystem vorgesehen, welches einen Isolator und freiliegende elektrische Leiter umfasst, wobei die elektrischen Leiter entlang der und in einem Abstand zur Führungsschiene angeordnet und von den Stromabnehmern kontaktierbar sind und bei Bewegung des Transportträgers auf den elektrischen Leitern gleiten/schleifen oder abrollen.

Durch die vorgeschlagenen Maßnahmen ist es möglich, einen Transportträger individuell und (weitgehend) unabhängig von anderen Transportträgern im Kommissioniersystem zu bewegen. Insbesondere kann eine Route des Transportträgers, eine Geschwindigkeit des Transportträgers, eine Beschleunigung des Transportträgers und/oder ein Abstand des Transportträgers zu einem anderen, vorausfahrenden Transportträger individuell gewählt werden. Durch entsprechende Vorgabe der Geschwindigkeit des Transportträgers und/oder des Abstandes des Transportträgers zu einem anderen, vorausfahrenden Transportträger kann auch ein bestimmter Durchsatz von Transportträgern vorgegeben beziehungsweise erreicht werden. Beispielsweise kann die besagte Geschwindigkeit und der besagte Abstand in Kurven verringert und auf geraden Abschnitten erhöht werden. Der besagte Durchsatz kann dabei insbesondere konstant gehalten werden. Möglich ist insbesondere auch, eine Pendelbewegung der Hängeware, welche beim Beschleunigen oder Bremsen des Transportträgers auftreten kann, individuell auszuregeln. Dabei werden die Antriebsräder so angetrieben, dass sie einer Pendelbewegung entgegenwirken. Regelalgorithmen für diesen Zweck sind grundsätzlich bekannt und werden daher an dieser Stelle nicht im Detail ausgeführt.

Erfindungsgemäß umfasst die Führungsschiene eine erste Lauffläche an einer ersten Führungsteilschiene und eine zweite Lauffläche an einer zweiten Führungsteilschiene, wobei die erste Lauffläche und die zweite Lauffläche mit gegenseitigem Horizontalabstand parallel oder geneigt zueinander verlaufen. Dadurch kann der Transportträger besonders stabil auf der Führungsschiene gelagert werden. Die erste Lauffläche und die zweite Lauffläche können insbesondere aufeinander zugeneigt ausgerichtet sein und sich entlang einer Erstreckungsrichtung parallel zueinander erstrecken.

Gemäß der Erfindung ist der elektrisch betriebene Motor oberhalb der Führungsschiene angeordnet, wenn der Transportträger an der Führungsschiene hängt. Dadurch ist der Motor dort angeordnet, wo üblicherweise ohnehin ausreichend Raum vorhanden ist. Insbesondere ist durch die spezielle Anordnung des Motors auch eine große Gestaltungsfreiheit bei der Gestaltung einer Weiche gegeben.

Der Transportträger weist erfindungsgemäß einen Tragkörper mit einer Aufnahme zum Aufhängen der Hängeware auf. Insbesondere kann die Aufnahme eine vollständig umschlossene Aufnahmeöffnung (Öse) zum Einhängen eines Bügels der Hängeware oder einen offenen Aufnahmeabschnitt (Haken) zum Einhängen oder Aufhängen eines Bügels der Hängeware umfassen.

Günstig ist es, wenn das Antriebsrad auf der Lauffläche abrollbar aufliegt und wenn der Transportträger mittels des Antriebsrads an der Führungsschiene hängt. Dadurch bewirkt das Gewicht des Transportträgers und gegebenenfalls ein Gewicht der Hängeware eine Anpresskraft des Antriebsrads auf die Lauffläche, wodurch eine mit Hilfe des Antriebsrads übertragene Reibkraft erhöht wird. Zusätzlich zu dem auf der Lauffläche aufliegenden Antriebsrad kann der Transportträger noch weitere Räder aufweisen, die nicht notwendigerweise auf der Lauffläche aufliegen, sondern an anderer Stelle der Führungsschiene anliegen.

Vorteilhaft ist es, wenn die Führungsschiene eine entlang dieser verlaufende Gegenlauffläche aufweist und wenn ein Rad der genannten Räder als Anstellrad ausgebildet ist und an der Gegenlauffläche abrollbar anliegt. Dadurch wird eine Führung des Transportträgers auf der Führungsschiene verbessert. Nach einer möglichen Ausführung verläuft die Gegenlauffläche mit einem Horizontalabstand und/oder Vertikalabstand parallel zur Lauffläche. Das "Anstellrad" kann alternativ auch als "Gegenrad" bezeichnet oder angesehen werden.

Besonders vorteilhaft ist es auch, wenn der Transportträger eine Anstellvorrichtung aufweist, durch welche das Anstellrad mit einer Anstellkraft gegen die Gegenlauffläche angelegt wird. Dadurch wird eine Führung des Transportträgers auf der Führungsschiene weiter verbessert. Zudem wird auch eine durch das Antriebsrad übertragene Reibkraft erhöht. Insbesondere kann auf das Antriebsrad die vom Transportträger verursachte Gewichtskraft, die von der Hängeware verursachte Gewichtskraft und die Anstellkraft wirken. Das Anstellrad kann bei dieser Ausführungsform alternativ auch als "Gegenrad", "Andruckrad" oder "Anpressrad" bezeichnet oder angesehen werden. Demgemäß kann die "Anstellkraft" alternativ auch als "Andruckkraft" oder "Anpresskraft" bezeichnet oder angesehen werden.

Günstig ist es, wenn die Anstellvorrichtung
einen beweglich am Basiskörper gelagerten Schlitten und einen gegen den Schlitten angestellten Krafterzeuger aufweist, wobei das Anstellrad am Schlitten gelagert ist, oder
eine beweglich am Basiskörper gelagerte Schwinge und einen gegen die Schwinge angestellten Krafterzeuger aufweist, wobei das Anstellrad an der Schwinge gelagert ist.

Auf diese Weise können Höhentoleranzen der Führungsschiene gut ausgeglichen werden. Der Begriff "angestellt" kann alternativ auch als "vorgespannt" bezeichnet oder angesehen werden.

Günstig ist es weiterhin, wenn der Krafterzeuger ein vorgespanntes, elastisches Federelement (zum Beispiel eine Feder oder einen Gummipuffer), eine pneumatische Feder, einen Permanentmagneten oder einen Elektromagneten umfasst. Dadurch kann die Anstellkraft mit gut erprobten technischen Mitteln erzeugt werden.

In einer weiteren günstigen Ausführungsform weist die Antriebsvorrichtung einen Zugmitteltrieb auf, über welchen das Antriebsrad mit dem Motor gekoppelt ist. Dadurch ist der Antrieb relativ leise und wartungsarm. Als Zugmittel des Zugmitteltriebs kommt insbesondere ein Zahnriemen oder ein Flachriemen in Betracht.

Günstig ist es, wenn die Hängefördervorrichtung die Hängeware umfasst, welche mit dem Transportträger transportierbar ist, und die Hängeware eine Transporttasche mit einem Taschenkörper zur Aufbewahrung einer Ware aufweist. Insbesondere sind die Transporttasche und der Transportträger aneinandergekoppelt. Die Transporttasche umfasst in einer bevorzugten Ausführung einen Hängeträger, wobei der Hängeträger und der Transportträger über eine Gelenkverbindung derart gelenkig miteinander gekoppelt sind, dass der Hängeträger um eine im Wesentlichen parallel zur Hängefördervorrichtung (beziehungsweise im Wesentlichen parallel zur Transportrichtung des Transportträger) verlaufende Achse relativ zum Transportträger schwenkbar ist. Der Transportträger kann mit einem ersten Kupplungselement und der Hängeträger mit einem zweiten Kupplungselement versehen werden, wobei das erste Kupplungselement und das zweite Kupplungselement koppelbar sind und die Gelenkverbindung bilden. Das erste Kupplungselement kann dabei eine Schwenkaufnahme und das zweite Kupplungselement eine Schwenklagerachse umfassen. Die Schwenklagerachse kann dabei an einem Haken ausgebildet sein. Nach einer anderen Ausführung kann die Gelenkverbindung zwischen dem Hängeträger und dem Transportträger einen elastischen Körper umfassen, insbesondere aus Elastomermaterial, welcher einerseits mit dem Hängeträger und andererseits mit dem Transportträger verbunden ist. Der Hängeträger und der Transportträger sind über den elastischen Körper (die elastische Gelenkverbindung) bevorzugt dauerhaft beziehungsweise unlösbar miteinander verbunden.

Die Hängeware kann generell durch Kleidungsstücke gebildet sein, die mittels Kleiderbügel an den Transportträgern hängen, oder durch Transporttaschen zur Aufnahme von Waren, welche an den Transportträgern hängen.

Von Vorteil ist es, wenn der Tragkörper über eine Verbindungsvorrichtung auswechselbar am Basiskörper befestigt ist. Dadurch ist der Tragkörper flexibel einsetzbar und kann für eine Vielzahl unterschiedlicher Hängewaren verwendet werden.

Besonders vorteilhaft ist es auch, wenn der Transportträger und/oder die Transporttasche einen mit dem Motor elektrisch verbundenen Energiespeicher und/oder eine mit dem Motor elektrisch verbundene Energiequelle aufweist. Insbesondere ist der Motor dabei über ein Schaltelement oder Steuerelement mit dem Energiespeicher beziehungsweise mit der Energiequelle verbunden. Der Energiespeicher kann beispielsweise als Akkumulator ausgebildet sein oder auch als Kondensator (z.B. als "Supercap"). Der Energiespeicher kann während einer Bewegung des Transportträgers aufgeladen werden, beispielsweise über ein entlang der Führungsschiene angeordnetes Energieversorgungssystem, oder stationär an einer Ladestation des Kommissioniersystems. Die Energiequelle kann beispielsweise als Solarmodul ausgebildet und zusätzlich oder alternativ zu einem Energiespeicher vorgesehen sein. Die vorgeschlagenen Maßnahmen ermöglichen oder unterstützen ein individuelles Bewegen des Transportträgers im Kommissioniersystem. Insbesondere ist der vorgeschlagene Transportträger zumindest temporär unabhängig von einem (stationären) Energieversorgungssystems des Kommissioniersystems.

Die Hängefördervorrichtung weist ein elektrisches Energieversorgungssystem auf, welches einen Isolator und freiliegende elektrische Leiter umfasst, welche entlang der Führungsschiene angeordnet sind, wobei der Transportträger Stromabnehmer aufweist, welche elektrisch in Kontakt mit den elektrischen Leitern stehen und elektrisch mit dem Motor verbunden sind. Dadurch ist es möglich, einen Transportträger auch unabhängig von einem im Transportträger optional vorgesehenen Energiespeicher oder unabhängig von einer im Transportträger optional vorgesehenen Energiequelle mit Strom zu versorgen und den Antrieb des Transportträgers zu ermöglichen. Darüber hinaus kann auch ein im Transportträger vorgesehener Energiespeicher über das Energieversorgungssystem aufgeladen werden, insbesondere auch während einer Bewegung des Transportträgers. Die Stromabnehmer können beispielsweise als Schleifkontakte ausgebildet sein und bei Bewegung des Transportträgers auf den elektrischen Leitern gleiten/schleifen. Die elektrischen Leiter können dann auch als "Schleifleitungen" angesehen und/oder bezeichnet werden. Wenn die elektrischen Leiter auf beziehungsweise an der Tragschiene angeordnet sind und die Abnehmer darauf abrollen, können die Abnehmer auch als Räder des Transportträgers ausgebildet sein.

Vorteilhaft ist es weiterhin, wenn die Hängefördervorrichtung entlang der Führungsschiene ein induktives Energieversorgungssystem beziehungsweise ein induktives Energieübertragungssystem aufweist und die Energieübertragung zum Motor (und gegebenenfalls zu einer Ladeschaltung eines mit dem Motor verbundenen Energiespeichers) des Transportträgers induktiv erfolgt. Dadurch kann die Energieübertragung zum Transportträger kontaktlos und damit geräuschlos und verschleißfrei erfolgen. Insbesondere kann das induktive Energieversorgungsystem zumindest einen parallel zur Führungsschiene verlaufenden elektrischen Leiter sowie eine Spule aufweisen, welche auf dem Transportträger angeordnet und elektrisch mit dem Motor verbunden ist, wobei die Energieübertragung zur Spule kontaktlos erfolgt. In einer besonders vorteilhaften Ausführungsvariante umfasst der Transportträger einen ferromagnetischen Kern, um welchen die Spule gewickelt ist und welcher den zumindest einen elektrischen Leiter zumindest teilweise umgreift. Dadurch kann der magnetische Fluss besser geführt und der Wirkungsgrad der induktiven Energieübertragung verbessert werden.

Vorteilhaft ist das elektrische Energieversorgungssystem nur auf geraden Streckenabschnitten der Führungsschiene vorgesehen beziehungsweise vorhanden. Dadurch kann das elektrische Energieversorgungssystem einfacher gestaltet sein. In Kurven und auf Weichen kann der Motor bei dieser Ausführungsform aus dem Energiespeicher beziehungsweise der Energiequelle des Transportträgers versorgt werden.

Besonders vorteilhaft ist es weiterhin, wenn die Hängefördervorrichtung eine Vorschubvorrichtung aufweist, welche einem Transportabschnitt der Führungsschiene zugeordnet ist, welcher von einem ersten Höhenniveau zu einem vom ersten Höhenniveau unterschiedlichen zweiten Höhenniveau verläuft, wobei die Vorschubvorrichtung mit dem Transportträger in einer Wirkverbindung steht und der Transportträger zumindest während einer Transportbewegung zwischen den unterschiedlichen Höhenniveaus durch die Vorschubvorrichtung mit einer Vorschubkraft beaufschlagt wird. Dadurch kann der Transportträger auch auf steilen Streckenabschnitten sicher vorwärtsbewegt werden. Die Vorschubkraft kann zusätzlich zur Antriebskraft wirken. Alternativ ist denkbar, dass der Antrieb im Transportabschnitt weggeschaltet wird und nur die Vorschubkraft auf den Transportträger wirkt. Beispielsweise kann die Vorschubvorrichtung im Transportabschnitt eine parallel zur Führungsschiene verlaufende Zahnstange und der Transportträger ein Zahnrad aufweisen, das mit der Zahnstange kämmt und mit dem Motor gekoppelt ist. Günstig ist es dabei, wenn das Antriebsrad und das Zahnrad, insbesondere drehfest, miteinander gekoppelt sind. Des Weiteren können das Antriebsrad und das Zahnrad auf einer gemeinsamen Antriebswelle befestigt und darauf axial zueinander versetzt angeordnet sein. Alternativ kann die Vorschubeinrichtung beispielsweise durch einen Bolzen gebildet sein, welcher auf einem Zugmitteltrieb befestigt ist und den Transportträger formschlüssig hintergreifen kann.

Günstig ist es weiterhin, wenn zumindest einige der Räder des Transportträgers doppelt ausgeführt und paarweise symmetrisch zu einer in Längsrichtung der Führungsschiene verlaufenden Vertikalebene angeordnet sind, wobei in einem Betriebszustand des Transportträgers jeweils ein Satz, insbesondere ein erster Satz oder ein zweiter Satz, der paarweise vorgesehenen Räder im Eingriff mit der Führungsschiene ist. Dadurch kann ein Richtungswechsel bei Weichen auf einfache Weise erfolgen, wobei der Transportträger einfach aufgebaut ist. Hierbei bilden vorzugsweise jene Räder, welche zu einer ersten Seite der Vertikalebene angeordnet sind, den ersten Satz paarweise vorgesehene Räder, und jene Räder, welche zu einer zweiten Seite der Vertikalebene angeordnet sind, den zweiten Satz paarweise vorgesehene Räder.

Darüber hinaus kann ein Rad der genannten Räder des Transportträgers als erstes Antriebsrad eines ersten Antriebsräderpaares und ein weiteres Rad der genannten Räder des Transportträgers als zweites Antriebsrad des ersten Antriebsräderpaares ausgebildet sein. Optional können das erste Antriebsrad auf der ersten Lauffläche und das zweite Antriebsrad auf der zweiten Lauffläche abrollbar aufliegen. Das erste Antriebsrad und das zweite Antriebsrad des ersten Antriebsräderpaares können beispielsweise koaxial auf einer mit dem Motor gekoppelten ersten Antriebswelle angeordnet sein. Durch die koaxiale Anordnung der beiden Antriebsräder ist der Antrieb sehr kompakt aufgebaut.

In einer weiteren Ausführungsform der Hängefördervorrichtung kann ein Rad der genannten Räder des Transportträgers als erstes Antriebsrad eines zweiten Antriebsräderpaares ausgebildet sein und auf der ersten Lauffläche abrollbar aufliegen, und ein weiteres Rad der genannten Räder des Transportträgers kann als zweites Antriebsrad des zweiten Antriebsräderpaares ausgebildet sein und auf der zweiten Lauffläche abrollbar aufliegen, wobei das erste Antriebsrad und das zweite Antriebsrad des zweiten Antriebsräderpaares koaxial auf einer mit dem Motor gekoppelten zweiten Antriebswelle angeordnet sein können. Dadurch kann der Transportträger noch stabiler auf der Führungsschiene gelagert werden.

Vorteilhaft hängt der Transportträger mittels der genannten Antriebsräder an der Führungsschiene. Insbesondere kann der Transportträger mittels des Antriebsrads an der Führungsschiene hängen, wenn (nur) ein Antriebsrad vorgesehen ist. Der Transportträger kann aber auch mit dem ersten und/oder zweiten Antriebsrad des ersten Antriebsräderpaares an der Führungsschiene hängen, wenn ein erstes Antriebsräderpaar vorgesehen ist, und zusätzlich auch mit dem ersten und/oder zweiten Antriebsrad des zweiten Antriebsräderpaares an der Führungsschiene hängen, wenn ein zweites Antriebsräderpaar vorgesehen ist. Dadurch bewirkt das Gewicht des Transportträgers und gegebenenfalls das Gewicht der Hängeware eine Anpresskraft des Antriebsrads auf die Lauffläche oder eine Anpresskraft der Antriebsräder auf die Laufflächen, wodurch eine mit Hilfe des Antriebsrads oder der Antriebsräder übertragene Reibkraft erhöht wird.

Besonders vorteilhaft ist es, wenn die erste Lauffläche und die zweite Lauffläche symmetrisch zu einer in Längsrichtung der Führungsschiene verlaufenden Vertikalebene angeordnet sind und/oder die Antriebsräder symmetrisch zu der in Längsrichtung der Führungsschiene verlaufenden Vertikalebene angeordnet sind. Dadurch kann der Transportträger nicht nur stabil auf der Führungsschiene gelagert, sondern die Führungsschiene und/oder der Transportträger dabei auch einfach aufgebaut sein.

In einer weiteren günstigen Ausführungsform weist die Antriebsvorrichtung einen Zugmitteltrieb auf, über welchen die genannten Antriebsräder mit dem Motor gekoppelt sind. Dadurch ist der Antrieb relativ leise und wartungsarm. Als Zugmittel des Zugmitteltriebs kommt insbesondere wiederum ein Zahnriemen oder ein Flachriemen in Betracht.

Vorteilhaft ist es zudem, wenn die Führungsschiene eine erste Gegenlauffläche und eine zweite Gegenlauffläche aufweist, wobei die erste Gegenlauffläche und die zweite Gegenlauffläche mit gegenseitigem Horizontalabstand parallel zueinander verlaufen. Ein Rad der genannten Räder des Transportträgers kann dabei als erstes Anstellrad eines ersten Anstellräderpaares ausgebildet sein. Ferner kann ein weiteres Rad der genannten Räder des Transportträgers als zweites Anstellrad des ersten Anstellräderpaares ausgebildet sein. Hierbei können beispielsweise das erste Anstellrad und das zweite Anstellrad des ersten Anstellräderpaares koaxial auf einer ersten Lagerachse angeordnet sein. Darüber hinaus können ein Rad der genannten Räder des Transportträgers als erstes Anstellrad eines zweiten Anstell-Räderpaares und ein weiteres Rad der genannten Räder des Transportträgers ist als zweites Anstellrad des zweiten Anstell-Räderpaares ausgebildet sein, wobei das erste Anstellrad und das zweite Anstellrad des zweiten Anstellräderpaares koaxial auf einer zweiten Lagerachse angeordnet sind. Die Anordnung der Anstellräder ist durch die koaxiale Bauweise sehr kompakt aufgebaut. Insbesondere können das erste Anstellrad, insbesondere des ersten Anstellräderpaares und/oder des zweiten Anstellräderpaares, jeweils an der ersten Gegenlauffläche und das zweite Anstellrad, insbesondere des zweiten Anstellräderpaares und/oder des zweiten Anstell-räderpaares, jeweils an der zweiten Gegenlauffläche abrollbar anliegen. Durch die vorgeschlagenen Maßnahmen wird eine Führung des Transportträgers auf der Führungsschiene verbessert. Nach einer möglichen Ausführung verläuft die Gegenlauffläche mit einem Horizontalabstand und/oder Vertikalabstand parallel zur Lauffläche. Die "Anstellräder" können alternativ wieder als "Gegenräder" bezeichnet oder angesehen werden.

Besonders vorteilhaft ist es, wenn die erste Gegenlauffläche und die weitere Gegenlauffläche symmetrisch zu einer in Längsrichtung der Führungsschiene verlaufenden Vertikalebene und/oder die Anstellräder symmetrisch zu der in Längsrichtung der Führungsschiene verlaufenden Vertikalebene angeordnet sind. Dadurch kann der Transportträger nicht nur besonders stabil auf der Führungsschiene gelagert, sondern die Führungsschiene und/oder der Transportträger dabei auch einfach aufgebaut sein.

Besonders vorteilhaft ist es auch, wenn der Transportträger eine Anstellvorrichtung aufweist, durch welche das erste Anstellrad mit einer ersten Anstellkraft gegen die erste Gegenlauffläche und das zweite Anstellrad mit einer zweiten Anstellkraft gegen die zweite Gegenlauffläche angelegt wird. Dadurch wird eine Führung des Transportträgers auf der Führungsschiene weiter verbessert. Zudem wird auch eine durch die Antriebsräder übertragene Reibkraft erhöht. Insbesondere kann auf die Antriebsräder die vom Transportträger verursachte Gewichtskraft, die von der Hängeware verursachte Gewichtskraft und die Anstellkraft wirken. Die Anstellräder können bei dieser Ausführungsvariante alternativ auch als "Gegenräder", "Andruckräder" oder "Anpressräder" bezeichnet oder angesehen werden. Demgemäß kann die "Anstellkraft" alternativ auch als "Andruckkraft" oder "Anpresskraft" bezeichnet oder angesehen werden.

Günstig ist es auch, wenn die Anstellvorrichtung wie zuvor beschrieben
den beweglich am Basiskörper gelagerten Schlitten und den gegen den Schlitten angestellten Krafterzeuger aufweist, wobei die Anstellräder am Schlitten gelagert sind, oder
die beweglich am Basiskörper gelagerte Schwinge und den gegen die Schwinge angestellten Krafterzeuger aufweist, wobei die Anstellräder an der Schwinge gelagert ist.

Auf diese Weise können Höhentoleranzen der Führungsschiene gut ausgeglichen werden. Der Begriff "angestellt" kann alternativ wieder als "vorgespannt" bezeichnet oder angesehen werden.

Günstig ist es wiederum auch, wenn der Krafterzeuger ein vorgespanntes, elastisches Federelement (zum Beispiel durch eine Feder oder einen Gummipuffer), eine pneumatische Feder, einen Permanentmagneten oder einen Elektromagneten umfasst. Dadurch kann die Anstellkraft mit gut erprobten technischen Mitteln erzeugt werden.

Ferner ist es günstig, wenn ein Rad der genannten Räder des Transportträgers als erstes Stützrad eines ersten Stützräderpaares und ein weiteres Rad der genannten Räder des Transportträgers als zweites Stützrad des ersten Stützräderpaares ausgebildet sein, welche koaxial auf der mit dem Motor gekoppelten ersten Antriebswelle beidseits des ersten Antriebsräderpaares angeordnet sein können. Weiterhin ist möglich, dass ein Rad der genannten Räder des Transportträgers als erstes Stützrad eines zweiten Stützräderpaares und ein weiteres Rad der genannten Räder des Transportträgers als zweites Stützrad des zweiten Stützräderpaares ausgebildet sind, welche koaxial auf der mit dem Motor gekoppelten zweiten Antriebswelle beidseits des zweiten Antriebsräderpaares angeordnet sein können, sofern ein solches vorgesehen ist. Durch die vorgeschlagenen Maßnahmen kann der Transportträger auf der Führungsschiene oder in einem Weichenbereich zusätzlich stabilisiert und gegebenenfalls ein Kippen desselben verhindert oder zumindest erschwert werden. Die Stützräder können fest auf der Antriebswelle sitzen und angetrieben sein oder darauf drehbar gelagert sein und freilaufen. Günstig ist es dabei, wenn die Stützräder symmetrisch zu einer in Längsrichtung der Führungsschiene verlaufenden Vertikalebene angeordnet sind. Insbesondere können das erste und zweite Stützrad des ersten Stützräderpaares und, sofern vorhanden, das erste und zweite Stützrad des zweiten Stützräderpaares symmetrisch zu der in Längsrichtung der Führungsschiene verlaufenden Vertikalebene angeordnet sein. Dadurch ist der Transportträger vergleichsweise einfach aufgebaut.

Vorteilhaft ist es weiterhin, wenn ein Rad der genannten Räder des Transportträgers als erstes Zusatzanstellrad eines Zusatzanstellräderpaares und ein weiteres Rad der genannten Räder des Transportträgers als zweites Zusatzanstellrad des Zusatzanstellräderpaares ausgebildet sind, welche koaxial auf der ersten Lagerachse beidseits des ersten Anstellräderpaares angeordnet sein können. Durch die vorgeschlagenen Maßnahmen kann der Transportträger auf der Führungsschiene oder in einem Weichenbereich noch besser stabilisiert und gegebenenfalls ein Kippen desselben weiter erschwert werden. Günstig ist es dabei, wenn die Zusatzanstellräder symmetrisch zu einer in Längsrichtung der Führungsschiene verlaufenden Vertikalebene angeordnet sind. Insbesondere können das erste und zweite Zusatzanstellrad des Zusatzanstellräderpaares symmetrisch zu der in Längsrichtung der Führungsschiene verlaufenden Vertikalebene angeordnet sein. Dadurch ist der Transportträger wiederum vergleichsweise einfach aufgebaut.

Vorteilhaft ist es darüber hinaus, wenn ein Rad der genannten Räder des Transportträgers als erstes Führungsrad eines ersten Führungsräderpaares und ein weiteres Rad der genannten Räder des Transportträgers als zweites Führungsrad des ersten Führungsräderpaares ausgebildet sind, wobei das erste Führungsrad und das zweite Führungsrad des ersten Führungsräderpaares jeweils um Vertikalachsen gelagert sind. Dadurch kann der Transportträger auf der Führungsschiene oder in einem Weichenbereich noch besser stabilisiert werden, und es kann ein Kippen desselben noch weiter erschwert werden. Insbesondere ist es von Vorteil, wenn ein Rad der genannten Räder des Transportträgers als erstes Führungsrad eines zweiten Führungsräderpaares ausgebildet ist und ein weiteres Rad der genannten Räder des Transportträgers als zweites Führungsrad des zweiten Führungsräderpaares ausgebildet ist, wobei das erste Führungsrad und das zweite Führungsrad des zweiten Führungsräderpaares jeweils um Vertikalachsen drehbar gelagert sind. Die zuvor genannten Wirkungen werden dann noch verstärkt. Günstig ist es, wenn die Führungsräder ebenfalls symmetrisch zu einer in Längsrichtung der Führungsschiene verlaufenden Vertikalebene angeordnet sind. Insbesondere können das erste und zweite Führungsrad des ersten Führungsräderpaares und, sofern vorhanden, das erste und zweite Führungsrad des zweiten Führungsräderpaares symmetrisch zu der in Längsrichtung der Führungsschiene verlaufenden Vertikalebene angeordnet sein. Dadurch ist der Transportträger wiederum vergleichsweise einfach aufgebaut.

In einer weiteren Ausführungsform umfasst die Hängefördervorrichtung in einem Weichenabschnitt eine Weiche, wobei die Führungsschiene eine der Weiche in einer ersten Transportrichtung des Transportträgers vorgeordnete erste Schienenstrecke und der Weiche in der ersten Transportrichtung des Transportträgers nachgeordnete zweite Schienenstrecke und dritte Schienenstrecke umfasst und wobei die Weiche ein zwischen einer ersten Schaltstellung und einer zweiten Schaltstellung umschaltbares Weichenelement aufweist, um den Transportträger wahlweise entlang eines ersten Transportweges zwischen der ersten Schienenstrecke und der zweiten Schienenstrecke oder entlang eines zweiten Transportweges zwischen der ersten Schienenstrecke und dritten Schienenstrecke zu leiten. Dadurch ist es möglich die Transportträger im Kommissioniersystem über verschiedene Wege der Hängefördervorrichtung zu leiten.

Denkbar ist weiterhin, dass die Hängefördervorrichtung in einem Weichenabschnitt eine Weiche umfasst, wobei die Führungsschiene eine der Weiche in einer (der ersten Transportrichtung entgegengesetzten) zweiten Transportrichtung des Transportträgers vorgeordnete zweite Schienenstrecke und dritte Schienenstrecke und eine der Weiche in der zweiten Transportrichtung des Transportträgers nachgeordnete erste Schienenstrecke umfasst und dass die Weiche ein zwischen einer ersten Schaltstellung und einer zweiten Schaltstellung umschaltbares Weichenelement aufweist, um den Transportträger wahlweise entlang eines ersten Transportweges zwischen der zweiten Schienenstrecke und der ersten Schienenstrecke oder entlang eines zweiten Transportweges zwischen der dritten Schienenstrecke und der ersten Schienenstrecke zu leiten. Dadurch ist es möglich, die von verschiedenen Wegen kommenden Transportträger wieder auf eine Schienenstrecke zusammenzuführen.

Zum Umschalten eines Transportweges kann das Weichenelement horizontal oder vertikal verstellbar sein. Darüber hinaus kann das Weichenelement verschwenkbar oder verschiebbar ausgestaltet sein. Das Weichenelement kann zudem ein erstes Leitelement für Geradeausfahrt und ein zweites Leitelement für Umleitfahrt aufweisen oder umgekehrt.

Das Weichenelement kann eine Lauffläche und eine Gegenlauffläche umfassen, wobei die Gegenlauffläche mit einem Horizontalabstand und/oder einem Vertikalabstand parallel zur Lauffläche verläuft. Insbesondere kann das Weichenelement eine erste Lauffläche und eine zweite Lauffläche sowie eine erste Gegenlauffläche und eine zweite Gegenlauffläche umfassen, wobei die erste Lauffläche und die zweite Lauffläche mit einem Horizontalabstand und/oder einem Vertikalabstand parallel zur ersten Gegenlauffläche und zur zweiten Gegenlauffläche verlaufen. Das zu den Laufflächen der Führungsschiene und zu den darauf abrollenden Antriebsrädern Gesagte, sowie das zu den Gegenlaufflächen der Führungsschiene und zu den darauf abrollenden Anstellrädern Gesagte gilt sinngemäß auch für die Weiche beziehungsweise das Weichenelement. Das gilt insbesondere auch für die Wirkung der Anstellvorrichtung.

In einer Ausführungsvariante ist vorgesehen, dass
in der ersten Schaltstellung des Weichenelementes das erste Antriebsrad des ersten Antriebsräderpaares (und gegebenenfalls das erste Antriebsrad des zweiten Antriebsräderpaares) an einer Lauffläche eines ersten Leitelementes des Weichenelementes abrollbar aufliegt und das erste Anstellrad des ersten Anstellräderpaares (und gegebenenfalls das erste Anstellrad des zweiten Anstellräderpaares) an einer Gegenlauffläche des ersten Leitelementes anliegt, wenn der Transportträger entlang des Weichenabschnitts bewegt wird, und
in der zweiten Schaltstellung des Weichenelementes das zweite Antriebsrad des ersten Antriebsräderpaares (und gegebenenfalls das zweite Antriebsrad des zweiten Antriebsräderpaares) an einer Lauffläche eines zweiten Leitelementes des Weichenelementes aufliegt und das zweite Anstellrad des ersten Anstellräderpaares (und gegebenenfalls das zweite Anstellrad des zweiten Anstellräderpaares) an einer Gegenlauffläche des zweiten Leitelementes anliegt, wenn der Transportträger entlang des Weichenabschnitts bewegt wird.

Das heißt, in einer Schaltstellung des Weichenelementes ist jeweils eine Hälfte der paarweise vorgesehenen Antriebsräder und Anstellräder mit dem Weichenelement im Eingriff, wohingegen die andere Hälfte in dieser Schaltstellung nicht im Eingriff mit dem Weichenelement steht. Konkret ist in der ersten Schaltstellung des Weichenelementes eine erste Hälfte der paarweise vorgesehenen Antriebsräder und Anstellräder mit dem ersten Leitelement des Weichenelementes im Eingriff, wohingegen die zweite Hälfte in dieser Schaltstellung nicht im Eingriff mit dem Weichenelement steht und umgekehrt.

Hierbei kann vorgesehen sein, dass in der ersten Schaltstellung ein erstes Ende der Lauffläche des ersten Leitelementes an die Lauffläche der ersten Schienenstrecke und ein zweites Ende der Lauffläche des ersten Leitelementes an die Lauffläche der zweiten Schienenstrecke anschließt und in der zweiten Schaltstellung ein erstes Ende der Lauffläche des zweiten Leitelementes an die Lauffläche der ersten Schienenstrecke und ein zweites Ende der Lauffläche des zweiten Leitelementes an die Lauffläche der dritten Schienenstrecke anschließt, sodass der Transportträger wahlweise von der ersten Schienenstrecke auf die zweite oder dritte Schienenstrecke überführt werden kann.

In der obigen Definition haben das erste Leitelement und das zweite Leitelement jeweils nur eine Lauffläche. Es kann aber auch vorgesehen sein, dass das erste Leitelement und das zweite Leitelement jeweils eine erste und eine zweite Lauffläche und eine erste und eine zweite Gegenlauffläche aufweisen.

Dann liegen folgende Verhältnisse vor
in der ersten Schaltstellung des Weichenelementes liegt das erste Antriebsrad des ersten Antriebsräderpaares (und gegebenenfalls das erste Antriebsrad des zweiten Antriebsräderpaares) an einer ersten und zweiten Lauffläche eines ersten Leitelementes des Weichenelementes abrollbar auf, und das erste Anstellrad des ersten Anstellräderpaares (und gegebenenfalls das erste Anstellrad des zweiten Anstellräderpaares) liegt an einer ersten und zweiten Gegenlauffläche des ersten Leitelementes an, wenn der Transportträger entlang des Weichenabschnitts bewegt wird, und
in der zweiten Schaltstellung des Weichenelementes liegt das zweite Antriebsrad des ersten Antriebsräderpaares (und gegebenenfalls das zweite Antriebsrad des zweiten Antriebsräderpaares) an einer ersten und zweiten Lauffläche eines zweiten Leitelementes des Weichenelementes auf, und das zweite Anstellrad des ersten Anstellräderpaares (und gegebenenfalls das zweite Anstellrad des zweiten Anstellräderpaares) liegt an einer ersten und zweiten Gegenlauffläche des zweiten Leitelementes an, wenn der Transportträger entlang des Weichenabschnitts bewegt wird.

Auch hier ist in einer Schaltstellung des Weichenelementes jeweils eine Hälfte der paarweise vorgesehenen Antriebsräder und Anstellräder mit dem Weichenelement im Eingriff, wohingegen die andere Hälfte in dieser Schaltstellung nicht im Eingriff mit dem Weichenelement steht. Konkret ist in der ersten Schaltstellung des Weichenelementes wieder eine erste Hälfte der paarweise vorgesehenen Antriebsräder und Anstellräder mit dem ersten Leitelement des Weichenelementes im Eingriff, wohingegen die zweite Hälfte in dieser Schaltstellung nicht im Eingriff mit dem Weichenelement steht und umgekehrt.

Hierbei kann vorgesehen sein, dass in der ersten Schaltstellung ein erstes Ende der ersten Lauffläche des ersten Leitelementes an die erste Lauffläche der ersten Schienenstrecke und ein zweites Ende der ersten Lauffläche des ersten Leitelementes an die erste Lauffläche der zweiten Schienenstrecke anschließt und in der zweiten Schaltstellung ein erstes Ende der ersten Lauffläche des zweiten Leitelementes an die erste Lauffläche der ersten Schienenstrecke und ein zweites Ende der ersten Lauffläche des zweiten Leitelementes an die erste Lauffläche der dritten Schienenstrecke anschließt, sodass der Transportträger wahlweise von der ersten Schienenstrecke auf die zweite oder dritte Schienenstrecke überführt werden kann. Gleichermaßen schließt in diesem Fall in der ersten Schaltstellung ein erstes Ende der zweiten Lauffläche des ersten Leitelementes an die zweite Lauffläche der ersten Schienenstrecke und ein zweites Ende der zweiten Lauffläche des ersten Leitelementes an die zweite Lauffläche der zweiten Schienenstrecke an, und in der zweiten Schaltstellung schließt ein erstes Ende der zweiten Lauffläche des zweiten Leitelementes an die zweite Lauffläche der ersten Schienenstrecke und ein zweites Ende der zweiten Lauffläche des zweiten Leitelementes an die zweite Lauffläche der dritten Schienenstrecke an, sodass der Transportträger wahlweise von der ersten Schienenstrecke auf die zweite oder dritte Schienenstrecke überführt werden kann.

Günstig ist es weiterhin, wenn das Weichenelement, insbesondere das erste Leitelement, eine erste Weichenleitfläche umfasst, welche in der ersten Schaltstellung des Weichenelementes auf ein Stützrad des ersten Stützräderpaares (und gegebenenfalls auf ein Stützrad des zweiten Stützräderpaares) wirkt und/oder mit einem Führungsrad des ersten Führungsräderpaares (und gegebenenfalls mit einem Führungsrad des zweiten Führungsräderpaares) zusammenwirkt, wobei der Transportträger entlang des ersten Transportweges, insbesondere geradeaus, geleitet wird, und in der zweiten Schaltstellung des Weichenelementes in keiner Wirkverbindung beziehungsweise nicht in Wechselwirkung mit dem Transportträger steht (das heißt wirkungslos ist), und der Transportträger ungehindert entlang des zweiten Transportweges bewegbar ist. Durch eine Bewegung entlang des zweiten Transportweges kann der Transportträger somit insbesondere umgeleitet werden. Mit anderen Worten steht der Transportträger nur bei Geradeausfahrt in Wechselwirkung mit der ersten Weichenleitfläche, und zwar über die Stützräder oder die Führungsräder.

Günstig ist es weiterhin, wenn das Weichenelement, insbesondere das zweite Leitelement, eine zweite Weichenleitfläche (Umleitfläche) umfasst, welche in der ersten Schaltstellung des Weichenelementes in keiner Wirkverbindung beziehungsweise nicht in Wechselwirkung mit dem Transportträger steht, wobei der Transportträger entlang des ersten Transportweges, insbesondere geradeaus, bewegbar ist, und in der zweiten Schaltstellung des Weichenelementes mit einem Führungsrad des ersten Führungsräderpaares (und gegebenenfalls mit einem Führungsrad des zweiten Führungsräderpaares) zusammenwirkt, wobei der Transportträger entlang des zweiten Transportweges geleitet wird. Somit kann der Transportträger beispielsweise umgeleitet werden. Mit anderen Worten steht der Transportträger nur bei Umleitfahrt in Wechselwirkung mit der zweiten Weichenleitfläche (Umleitfläche), und zwar über die Führungsräder.

Vorteilhaft umfasst die Weiche zusätzlich einen Weichengrundkörper, an welchem das Weichenelement gelagert ist, welcher Weichengrundkörper
eine Oberseite umfasst,
eine Unterseite umfasst,
einen sich von der Oberseite bis zur Unterseite erstreckenden und entlang eines ersten Transportweges verlaufenden ersten Durchgangskanal (zum Beispiel für Geradeausfahrt) umfasst, an welchen an einem Ende des ersten Durchgangskanals die erste Schienenstrecke und an einem gegenüberliegenden weiteren Ende des ersten Durchgangskanals die zweite Schienenstrecke anschließt,
einen sich von der Oberseite bis zur Unterseite erstreckenden und entlang eines zweiten Transportweges verlaufenden zweiten Durchgangskanal (zum Beispiel für Umleitfahrt) umfasst, welcher an einem Ende des zweiten Durchgangskanals in den ersten Durchgangskanal mündet und an einem gegenüberliegenden weiteren Ende des zweiten Durchgangskanals an die dritte Schienenstrecke anschließt,
an der Oberseite eine erste Lauffläche umfasst, auf welcher das erste Antriebsrad des ersten Antriebsräderpaares (und gegebenenfalls das erste Antriebsrad des zweiten Antriebsräderpaares) abrollbar aufliegt, wenn der Transportträger entlang des ersten Transportweges, zum Beispiel geradeaus, bewegt wird, und eine zweite Lauffläche umfasst, auf welcher das zweite Antriebsrad des ersten Antriebsräderpaares (und gegebenenfalls das zweite Antriebsrad des zweiten Antriebsräderpaares) abrollbar aufliegt, wenn der Transportträger entlang des zweiten Transportweges bewegt, beispielsweise umgeleitet, wird,
an der Oberseite eine erste Stützfläche umfasst, auf welcher das erste Stützrad des ersten Stützräderpaares (und gegebenenfalls das erste Stützrad des zweiten Stützräderpaares) abrollbar aufliegt, und eine zweite Stützfläche umfasst, auf welcher das zweite Stützrad des ersten Stützräderpaares (und gegebenenfalls das zweite Stützrad des zweiten Stützräderpaares) abrollbar aufliegt,
an der Oberseite eine erste Geradführung umfasst, auf welcher das erste Stützrad des ersten Stützräderpaares (und gegebenenfalls das erste Stützrad des zweiten Stützräderpaares) abrollbar anliegt, und eine zweite Geradführung umfasst, auf welcher das zweite Stützrad des ersten Stützräderpaares (und gegebenenfalls das zweite Stützrad des zweiten Stützräderpaares) abrollbar anliegt, wenn der Transportträger geradeaus, insbesondere entlang des ersten Transportweges, bewegt wird, und
an der Oberseite eine erste Umleitführung umfasst, auf welcher das erste Stützrad des ersten Stützräderpaares (und gegebenenfalls das erste Stützrad des zweiten Stützräderpaares) abrollbar anliegt, und eine zweite Umleitführung umfasst, auf welcher das zweite Stützrad des ersten Stützräderpaares (und gegebenenfalls das zweite Stützrad des zweiten Stützräderpaares) abrollbar anliegt, wenn der Transportträger umgeleitet, insbesondere entlang des zweiten Transportweges bewegt, wird.

Durch die geschickte Anordnung der Lauffläche, der Stützfläche, der Geradführungen und der Umleitführungen wird sowohl ein Kippen des Transportträgers im Bereich der Weiche wirksam vermieden als auch bewirkt, dass eine Antriebskraft von den Antriebsrädern des Transportträgers auf die Führungsschiene übertragen werden kann.

Vorteilhaft umfasst der Weichengrundkörper zusätzlich
an der Unterseite eine erste Gegenlauffläche, auf welcher das erste Anstellrad des (ersten) Anstellräderpaares abrollbar anliegt, wenn der Transportträger entlang des ersten Transportweges (zum Beispiel geradeaus) bewegt wird, und eine zweite Gegenlauffläche, auf welcher das zweite Anstellrad des (ersten) Anstellräderpaares abrollbar anliegt, wenn der Transportträger entlang des zweiten Transportweges bewegt wird (zum Beispiel umgeleitet wird),
an der Unterseite eine erste Zusatz-Stützfläche, auf welcher das erste Zusatzanstellrad des Zusatzanstellräderpaares abrollbar anliegt, und eine zweite Zusatz-Stützfläche, auf welcher das zweite Zusatzanstellrad des Zusatzanstellräderpaares abrollbar anliegt,
an der Unterseite eine erste Zusatz-Geradführung, auf welcher das erste Zusatzanstellrad des Zusatzanstellräderpaares abrollbar anliegt, und eine zweite Zusatz-Geradführung, auf welcher das zweite Zusatzanstellrad des Zusatzanstellräderpaares abrollbar anliegt, wenn der Transportträger geradeaus bewegt, insbesondere entlang des ersten Transportweges, wird, und
an der Unterseite eine erste Zusatz-Umleitführung, auf welcher das erste Zusatzanstellrad des Zusatzanstellräderpaares abrollbar anliegt, und eine zweite Zusatz-Umleitführung, auf welcher das zweite Zusatzanstellrad des Zusatzanstellräderpaares abrollbar anliegt, wenn der Transportträger umgeleitet, insbesondere entlang des zweiten Transportweges bewegt, wird.

Durch die geschickte Anordnung der Gegenlauffläche, der Zusatz-Stützfläche, der Zusatz-Geradführungen und der Zusatz-Umleitführungen wird sowohl ein Kippen des Transportträgers im Bereich der Weiche noch besser vermieden, und es wird auch die Übertragung einer Antriebskraft von den Antriebsrädern des Transportträgers auf die Führungsschiene verbessert.

Vorteilhaft ist es weiterhin, wenn die Weichenleitflächen und/oder die Stützflächen lediglich im Bereich der Weiche vorgesehen sind. Insbesondere können die erste und die zweite Weichenleitfläche sowie die erste und zweite Stützfläche nur im Bereich der Weiche vorgesehen sein. Auf diese Weise können die Führungsschienen einfach gestaltet sein.

In einer Ausführungsvariante der Hängefördervorrichtung sind zumindest einige der Räder des Transportträgers doppelt ausgeführt und paarweise symmetrisch zu einer in Längsrichtung der Führungsschiene verlaufenden Vertikalebene angeordnet, wobei in einem Schaltzustand der Weiche jeweils (nur) ein Satz der paarweise am Transportträger vorgesehenen Räder im Eingriff mit dem Weichenelement ist. Denkbar ist aber auch, dass zumindest einige der Räder des Transportträgers doppelt ausgeführt sind und paarweise symmetrisch um die genannte Vertikalebene angeordnet sind, wobei in einem Schaltzustand der Weiche beide Sätze der paarweise am Transportträger vorgesehenen Räder kurzfristig im Eingriff mit dem Weichenelement sind, das heißt bis eine Antriebskraft für den Transportträger vollständig von einem Satz der paarweise vorgesehenen Antriebsräder übernommen werden kann.

Ein "Satz" paarweise vorgesehener Räder wird durch die Summe jener Räder gebildet, die jeweils einen Teil eines Radpaares darstellen. Ein Satz kann somit insbesondere alle ersten oder alle zweiten Räder einer Gruppe von Räderpaaren umfassen.

Vorteilhaft ist es auch, wenn die Führungsschiene Schienenleitflächen und/oder das Weichenelement Weichenleitflächen umfasst, welche mit den Führungsrädern des Transportträgers zusammenwirken. Auf diese Weise kann der Transportträger seitlich gut geführt und gegebenenfalls ein Kippen des Transportträgers gut vermieden werden.

Günstig ist es zudem, wenn die Antriebsräder des ersten Antriebsräderpaares und die Antriebsräder des zweiten Antriebsräderpaares und/oder die Anstellräder des (ersten) Anstellräderpaares alle im Eingriff mit der Führungsschiene sind, wenn der Transportträger auf der Führungsschiene bewegt wird. Insbesondere können das erste und zweite Antriebsrad des ersten Antriebsräderpaares und das erste und zweite Antriebsrad des zweiten Antriebsräderpaares und/oder das erste und zweite Anstellrad des Anstellräderpaares alle im Eingriff mit der Führungsschiene sein, wenn der Transportträger auf der Führungsschiene bewegt wird. Dadurch wird ein Kippen des Transportträgers und in Folge ein Herunterfallen desselben von der Führungsschiene wirkungsvoll vermieden.

In einer weiteren günstigen Ausführungsvariante der Hängefördervorrichtung weisen der Transportträger und die Führungsschiene Seitenführungselemente auf, welche mit komplementär zueinander ausgebildeten Seitenführungsflächen versehen sind, um den Transportträger während der Transportbewegung entlang einer Längserstreckung der Führungsschiene zu führen. Weiterhin ist es von Vorteil, wenn der Transportträger und die Weiche Seitenführungselemente aufweisen, welche mit komplementär zueinander ausgebildeten Seitenführungsflächen versehen sind, um den Transportträger während der Transportbewegung entlang der Längserstreckung der Weiche zu führen. Dadurch kann eine seitliche Führung des Transportträgers auf der Führungsschiene beziehungsweise in der Weiche bewirkt oder verbessert werden. Von Vorteil ist es in diesem Zusammenhang, wenn die Laufflächen an der Führungsschiene und/oder an der Weiche zu diesem Zweck als Seitenführungselement jeweils eine Seitenführungsfläche aufweisen. Insbesondere können die erste Lauffläche und zweite Lauffläche an der Führungsschiene und/oder an der Weiche zu diesem Zweck jeweils durch zueinander geneigt verlaufende Laufflächen ausgebildet sein und als Seitenführungsflächen wirken. Denkbar wäre aber beispielsweise auch eine Seitenführungsfläche, welche normal zu einer Lauffläche ausgerichtet ist und insbesondere an diese anschließt. Von Vorteil ist es weiterhin, wenn die Antriebsräder des Transportträgers zu dem gegebenen Zweck als Seitenführungselement jeweils eine Seitenführungsfläche aufweisen. Insbesondere können das erste und zweite Antriebsrad des ersten Antriebsräderpaares und das erste und zweite Antriebsrad des zweiten Antriebsräderpaares jeweils eine solche Seitenführungsfläche aufweisen. Insbesondere können die Antriebsräder zu diesem Zweck kegelförmig beziehungsweise mit einer kegelförmigen Vertiefung ausgebildet sein oder einen Bund aufweisen, welcher mit einer Seitenführungsfläche der Führungsschiene und/oder der Weiche zusammenwirkt. Günstig ist es hierbei, wenn die Antriebsräder jeweils eine kegelförmige Vertiefung aufweisen, welche sich entlang einer Umfangsfläche des jeweiligen Antriebsrades erstreckt und welche insbesondere in Richtung zu einer Drehachse der Antriebsräder verjüngend ausgebildet ist. Die kegelförmige Vertiefung kann hierbei durch zueinander geneigt verlaufende Seitenführungsflächen gebildet sein und mit den zueinander geneigt verlaufenden Seitenführungsflächen der Führungsschiene und/oder Weiche zusammenwirken, um den Transportträger zu führen.

Im Zusammenhang mit Ausführungsformen, bei welchen der Transportträger eine Fahrsteuerung und einen damit verbundenen beschreib- und auslesbar ausgebildeten Speicher aufweist, ist es von Vorteil, wenn die Fahrsteuerung dazu ausgebildet ist, auf Basis von im Speicher gespeicherten Bewegungsdaten eine Bewegung des Transportträgers auf der Tragstruktur zu beeinflussen beziehungsweise zu steuern. Insbesondere kann auf Basis der Bewegungsdaten eine Route des Transportträgers, eine Geschwindigkeit des Transportträgers, eine Beschleunigung des Transportträgers und/oder ein Abstand des Transportträgers zu einem anderen, vorausfahrenden Transportträger beeinflusst werden. Beispielsweise können die Bewegungsdaten hierfür eine Soll-Route des Transportträgers, eine Soll-Geschwindigkeit des Transportträgers, eine Soll-Beschleunigung des Transportträgers und/oder einen Soll-Abstand des Transportträgers zu einem anderen, vorausfahrenden Transportträger umfassen und in Folge in die Fahrsteuerung geladen werden, welche die gespeicherten beziehungsweise hinterlegten Transportdaten beziehungsweise Parameter für eine diesen zugeordnete Bewegung des Transportträgers nutzt. Dementsprechend kann die Fahrsteuerung den Transportträger auf der gespeicherten Route bewegen, die gespeicherte Soll-Geschwindigkeit des Transportträgers einstellen oder regeln, die gespeicherte Soll-Beschleunigung des Transportträgers einstellen oder regeln und/oder den gespeicherten Soll-Abstand des Transportträgers zu einem anderen, vorausfahrenden Transportträger einstellen oder regeln. Generell kann die Bewegung des Transportträgers durch Steuer- und/oder Regeleingriffe beeinflusst werden.

Von Vorteil ist es auch, wenn die Tragstruktur zumindest ein Steuerelement aufweist und die Fahrsteuerung dazu ausgebildet ist, auf Basis von im Speicher gespeicherten beziehungsweise hinterlegten Steuerdaten eine Bewegung eines Steuerelements der Tragstruktur zu beeinflussen beziehungsweise zu steuern. Insbesondere kann unter einem solchen Steuerelement ein Weichenelement einer Weiche verstanden werden, welches von der Fahrsteuerung bedarfsweise umgeschaltet werden kann. Aber auch andere Einrichtungen in einem Kommissioniersystem können von der Fahrsteuerung angesteuert werden, beispielsweise ein Lift. Generell kann die Bewegung des Steuerelements durch Steuer- und/oder Regeleingriffe beeinflusst werden.

Günstig ist es, wenn die Fahrsteuerung des Transportträgers und/oder das zumindest eine Steuerelement der Tragstruktur zur optischen, drahtgebundenen oder funkbasierten Kommunikation ausgebildet sind. Beispielsweise können Daten und Befehle von einer übergeordneten Steuerung der Hängefördervorrichtung oder des Kommissioniersystems an den Transportträger gesendet werden oder auch umgekehrt. Bei der drahtgebundenen Kommunikation kommt insbesondere die Powerline-Communication- Technologie in Betracht, konkret durch Nutzung eines Energieversorgungssystems der Hängefördervorrichtung für die Datenübertragung.

In einer vorteilhaften Ausführungsform der Hängefördervorrichtung umfassen der Transportträger eine mit der Fahrsteuerung verbundene Lichtquelle und das Steuerelement der Tragstruktur ein lichtempfindliches Element, wobei mit der Lichtquelle über das lichtempfindliche Element ein Steuerbefehl von der Fahrsteuerung des Transportträgers an das Steuerelement der Tragstruktur übertragbar ist. Mit anderen Worten erfolgt die Übertragung von Daten oder von Steuerbefehlen vom Transportträger auf die Tragstruktur auf optischem Weg. Beispielsweise kann vorgesehen sein, dass das Steuerelement aktiviert oder umgeschaltet wird, wenn das lichtempfindliche Element Licht der Lichtquelle empfängt. Dieses Licht kann moduliert oder unmoduliert sein. Darüber hinaus ist bei entsprechender Modulation der Lichtquelle auch eine komplexere Datenübertragung möglich.

Besonders vorteilhaft ist es, wenn das Steuerelement der Tragstruktur (insbesondere der Führungsschiene) als Weiche ausgebildet ist und ein Steuerbefehl der Fahrsteuerung des Transportträgers eine Schaltung der Weiche in eine vorgebbare Schaltstellung bewirkt. Auf diese Weise kann die Fahrsteuerung des Transportträgers aktiv eine Weiche umschalten und daher auch aktiv seinen Weg über die Hängefördervorrichtung bestimmen. Die Weiche kann hierbei wie zuvor beschrieben ausgebildet sein.

Besonders vorteilhaft ist es darüber hinaus, wenn der Transportträger einen mit der Fahrsteuerung verbundenen Fahrflächensensor aufweist, mit dem eine auf der Tragstruktur angeordnete Fahrmarkierung und/oder Steuermarkierung lesbar ist, welche eine Bewegung des Transportträgers auf der Tragstruktur beeinflusst. Insbesondere können der Fahrflächensensor als optischer Fahrflächensensor und die Fahrmarkierung optische Fahrmarkierung und/oder die Steuermarkierung als optische Steuermarkierung ausgebildet sein. Mit anderen Worten wird das Verhalten des Transportträgers bei dieser Ausführungsform durch Markierungen auf der Tragstruktur beeinflusst. Die (optische) Markierung kann beispielsweise als Fahrmarkierung ausgebildet sein, entlang welcher der Transportträger entlangfahren soll. Die (optische) Markierung kann aber auch als Steuermarkierung oder Steuerelement für den Transportträger ausgebildet sein und das weitere Verhalten des Transportträgers beeinflussen. Beispielsweise kann die Steuermarkierung als Abbiegepunkt wirken, wenn die Markierung die Fahrtrichtung des Transportträgers an einer Weiche beeinflusst, oder als Haltepunkt, wenn die Markierung das Anhalten des Transportträgers bewirkt. Auch die Änderung einer Geschwindigkeit des Transportträgers, die Änderung einer Beschleunigung des Transportträgers und/oder die Änderung eines Abstands des Transportträgers zu einem anderen Transportträger kann durch eine Steuermarkierung beeinflusst werden. Eine optische Markierung kann auf die Tragstruktur aufgemalt, aufgeklebt oder aufgedruckt sein. Die optische Markierung kann insbesondere als Barcode oder QR-Code ausgebildet sein. Zudem kann die optische Markierung (in Transportrichtung) auch länger ausgebildet sein und auf mehrere aufeinanderfolgende Transportträger wirken. Obwohl der Einsatz optischer Markierungen von Vorteil ist, können natürlich auch Markierungen auf anderer Basis eingesetzt werden, beispielsweise magnetische Markierungen.

Besonders vorteilhaft ist es auch, wenn die Tragstruktur eine steuerbare Lichtquelle und der Transportträger einen mit der Fahrsteuerung verbundenen optischen Fahrflächensensor aufweist, wobei ein Steuerbefehl mittels der Lichtquelle und des optischen Fahrflächensensors von der Tragstruktur an die Fahrsteuerung des Transportträgers übertragbar ist. Insbesondere kann die steuerbare Lichtquelle auf dem Transportträger oder der Tragstruktur mehrere individuell aktivierbare und matrixförmig angeordnete Leuchtpunkte aufweisen. Dadurch sind die an den Transportträger übertragenen Steuerbefehle nicht fix, sondern können flexibel an eine bestimmte Situation angepasst werden. Die Leuchtpunkte können dabei als Fahrmarkierung und/oder Steuermarkierung wirken. Das oben zur Fahrmarkierung und/oder Steuermarkierung Gesagte gilt daher sinngemäß.

"Matrixförmig angeordnet" kann in diesem Zusammenhang bedeuten, dass mehrere Leuchtpunkte in einer Reihe (in Form einer 1 x m-Matrix) angeordnet sind und so eine Leuchtpunktreihe bilden. Dadurch kann insbesondere ein eindimensionaler Steuerbefehl erstellt werden. Darüber hinaus kann Matrixförmig angeordnet bedeuten, dass gegebenenfalls mehrere, insbesondere zumindest zwei, derartige Leuchtpunktreihen nebeneinander angeordnet sind (in Form einer n x m-Matrix, wobei n > 1 ist). Dadurch kann beispielsweise ein mehrdimensionaler Steuerbefehl erstellt werden, wodurch eine Anzahl an erstellbaren Steuerbefehlen erhöht ist.

Besonders vorteilhaft ist es darüber hinaus, wenn die Fahrsteuerung des Transportträgers zum Empfang einer Wegdefinition von einer übergeordneten Steuerung, wobei die Wegdefinition einen Weg für den Transportträger zumindest in einem Weichenabschnitt der Tragstruktur vorgibt, zum Speichern einer empfangenen Wegdefinition im Speicher des Transportträgers und zur Auswahl eines Weges von mehreren Wegen im Weichenabschnitt entsprechend der empfangenen Wegdefinition ausgebildet ist. Beispielsweise kann die Auswahl eines Weges ein autonomes Schalten von Weichen der Tragstruktur mittels der Fahrsteuerung und der Wegdefinition umfassen. Mit Hilfe der vorgeschlagenen Maßnahmen wird die Autonomie des Transportträgers dadurch verwirklicht, dass dieser seinen Weg in einem Weichenabschnitt selbständig bestimmt. Beispielsweise kann der Transportträger dazu einer von mehreren Fahrmarkierungen folgen. Insbesondere kann dies auch dadurch erfolgen, dass der Transportträger die Weichen der Hängefördervorrichtung auf Basis der Wegdefinition im Speicher selbständig ansteuert. Auf diese Weise kann ein autonomes Bewegen des Transportträgers besonders gut verwirklicht werden. Dabei gibt die übergeordnete Steuerung den Weg vor, welcher dann autonom vom Transportträger mit Hilfe der Fahrsteuerung befahren wird. Die Wegdefinition kann etwa die Wahl einer bestimmten Fahrmarkierung in einem Weichenabschnitt oder die Abfolge zum Schalten der beispielsweise nächsten vier Weichen umfassen, also etwa die Abfolge "Geradeausfahrt, Umleitfahrt, Umleitfahrt, Geradeausfahrt". Diese Wegdefinition wird, wie erwähnt, an die Fahrsteuerung übermittelt, im Speicher gespeichert, und dient dann der autonomen Wahl einer Fahrmarkierung beziehungsweise dem autonomen Schalten der Weichen. Das heißt, im ersten Weichenabschnitt wird jene Fahrmarkierung gewählt, welche eine Geradeausfahrt bewirkt, im zweiten Weichenabschnitt jene Fahrmarkierung, welche eine Umleitfahrt bewirkt, und so weiter. Im Fall von umschaltbaren Weichen heißt dies, dass die erste Weiche, welche der Transportträger bei seiner Bewegung erreicht, so angesteuert wird, dass das Weichenelement auf Geradeausfahrt steht, die zweite Weiche so, dass das Weichenelement auf Umleitfahrt steht, und so weiter. Die Übertragung der Wegdefinition kann wiederum optisch, funkbasiert oder drahtgebunden erfolgen. Die Abfolge zum Schalten der beispielsweise nächsten vier Weichen kann aber auch richtungsunabhängig sein und bloß Schaltbefehle für die Weichen angeben, also etwa die Abfolge "nicht umschalten, umschalten, umschalten, nicht umschalten". Ein Umschaltbefehl ist dabei nicht an eine bestimmte Richtung gebunden. Je nach Bauart der Weiche kann "Umschalten" eine Geradeausfahrt oder eine Umleitfahrt bedeuten. Dasselbe gilt für das Nicht-Umschalten. Die Abfolge kann auch rein binär angegeben werden, beispielsweise in der Abfolge ,,0, 1, 1, 0" und dann direkt für die Ansteuerung einer mit der Fahrsteuerung verbundenen Lichtquelle des Transportträgers verwendet werden, wenn die Weiche ein lichtempfindliches Element für deren Ansteuerung aufweist.

Denkbar wäre auch, dass eine Schaltung einer Weiche anhand einer Steuermarkierung bewirkt wird, welche im Bereich der Tragstruktur und durch den Transportträger erfassbar angeordnet ist. Beispielsweise ist dies dann zweckmäßig, wenn mehrere Schienenstrecken bei einer Weiche auf eine Schienenstrecke zusammengeführt werden. Vorteilhaft können in diesem Fall rechtzeitig vor der Weiche Steuermarkierungen vorgesehen werden, welche eine korrekte Schaltung eines Weichenelementes bewirken.

Vorteilhaft ist es auch, wenn die Fahrsteuerung des Transportträgers zum Empfang eines Gewichts einer vom Transportträger getragenen Masse von einer übergeordneten Steuerung, zum Speichern dieses Gewichts im Speicher des Transportträgers und zum Ausführen eines Beschleunigungsprofils in Abhängigkeit dieses Gewichts ausgebildet ist. Auf diese Weise kann die Fahrdynamik des Transportträgers an die Ware angepasst werden. Das genannte Gewicht kann beispielsweise aus einer Datenbank stammen, in welcher das Gewicht zugeordnet zu einer Ware gespeichert ist, oder durch Abwiegen ermittelt werden. Insbesondere kann das Gewicht der vom Transportträger getragenen Masse auch das Ausregeln einer Pendelbewegung der Hängeware beeinflussen, sofern eine solche Regelung vorgesehen ist.

Von besonderem Vorteil ist es auch, wenn die Fahrsteuerung des Transportträgers zur Regelung einer Geschwindigkeit des Transportträgers und/oder zur Regelung eines Abstands zu einem anderen Transportträger ausgebildet ist. Dadurch sind Geschwindigkeit und/oder Abstand zu einem anderen Transportträger individuell regelbar. Der Fahrbetrieb der Transportträger kann dadurch besonders flexibel erfolgen beziehungsweise beeinflusst werden. Zur Regelung des Abstands kann vorgesehen sein, dass der Transportträger zumindest einen Abstandssensor aufweist, welcher (zur Signal- und/oder Datenübermittlung) mit der Fahrsteuerung verbunden ist.

Besonders vorteilhaft ist es weiterhin, wenn der Transportträger mehrere Abstandssensoren aufweist, welche mit der Fahrsteuerung (zur Signal- und/oder Datenübermittlung) verbunden und derart angeordnet sind, dass diese paarweise einen Winkel von mehr als 0° und kleiner als 180° einschließen. Dadurch kann der Abstand zwischen Transportträgern auch in Kurven oder im Weichenbereich gut geregelt werden. Dabei wird jeweils das Signal des in das Kurveninnere weisenden Abstandssensors bevorzugt oder ausschließlich ausgewertet. Beispielsweise kann der Abstandssensor als Ultraschallsensor ausgebildet sein.

Vorteilhaft ist es, wenn ein Einstellen einer Zielgeschwindigkeit des Transportträgers oder eines Zielabstands des Transportträgers zu einem anderen Transportträger anhand einer Steuermarkierung bewirkt wird, welche im Bereich der Tragstruktur und durch den Transportträger erfassbar angeordnet ist. Dadurch kann das Verhalten der Transportträger einfach durch Anbringen entsprechender Markierungen auf der Tragstruktur beeinflusst werden. Komplizierte Datenübertragungsverfahren von einer übergeordneten Steuerung sind dazu nicht nötig.

Vorteilhaft ist es weiterhin, wenn der Transportträger
einen mit der Fahrsteuerung verbundenen Fahrflächensensor aufweist, mit dem eine an der Tragstruktur angeordnete Steuermarkierung lesbar ist, wobei ein Erkennen der Steuermarkierung ein Melden der Fahrsteuerung bei einer übergeordneten Steuerung auslöst,
einen mit der Fahrsteuerung verbundenen Kurzdistanz-Funkempfänger aufweist, mit dem ein Signal eines an der Tragstruktur angeordneten Kurzdistanz-Funksenders empfangbar ist, wobei ein Empfang des Signals durch den Kurzdistanz-Funkempfänger ein Melden der Fahrsteuerung bei einer übergeordneten Steuerung auslöst, oder
einen Kurzdistanz-Funksender aufweist, wobei ein Empfang eines Signals des Kurzdistanz-Funksenders des Transportträgers durch einen an der Tragstruktur angeordneten Kurzdistanz-Funkempfänger ein Melden des Transportträgers (mit Hilfe des Kurzdistanz-Funkempfängers) bei einer übergeordneten Steuerung auslöst.

Mit dem Melden können weitere Aktionen verknüpft sein, beispielsweise das Übermitteln von Befehlen oder Daten von der übergeordneten Steuerung an den Transportträger. Beispielsweise kann an den Transportträger eine Soll-Geschwindigkeit, eine Soll-Beschleunigung und/oder ein Soll-Abstand des Transportträgers zu einem anderen, vorausfahrenden Transportträger übermittelt werden. Der Meldepunkt kann durch eine (optische) Steuermarkierung gebildet sein. Wird diese Steuermarkierung vom Fahrflächensensor erfasst, löst dies bei dieser Ausführungsvariante ein Melden der Fahrsteuerung bei der übergeordneten Steuerung aus, was wiederum die schon beschriebenen Folgeaktionen auslösen kann. Der Meldepunkt kann auch durch einen auf der Tragstruktur angeordneten Kurzdistanz-Funksender gebildet sein. Wird dessen Signal vom Kurzdistanz-Funkempfänger des Transportträgers empfangen, wird ebenfalls ein Melden der Fahrsteuerung bei einer übergeordneten Steuerung ausgelöst, was die schon beschriebenen Folgeaktionen auslösen kann. Alternativ kann der Transportträger einen Kurzdistanz-Funksender aufweisen. Wird dessen Signal mit einem auf der Tragstruktur angeordneten Kurzdistanz-Funkempfänger erfasst, löst dies wiederum das Melden bei einer übergeordneten Steuerung aus, was ebenfalls die schon beschriebenen Folgeaktionen auslösen kann. Vorteilhaft ist es in beiden Fällen, wenn der Kurzdistanz-Funksender eine eindeutige Kennung aussendet, damit zugeordnet werden kann, von welchem Kurzdistanz-Funksender ein Signal empfangen wird. "Kurzdistanz" bedeutet im gegebenen Zusammenhang insbesondere eine Reichweite von wenigen Zentimetern bis zu wenigen Metern (beispielsweise weniger als zwei Metern).

Bevorzugt kann das Melden der Fahrsteuerung bei der übergeordneten Steuerung ein Senden einer Wegdefinition an die Fahrsteuerung durch die übergeordnete Steuerung bewirken beziehungsweise auslösen. Beispielsweise kann das durch die Tragstruktur beziehungsweise über das durch die durch die Führungsschiene und die Weichen gebildete Transportnetz in mehrere durch Meldepunkte getrennte Segmente unterteilt sein. Beim aktiven Melden der Fahrsteuerung an einem Meldepunkt (zum Beispiel einer als Meldepunkt wirkenden Steuermarkierung) erhält die Fahrsteuerung von der übergeordneten Steuerung die Wegdefinition für das folgende Segment. Auf diese Weise unterstützt die Maßnahme das flexible und autonome Bewegen des Transportträgers durch das Transportnetz.

In einer weiteren vorteilhaften Ausführungsform der Hängefördervorrichtung ist der Fahrmarkierung und/oder Steuermarkierung oder dem an der Tragstruktur angeordneten Kurzdistanz-Funksender oder dem an der Tragstruktur angeordneten Kurzdistanz-Funkempfänger eine örtliche Position zugeordnet, wobei das Melden der Fahrsteuerung bei der übergeordneten Steuerung eine Anpassung der Wegdefinition ausgehend von dieser Position durch die übergeordnete Steuerung bewirkt, wenn eine Soll-Position des Transportträgers nicht mit der örtliche Position der Fahrmarkierung und/oder Steuermarkierung oder des Kurzdistanz-Funksenders oder des Kurzdistanz-Funkempfangers übereinstimmt. Es kann vorkommen, dass die tatsächliche Position des Transportträgers nicht mit der von der Fahrsteuerung angenommenen Position des Transportträgers übereinstimmt. Das Wählen eines Weges in einem Weichenabschnitt und das Schalten von Weichen entsprechend der im Speicher gespeicherten Wegdefinition führt dann zu Fehlschaltungen und Fehlleitungen. Mit den vorgeschlagenen Maßnahmen kann eine Abweichung der tatsächlichen Position des Transportträgers von der von der Fahrsteuerung angenommenen Position des Transportträgers aber berücksichtigt und die Soll-Position des Transportträgers wieder korrigiert werden, das heißt auf dessen Ist-Position gesetzt werden.

Denkbar wäre auch, dass die Steuermarkierung oder der an der Tragstruktur angeordnete Kurzdistanz-Funksender oder der an der Tragstruktur angeordnete Kurzdistanz-Funkempfänger dazu ausgebildet sind, das gleichzeitige Melden der Fahrsteuerungen mehrerer Transportträger bei der übergeordneten Steuerung zu bewirken. Auf diese Weise kann in Folge das Verhalten einer Gruppe von Transportträgern beeinflusst werden.

Günstig ist es, wenn ein Energieversorgungssystem der Hängefördervorrichtung (zum Beispiel eine Schleifleitung oder ein induktives Energieversorgungssystem) auch zur drahtgebundenen Kommunikation mit der Fahrsteuerung des Transportträgers ausgebildet ist. Dadurch kann das Energieversorgungssystem einen Doppelnutzen erbringen.

Vorteilhaft ist es auch, wenn das Energieversorgungssystem der Hängefördervorrichtung in mehrere Versorgungs-Segmente gegliedert ist, welche unterschiedliche Adressen in einem Kommunikationssystem der Hängefördervorrichtung aufweisen. Insbesondere kann die Adresse durch den Transportträger erfassbar sein. Dadurch ist eine Lokalisierung eines Transportträgers auf relativ einfache Weise möglich.

Vorteilhaft ist es dabei auch, wenn das Energieversorgungssystem der Hängefördervorrichtung in mehrere Versorgungs-Segmente gegliedert ist, wobei einem der Versorgungs-Segmente des Energieversorgungssystems eine örtliche Position zugeordnet ist und ein Einfahren des Transportträgers in dieses Versorgungs-Segment eine Anpassung der Wegdefinition basierend auf der örtlichen Position, welche diesem Versorgungs-Segment zugeordnet ist, durch eine übergeordnete Steuerung bewirkt, wenn eine Soll-Position des Transportträgers nicht mit der örtlichen Position des Versorgungs-Segments des Energieversorgungssystems übereinstimmt. Hierbei kann selbstverständlich vorgesehen sein, dass den Versorgungs-Segmenten jeweils eine örtliche Position zugeordnet ist, wobei die Anpassung der Wegdefinition abhängig von dem jeweiligen Versorgungs-Segment erfolgt, in welches der Transportträger eingefahren ist. Die Wahl eines bestimmten Weges beziehungsweise das Schalten von Weichen entsprechend der im Speicher gespeicherten Wegdefinition führt bei der genannten Abweichung wiederum zu Fehlschaltungen und Fehlleitungen. Mit den vorgeschlagenen Maßnahmen kann eine Abweichung der tatsächlichen Position des Transportträgers von der von der Fahrsteuerung angenommenen Position aber berücksichtigt und die Soll-Position des Transportträgers wieder korrigiert werden, das heißt auf dessen Ist-Position gesetzt werden (in diesem Fall auf die Position des Versorgungs-Segments, in welches der Transportträger einfährt).

Besonders vorteilhaft ist bei der Ausführungsvariante, bei welcher der Transportträger eine Fahrsteuerung und einen damit verbundenen beschreib- und auslesbar ausgebildeten Speicher aufweist, wenn das elektrische Energieversorgungssystem einen Isolator und freiliegende elektrische Leiter umfasst, welche entlang der Tragstruktur verlaufen (und insbesondere auf beziehungsweise an dieser angeordnet sind), und der Transportträger Stromabnehmer aufweist, welche elektrisch in Kontakt mit den Leitern stehen und sowohl elektrisch mit einem Motor der Antriebsvorrichtung verbunden sind als auch elektrisch über ein Kommunikationsmodul des Transportträgers mit der Fahrsteuerung verbunden sind. Dadurch ist es nicht nur möglich, einen Transportträger unabhängig von einem im Transportträger vorgesehenen Energiespeicher oder unabhängig von einer im Transportträger vorgesehenen Energiequelle mit Strom zu versorgen, sondern es ist auf diese Weise auch möglich, die Übertragung von Daten und/oder Steuerbefehlen von und zum Transportträger über das elektrische Energieversorgungssystem durchzuführen. Eine an den elektrischen Leitern anliegende Spannung beziehungsweise ein an den elektrischen Leitern anliegendes elektrisches Signal liegt dabei auch an den Eingängen des Kommunikationsmoduls an, welches die Daten aus dem Signal extrahieren und diese umwandeln kann. Das Kommunikationsmodul ist somit auch datentechnisch mit den Stromabnehmern beziehungsweise den elektrischen Leitern verbunden. Insbesondere kann im Kommunikationsmodul auch eine galvanische Trennung zwischen den Stromabnehmern und Eingängen der Fahrsteuerung vorgenommen werden, beispielsweise mit Hilfe eines Optokopplers oder mit Hilfe eines Trenntransformators. Selbstverständlich kann auch die Energieversorgung des Kommunikationsmoduls, der Fahrsteuerung und anderen Module über die Stromabnehmer erfolgen. Die Stromabnehmer können beispielsweise als Schleifkontakte ausgebildet sein und bei Bewegung des Transportträgers auf den elektrischen Leitern gleiten/schleifen.

Vorteilhaft ist es weiterhin, wenn die Hängefördervorrichtung entlang der Tragstruktur ein induktives Energieversorgungssystem beziehungsweise ein induktives Energieübertragungssystem aufweist und die Energieübertragung zu einem Motor der Antriebsvorrichtung des Transportträgers und/oder eine Datenübertragung zu einem mit der Fahrsteuerung verbundenen Kommunikationsmodul des Transportträgers induktiv erfolgt. Dadurch kann die Energieübertragung zum Transportträger und auch die Übertragung von Daten und oder Steuerbefehlen von und zum Transportträger kontaktlos erfolgen. Insbesondere kann das induktive Energieversorgungsystem zumindest einen entlang der Tragstruktur verlaufenden elektrischen Leiter sowie eine Spule aufweisen, welche auf dem Transportträger angeordnet und elektrisch mit dem Motor und dem Kommunikationsmodul verbunden ist, wobei die Energie- und/oder Datenübertragung zur Spule kontaktlos erfolgt. Eine an der Spule anliegende Spannung beziehungsweise ein an der Spule anliegendes elektrisches Signal liegt dabei auch an den Eingängen des Kommunikationsmoduls an, welches die Daten aus dem Signal extrahieren und diese umwandeln kann. Das Kommunikationsmodul ist somit auch datentechnisch mit der Spule beziehungsweise den elektrischen Leitern verbunden. Insbesondere kann im Kommunikationsmodul eine galvanische Trennung zwischen der Spule und Eingängen der Fahrsteuerung vorgenommen werden, beispielsweise mit Hilfe eines Optokopplers oder mit Hilfe eines Trenntransformators. Selbstverständlich kann auch die Energieversorgung des Kommunikationsmoduls, der Fahrsteuerung und anderen Module über die Spule erfolgen. In einer besonders vorteilhaften Ausführungsvariante umfasst der Transportträger einen ferromagnetischen Kern, um welchen die Spule gewickelt ist und welcher den zumindest einen elektrischen Leiter zumindest teilweise umgreift. Dadurch kann der magnetische Fluss besser geführt und der Wirkungsgrad der induktiven Energieübertragung verbessert werden.

Zum besseren Verständnis der Erfindung wird diese anhand der nachfolgenden Figuren näher erläutert.

Es zeigen jeweils in stark vereinfachter, schematischer Darstellung:
- Fig. 1: eine Ansicht eines ersten Beispiels einer Hängefördervorrichtung mit einer Führungsschiene und einem darauf gelagerten Transportträger von schräg oben;
- Fig. 2: den Transportträger aus Fig. 1 in detaillierter Schrägansicht;
- Fig. 3: einen Ausschnitt aus einer Hängefördervorrichtung mit einem induktiven Energieübertragungssystem in Vorderansicht;
- Fig. 4: eine Ansicht des Transportträgers aus Fig. 1 auf der Führungsschiene in der Nähe einer Weiche bei Stellung Geradeausfahrt von schräg oben;
- Fig. 5: eine Ansicht des Transportträgers aus Fig. 1 auf der Führungsschiene in der Nähe einer Weiche bei Stellung Umleitfahrt von schräg oben;
- Fig. 6: eine Vorderansicht der Anordnung aus Fig. 4;
- Fig. 7: eine Vorderansicht der Anordnung aus Fig. 5;
- Fig. 8: einen Ausschnitt aus einer weiteren beispielhaften Hängefördervorrichtung mit angefaster Führungsschiene und kegelig geformten Laufrädern des Transportträgers in Vorderansicht;
- Fig. 9: eine Vorderansicht einer weiteren beispielhaften Hängefördervorrichtung mit einer zusätzlichen Vorschubeinrichtung in Vorderansicht;
- Fig. 10: eine Ansicht eines weiteren Beispiels einer Hängefördervorrichtung mit einer zweiteiligen Führungsschiene und einem darauf gelagerten Transportträger von schräg oben;
- Fig. 11: den Transportträger aus Fig. 10 in detaillierter Schrägansicht;
- Fig. 12: eine Ansicht der Führungsschiene ohne dem Transportträger im Bereich einer Weiche von schräg oben;
- Fig. 13: eine Detailansicht der Weiche aus Fig. 12 von schräg oben;
- Fig. 14: eine Ansicht der Führungsschiene ohne dem Transportträger im Bereich der Weiche von schräg unten;
- Fig. 15: eine Detailansicht der Weiche aus Fig. 14 von schräg unten;
- Fig. 16: eine Ansicht der Führungsschiene mit dem Transportträger im Bereich der Weiche bei Geradeausfahrt von schräg oben;
- Fig. 17: eine Vorderansicht der Anordnung aus Fig. 16;
- Fig. 18: eine Detailansicht der in Fig. 17 dargestellten Vorderansicht im Bereich der Weiche;
- Fig. 19: eine Ansicht der Führungsschiene mit dem Transportträger im Bereich der Weiche bei Umleitfahrt von schräg oben;
- Fig. 20: eine Vorderansicht der Anordnung aus Fig. 19;
- Fig. 21: eine Detailansicht der in Fig. 20 dargestellten Vorderansicht im Bereich der Weiche;
- Fig. 22: eine Ansicht eines weiteren beispielhaften Transportträgers mit einer Hängeware von schräg oben;
- Fig. 23: eine Ansicht einer Hängefördervorrichtung mit einer Fahrfläche und dem darauf haftenden Transportträger aus Fig. 22 von schräg unten;
- Fig. 24: den Transportträger aus Fig. 22 in detaillierter Ansicht von schräg oben;
- Fig. 25: den Transportträger aus Fig. 22 in detaillierter Ansicht von schräg unten;
- Fig. 26: die Hängefördervorrichtung aus Fig. 23 in detaillierter Darstellung in Vorderansicht;
- Fig. 27: einen beispielhaften Transportträger mit Raupenbändern von schräg oben;
- Fig. 28: eine Hängefördervorrichtung mit einem beispielhaften Transportträger und gelenkiger Verbindung zur Hängeware in Vorderansicht;
- Fig. 29: ein beispielhaftes, elektrisches Blockschaltbild eines Transportträgers;
- Fig. 30: eine schematische Darstellung eines Ausschnitts aus einem Transportnetz mit einer Weiche.

Einführend sei festgehalten, dass in den unterschiedlich beschriebenen Ausführungsformen gleiche Teile mit gleichen Bezugszeichen beziehungsweise gleichen Bauteilbezeichnungen versehen werden, wobei die in der gesamten Beschreibung enthaltenen Offenbarungen sinngemäß auf gleiche Teile mit gleichen Bezugszeichen beziehungsweise gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und bei einer Lageänderung sinngemäß auf die neue Lage zu übertragen.

### Ausführungsvariante 1 (Transportträger einseitig schienengeführt)

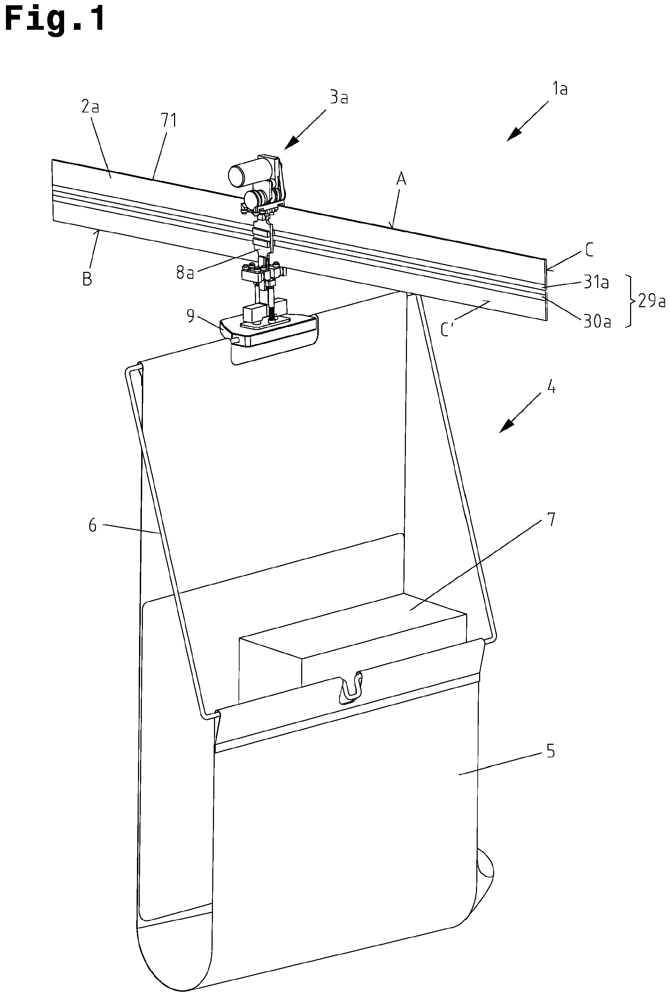

Fig. 1 zeigt eine Schrägansicht einer Hängefördervorrichtung 1a für ein Kommissioniersystem, welche eine als Führungsschiene 2a ausgebildete Tragstruktur 71 mit einer entlang der Führungsschiene 2a verlaufenden Lauffläche A sowie einen Transportträger 3a zum Transport von Hängeware 4 umfasst. Die Hängeware 4 umfasst in diesem Beispiel eine Transporttasche mit einem Taschenkörper 5, welcher an einem Bügel 6 befestigt ist und für die Aufbewahrung einer Ware 7 vorgesehen ist. Alternativ kann die Hängeware 4 auch durch ein Kleidungsstück gebildet sein, das mit Hilfe eines Kleiderbügels am Transportträger 3a hängt.

Der Transportträger 3a kann einen Basiskörper 8a und einen Tragkörper 9 mit einer Aufnahme zum Aufhängen der Hängeware 4 aufweisen, so wie das in dem in Fig. 1 dargestellten Beispiel der Fall ist. Hier umfasst die Aufnahme eine vollständig umschlossene Aufnahmeöffnung zum Einhängen des Bügels 6 der Hängeware 4. Alternativ könnte auch ein offener Aufnahmeabschnitt (Haken) zum Einhängen oder Aufhängen des Bügels 6 der Hängeware 4 vorgesehen sein. Der Tragkörper 9 kann insbesondere über eine Verbindungsvorrichtung auswechselbar am Basiskörper 8a befestigt sein.

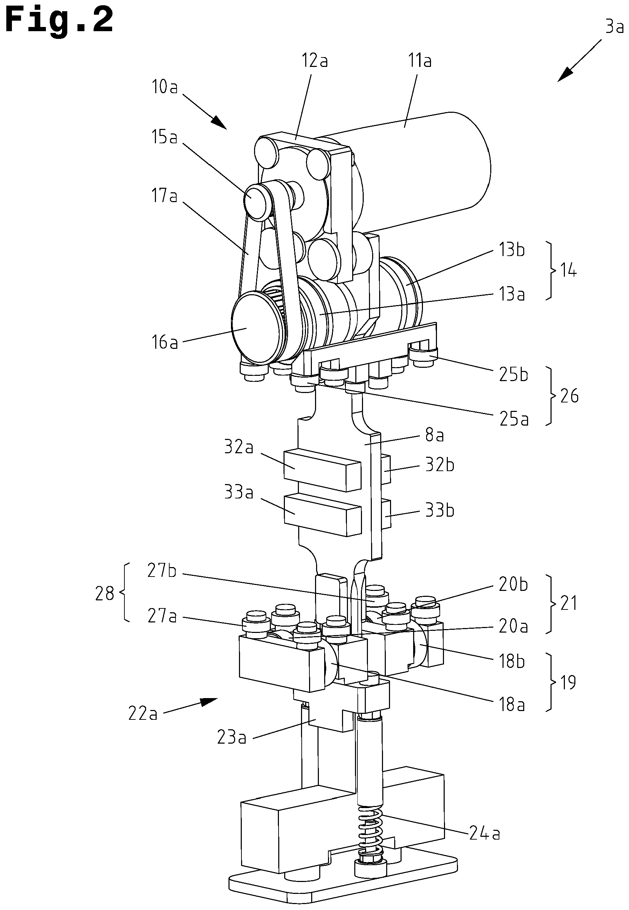

Fig. 2 zeigt den Transportträger 3a nun im Detail. Der Transportträger 3a umfasst einen Basiskörper 8a und mehrere an diesem drehbar gelagerte Räder 13a, 13b, 18a, 18b, 20a, 20b, 25a, 25b, 27a, 27b. Weiterhin umfasst der Transportträger 3a eine Antriebsvorrichtung 10a zum Bewegen des Transportträgers 3a entlang der Führungsschiene 2a. Die Antriebsvorrichtung 10a weist einen elektrisch betriebenen Motor 11a auf, welcher am Transportträger 3a gelagert ist. Wie in Fig. 2 beispielhaft gezeigt, kann der Motor 11a über eine Motorhalterung 12a mit dem Basiskörper 8a verbunden sein. Die Motorhalterung 12a kann in diesem Fall auch als Teil des Basiskörpers 8a aufgefasst werden.

Zumindest ein Rad der am Basiskörper 8a gelagerten Räder 13a, 13b, 18a, 18b, 20a, 20b, 25a, 25b, 27a, 27b ist als Antriebsrad 13a, 13b ausgebildet, das mit dem Motor 11a gekoppelt ist. In diesem Beispiel sind ein erstes Antriebsrad 13a und ein zweites Antriebsrad 13b eines Antriebsräderpaares 14 vorgesehen, welche koaxial auf einer gemeinsamen Antriebswelle angeordnet und mit dem Motor 11a gekoppelt sind, insbesondere über einen Zugmitteltrieb der Antriebsvorrichtung 10a. Der Zugmittelantrieb kann wie in Fig. 2 gezeigt ein Motorritzel 15a, ein auf der Antriebswelle sitzendes Zahnrad 16a sowie einen um das Motorritzel 15a und das Zahnrad 16a geführten Zahnriemen 17a umfassen.

Wie insbesondere aus der Fig. 1 erkennbar ist, kann das erste Antriebsrad 13a auf der Lauffläche A abrollbar aufliegen. Mit anderen Worten hängt der Transportträger 3a mittels des ersten Antriebsrads 13a an der Führungsschiene 2a. Dadurch bewirkt das Gewicht des Transportträgers 3a und gegebenenfalls ein Gewicht der Hängeware 4 eine Anpresskraft des ersten Antriebsrads 13a auf die Lauffläche A, wodurch eine mit Hilfe des ersten Antriebsrads 13a übertragene Reibkraft erhöht wird.

Bevorzugt ist der elektrisch betriebene Motor 11a oberhalb der Antriebsräder 13a, 13b am Basiskörper 8a angeordnet. Weiterhin kann der elektrisch betriebene Motor 11a oberhalb der Führungsschiene 2a angeordnet sein, wenn der Transportträger 3a an der Führungsschiene 2a hängt, wie dies insbesondere in Fig. 1 ersichtlich ist. Dadurch können die Antriebsräder 13a, 13b einerseits gut und auf kurzem Weg an den elektrischen Motor 11a gekoppelt werden beziehungsweise der Motor 11a dort angeordnet sein, wo normalerweise ohnehin ausreichend Raum vorhanden ist.

Vorteilhaft ist es, wenn die Führungsschiene 2a eine entlang dieser verlaufende Gegenlauffläche B aufweist und wenn zumindest ein Rad der am Basiskörper 8a gelagerten Räder 13a, 13b, 18a, 18b, 20a, 20b, 25a, 25b, 27a, 27b als Anstellrad 18a, 18b, 20a, 20b ausgebildet ist und auf der Gegenlauffläche B abrollbar anliegt, so wie das in dem in den Fig. 1 und 2 dargestellten Beispiel der Fall ist. Hierbei sind ein erstes Anstellrad 18a und ein zweites Anstellrad 18b eines ersten Anstellräderpaares 19 sowie ein erstes Anstellrad 20a und ein zweites Anstellrad 20b eines zweiten Anstellräderpaares 21 vorgesehen. In dem in Fig. 1 dargestellten Zustand liegen das erste Anstellrad 18a des ersten Anstellräderpaares 19 und das erste Anstellrad 20a des zweiten Anstellräderpaares 21 abrollbar auf der Gegenlauffläche B an. Dadurch wird eine Führung des Transportträgers 3a auf der Führungsschiene 2a verbessert. Vorteilhaft verläuft die Gegenlauffläche B mit einem Vertikalabstand parallel zur Lauffläche A, so wie das im gezeigten Beispiel der Fall ist. Auch ein Horizontalabstand zwischen Lauffläche A und Gegenlauffläche B wäre möglich.

Von Vorteil ist es auch, wenn der Transportträger 3a eine Anstellvorrichtung 22a aufweist, durch welche die Anstellräder 18a, 18b, 20a, 20b mit einer Anstellkraft gegen die Gegenlauffläche B angelegt werden, so wie das in dem in den Fig. 1 und 2 dargestellten Beispiel der

Fall ist. Dadurch wird eine Führung des Transportträgers 3a auf der Führungsschiene 2a weiter verbessert. Zudem wird auch eine durch das Antriebsrad 13a übertragene Reibkraft erhöht. Insbesondere kann auf das Antriebsrad 13a die vom Transportträger 3a verursachte Gewichtskraft, die von der Hängeware 4 verursachte Gewichtskraft und die Anstellkraft wirken.

Zu diesem Zweck kann die Anstellvorrichtung 22a, wie beispielhaft gezeigt, einen beweglich am Basiskörper 8a gelagerten Schlitten 23a und einen gegen den Schlitten 23a angestellten Krafterzeuger 24a aufweisen, wobei die Anstellräder 18a, 18b, 20a, 20b am Schlitten 23a gelagert sind. Der Krafterzeuger 24a ist beispielsweise durch eine vorgespannte Feder gebildet. Grundsätzlich wäre aber auch der Einsatz anderer Krafterzeuger vorstellbar, beispielsweise der Einsatz eines vorgespannten Gummipuffers, einer pneumatischen Feder, eines Permanentmagneten oder eines Elektromagneten. In dem in Fig. 2 dargestellten Beispiel ist der Schlitten 23a vertikal verschiebbar am Basiskörper 8a gelagert. Denkbar wäre alternativ auch der Einsatz einer beweglich (drehbar) am Basiskörper 8a gelagerten Schwinge und eines gegen die Schwinge angestellten Krafterzeugers, wobei die Anstellräder 18a, 18b, 20a, 20b an der Schwinge gelagert sind.

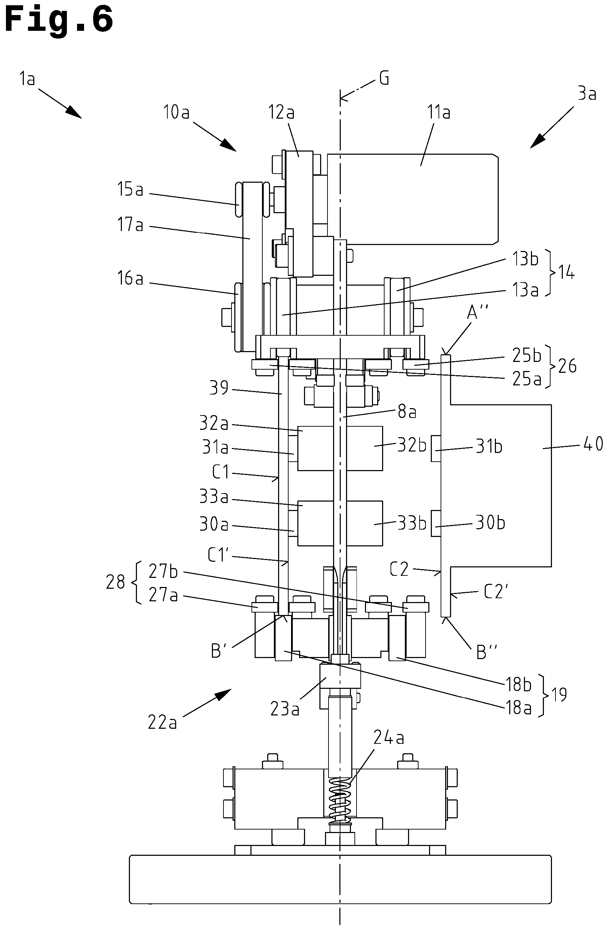

Bei dem in Fig. 1 und 2 dargestellten Transportträger 3a sind zudem einige der am Basiskörper 8a gelagerten Räder 13a, 13b, 18a, 18b, 20a, 20b, 25a, 25b, 27a, 27b als Führungsräder ausgebildet. Der in den Fig. 1 und 2 dargestellte, beispielhafte Transportträger 3a umfasst mehrere, insbesondere in diesem Zusammenhang insgesamt sechzehn, paarweise angeordnete Führungsräder, die jeweils um Vertikalachsen gelagert sind. Im Bereich der Antriebsräder 13a, 13b befinden sich mehrere, insbesondere acht Führungsräder, von denen in der Fig. 2 jedoch nur zwei explizit bezeichnet sind, konkret das erste Führungsrad 25a und das zweite Führungsrad 25b eines ersten Führungsräderpaares 26. Im Bereich der Anstellräder 18a, 18b, 20a, 20b befinden sich mehrere, insbesondere acht, weitere Führungsräder, von denen in der Fig. 2 ebenfalls nur zwei explizit bezeichnet sind, konkret das erste Führungsrad 27a und das zweite Führungsrad 27b eines zweiten Führungsräderpaares 28. Die ersten Führungsräder 25a, 27a sowie zwei weitere nicht explizit bezeichnete Führungsräder links außen auf dem Transportträger 3a können, beispielsweise in dem in Fig. 1 dargestellten Zustand, an der ersten Schienenleitfläche C anliegen. Vier weitere nicht explizit bezeichnete Führungsräder links innen auf dem Transportträger 3a können, wie beispielsweise in dem in Fig. 1 dargestellten Zustand, an der zweiten Schienenleitfläche C' anliegen. Durch die Führungsräder 25a, 25b, 27a, 27b wird ein Kippen des Transportträgers 3a und in Folge ein Herunterfallen desselben von der Führungsschiene 2a wirkungsvoll vermieden. Die Führungsräder 25a, 25b, 27a, 27b sind vorzugsweise symmetrisch zu einer in Längsrichtung der Führungsschiene 2a verlaufenden Vertikalebene G angeordnet, wie dies beispielsweise in Fig. 1 und Fig. 2 oder auch in Fig. 6 gezeigt ist.

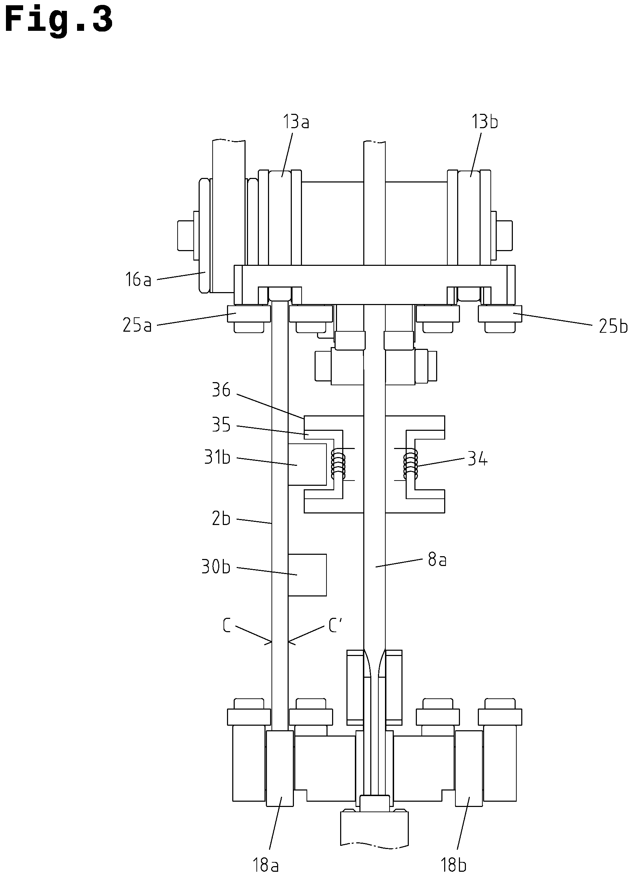

Die in den Fig. 1 und 2 dargestellte, beispielhafte Hängefördervorrichtung 1a umfasst weiterhin ein optionales Energieversorgungssystem 29a, welches einen Isolator und freiliegende elektrische Leiter 30a, 31a aufweist, welche entlang der Führungsschiene 2a verlaufen und in diesem Fall an der Führungsschiene 2a befestigt sind. Das Energieversorgungssystem 29a umfasst weitere elektrische Leiter 30b, 31b, die jedoch in der Fig. 1 nicht sichtbar sind (siehe aber Fig. 6). Ist ein derartiges Energieversorgungssystem 29a vorgesehen, ist es günstig, wenn der Transportträger 3a Stromabnehmer 32a, 33a aufweist, welche elektrisch in Kontakt mit den elektrischen Leitern 30a, 31a stehen und elektrisch mit dem Motor 11a verbunden sind. Der Transportträger 3a kann zudem Stromabnehmer 32b, 33b aufweisen, welche alternativ elektrisch in Kontakt mit den weiteren elektrischen Leitern 30b, 31b stehen und ebenfalls elektrisch mit dem Motor 11a verbunden sind. Die Stromabnehmer 32a, 32b, 33a, 33b sind in diesem Beispiel als Schleifkontakte ausgebildet, die bei Bewegung des Transportträgers 3a auf den elektrischen Leitern 30a, 30b, 31a, 31b gleiten/schleifen. Die Stromabnehmer 32a, 32b, 33a, 33b können aber auch rollen- beziehungsweise radförmig ausgebildet sein und auf den elektrischen Leitern 30a, 30b, 31a, 31b abrollen. In dem gezeigten Beispiel sind die elektrischen Leiter 30a, 30b, 31a, 31b an der Führungsschiene 2a befestigt. Erfindungsgemäß verlaufen die elektrischen Leiter 30a, 30b, 31a, 31b in einem Abstand zur Führungsschiene 2a. Anstelle einer kontaktbehafteten Energieübertragung könnte auch eine kontaktlose Energieübertragung mit Hilfe eines induktiven Energieversorgungssystems vorgesehen sein, wie nachfolgend beschrieben wird (siehe hierzu die Fig. 3).

Ferner kann vorgesehen sein, dass das Energieversorgungssystem 29a nur auf geraden Streckenabschnitten der Führungsschiene 2a vorgesehen ist. Dadurch kann das Energieversorgungssystem 29a einfacher gestaltet sein.

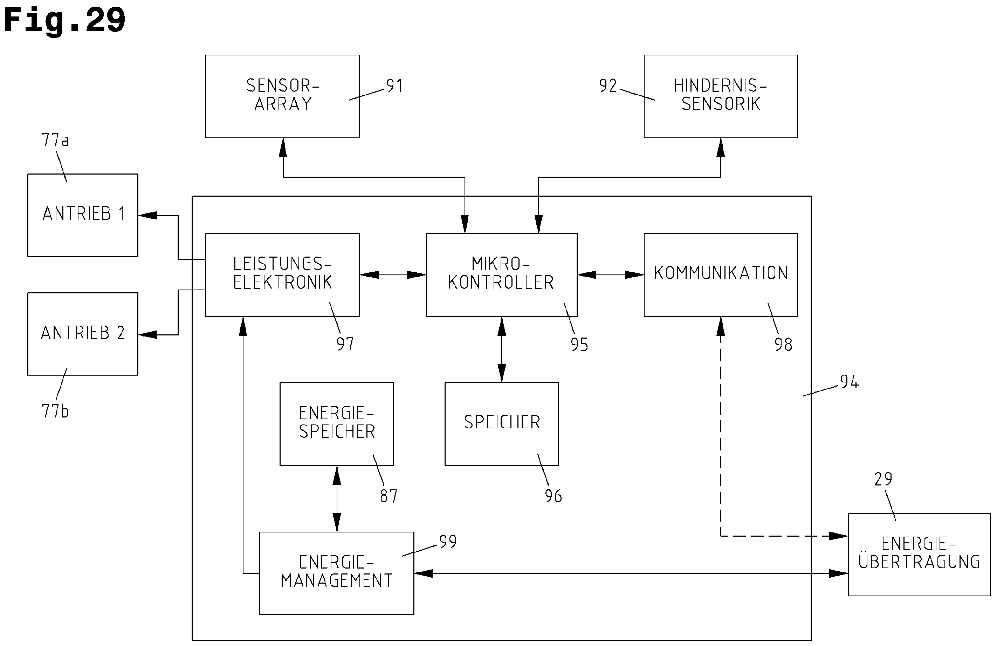

Optional kann der Motor 11a in Kurven und/oder auf Weichen aus einem Energiespeicher versorgt werden (siehe hierzu auch Fig. 29). Dies kann unabhängig davon vorgesehen sein, ob das Energieversorgungssystem 29a zur kontaktbehafteten oder wie in Fig. 3 gezeigt zur kontaktlosen Energieübertragung ausgebildet ist.

Dazu kann vorgesehen sein, dass der Transportträger 3a und/oder die Hängeware 4, insbesondere die Transporttasche, einen mit dem Motor 11a elektrisch verbundenen Energiespeicher oder eine mit dem Motor 11a elektrisch verbundene Energiequelle aufweist (in den Fig. 1 und 2 nicht dargestellt). Insbesondere ist der Motor 11a über ein Schaltelement oder Steuerelement mit dem Energiespeicher oder der Energiequelle verbunden. Der Energiespeicher kann beispielsweise als Akkumulator ausgebildet sein. Die Energiequelle kann als Solarmodul ausgebildet sein.

Alternativ zu den elektrischen Leitern 30a, 30b, 31a, 31b, welche wie zuvor beschrieben als Schleifleitungen fungieren, kann entlang der Führungsschiene 2a, insbesondere an der Führungsschiene 2a, ein induktives Energieversorgungssystem vorgesehen sein und die Energieübertragung zum Motor 11a (und gegebenenfalls zu einer Ladeschaltung einer mit dem Motor 11a verbundenen Energiequelle) des Transportträgers 3a induktiv erfolgen, so wie das in dem in Fig. 3 dargestellten Beispiel der Fall ist. Fig. 3 zeigt einen Ausschnitt aus einer Vorderansicht des Transportträgers 3a.

Insbesondere kann das induktive Energieversorgungsystem einen oder mehrere parallel zur Führungsschiene 2a verlaufende elektrische Leiter 30b, 31b aufweisen, und eine auf dem Transportträger 3a angeordnete Spule 34 kann elektrisch mit dem Motor 11a verbunden sein, wobei die Energieübertragung zur Spule 34 kontaktlos erfolgt, so wie das in der Fig. 3 dargestellt ist. Besonders bevorzugt umfasst der Transportträger 3a einen ferromagnetischen Kern 35, um welchen die Spule 34 gewickelt ist und welcher den zumindest einen elektrischen Leiter 31b zumindest teilweise umgreift, wie dies in Fig. 3 dargestellt ist. In der Fig. 3 sind der ferromagnetische Kern 35 und die Spule 34 zusätzlich durch ein Gehäuse 36 geschützt. Die Spule 34, der ferromagnetische Kern 35 und das Gehäuse 36 sind nicht nur auf der linken Seite des Transportträger 3a angeordnet, sondern auch auf dessen rechter Seite. In der Fig. 3 sind die genannten Bauteile bloß auf einer Seite explizit mit einem Bezugszeichen bezeichnet. Beispielsweise sind der ferromagnetische Kern 35 und das Gehäuse 36 bloß auf der linken Seite und die Spule 34 bloß auf der rechten Seite explizit mit einem Bezugszeichen versehen.

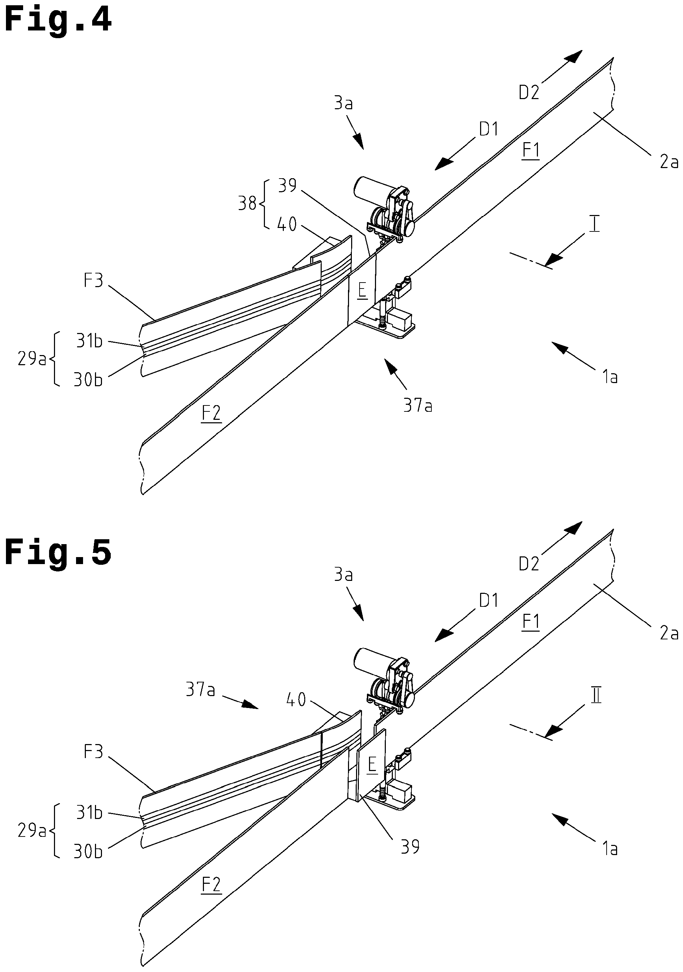

Die Fig. 4, 5, 6 und 7 zeigen nun die Vorgänge im Bereich einer Weiche 37a. Konkret zeigt die Fig. 4 eine Schrägansicht des Transportträgers 3a an beziehungsweise auf der Führungsschiene 2a in der Nähe der Weiche 37a, wobei vorerst eine erste Transportrichtung D1 des Transportträgers 3a angenommen wird.

Die Weiche 37a ist einem Weichenabschnitt E der Führungsschiene 2a zugeordnet. Die Führungsschiene 2a umfasst zudem eine der Weiche 37a in der ersten Transportrichtung D1 des Transportträgers 3a vorgeordnete erste Schienenstrecke F1 und der Weiche 37a in der ersten Transportrichtung D1 des Transportträgers 3a nachgeordnete zweite Schienenstrecke F2 und dritte Schienenstrecke F3. Die Weiche 37a weist ein zwischen einer ersten Schaltstellung und zweiten Schaltstellung umschaltbares Weichenelement 38 auf, um den Transportträger 3a wahlweise entlang eines ersten Transportweges zwischen der ersten Schienenstrecke F1 und der zweiten Schienenstrecke F2, insbesondere von der ersten Schienenstrecke F1 zur zweiten Schienenstrecke F2, oder entlang eines zweiten Transportweges zwischen der ersten Schienenstrecke F1 und dritten Schienenstrecke F3, insbesondere von der ersten Schienenstrecke F1 zur dritten Schienenstrecke F3, zu leiten. Hierbei kann der Transportträger 3a entlang des ersten Transportweges von der ersten Schienenstrecke F1 auf die zweite Schienenstrecke F2 überführt werden, was im gezeigten Beispiel einer Geradeausfahrt des Transportträgers 3a entspricht. Alternativ kann der Transportträger 3a entlang des zweiten Transportweges von der ersten Schienenstrecke F1 auf die dritte Schienenstrecke F3 überführt werden, was im gezeigten Beispiel einer Umleitfahrt des Transportträgers 3a entspricht. Das Weichenelement 38 umfasst hierfür bevorzugt ein erstes Leitelement 39 für die Geradeausfahrt und ein zweites Leitelement 40 für die Umleitfahrt.

Das Weichenelement 38 ist in diesem Beispiel horizontal verstellbar, insbesondere horizontal verschiebbar, ausgestaltet. Denkbar wäre aber auch, dass das Weichenelement 38 bei entsprechender Bauform vertikal verstellbar und/oder verschwenkbar ausgestaltet ist.

Wird eine zweite Transportrichtung D2 des Transportträgers 3a angenommen, dann kehren sich die Verhältnisse zum Teil um. Die Führungsschiene 2a weist dann die der Weiche 37a in der zweiten Transportrichtung D2 des Transportträgers 3a nachgeordnete erste Schienenstrecke F1 und die der Weiche 37a in der zweiten Transportrichtung D2 des Transportträgers 37a vorgeordnete zweite Schienenstrecke F2 und dritte Schienenstrecke F3 auf. Der Transportträger 3a kann mit dem umschaltbaren Weichenelement 38 in diesem Fall wahlweise entlang eines ersten Transportweges zwischen der zweiten Schienenstrecke F2 und der ersten Schienenstrecke F1, insbesondere von der zweiten Schienenstrecke F2 zur ersten Schienenstrecke F1, oder entlang eines zweiten Transportweges zwischen der dritten Schienenstrecke F3 und ersten Schienenstrecke F1, insbesondere von der dritten Schienenstrecke F3 zur ersten Schienenstrecke F1, geleitet werden.

In der Fig. 4 befindet sich das Weichenelement 38 in der ersten Schaltstellung für die Geradeausfahrt. In diesem Zustand ist das erste Leitelement 39 für die Geradeausfahrt wirksam. Das zweite Leitelement 40 für Umleitfahrt ist dagegen unwirksam.

In der Fig. 5 befindet sich das Weichenelement 38 dagegen in der zweiten Schaltstellung für die Umleitfahrt. In diesem Zustand ist das zweite Leitelement 40 für die Umleitfahrt wirksam. Das erste Leitelement 39 für die Geradeausfahrt ist dagegen unwirksam.

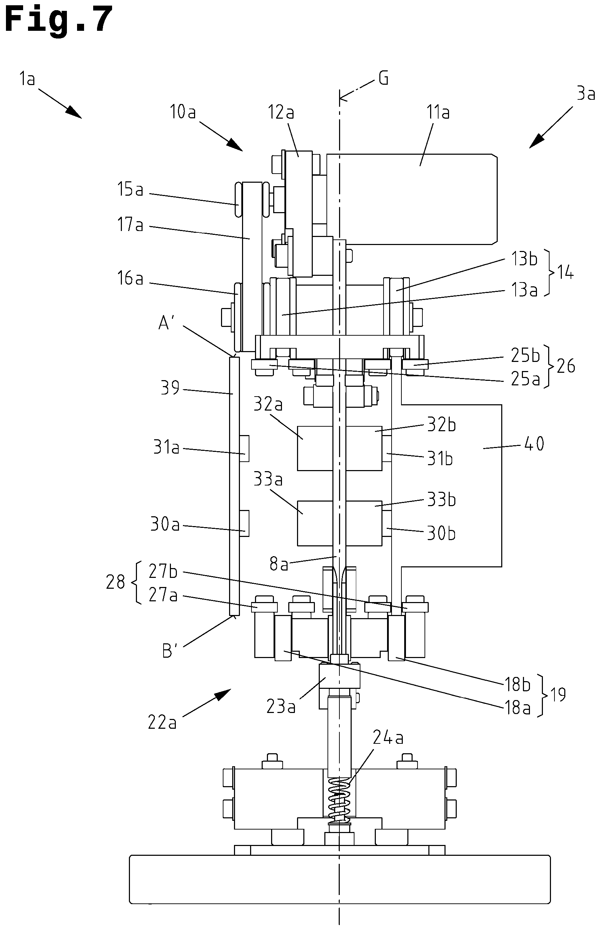

Ergänzend zeigen die Fig. 6 die Ansicht I-I und die Fig. 7 die Ansicht II-II.

Das Weichenelement 38 umfasst eine erste Lauffläche A1 und eine zweite Lauffläche A2 sowie eine erste Gegenlauffläche B1 und eine zweite Gegenlauffläche B2. Hierbei verlaufen die erste Lauffläche A1 und die zweite Lauffläche A2 mit einem Horizontalabstand zueinander. Ferner verlaufen auch die erste Gegenlauffläche B1 und die zweite Gegenlauffläche B2 mit einem Horizontalabstand, insbesondere mit demselben Horizontalabstand wie die Laufflächen A1, A2, zueinander. Darüber hinaus verlaufen die Laufflächen A1, A2 in einem Vertikalabstand und parallel zu den Gegenlaufflächen B1, B2.

In der ersten Schaltstellung des Weichenelementes 38 (siehe Fig. 6) liegen das erste Antriebsrad 13a des Antriebsräderpaares 14 an der Lauffläche A' des ersten Leitelements 39 des Weichenelementes 38 abrollbar auf und gegebenenfalls das erste Anstellrad 18a des ersten Anstellräderpaares 19 sowie das erste Anstellrad 20a des zweiten Anstellräderpaares 21 an der Gegenlauffläche B' des ersten Leitelements 39 an, wenn der Transportträger 3a entlang des Weichenabschnitts E bewegt wird.

In der zweiten Schaltstellung des Weichenelementes 38 (siehe Fig. 7) liegen das zweite Antriebsrad 13b des Antriebsräderpaares 14 an der Lauffläche A" des zweiten Leitelements 40 des Weichenelementes 38 abrollbar auf und gegebenenfalls das zweite Anstellrad 18b des ersten Anstellräderpaares 19 sowie das zweite Anstellrad 20b des zweiten Anstellräderpaares 21 an der Gegenlauffläche B" des zweiten Leitelements 40 an, wenn der Transportträger 3a entlang des Weichenabschnitts E bewegt wird.

Hierbei kann vorgesehen sein, dass in der ersten Schaltstellung ein erstes Ende der Lauffläche A' des ersten Leitelementes 39 an die Lauffläche A der ersten Schienenstrecke F1 und ein zweites Ende der Lauffläche A' des ersten Leitelementes 39 an die Lauffläche A der zweiten Schienenstrecke F2 anschließt und in der zweiten Schaltstellung ein erstes Ende der Lauffläche A" des zweiten Leitelementes 40 an die Lauffläche A der ersten Schienenstrecke F1 und ein zweites Ende der Lauffläche A" des zweiten Leitelementes 40 an die Lauffläche A der dritten Schienenstrecke F3 anschließt, sodass der Transportträger 3a wahlweise von der ersten Schienenstrecke F1 auf die zweite Schienenstrecke F2 oder auf die dritte Schienenstrecke F3 überführt werden kann.

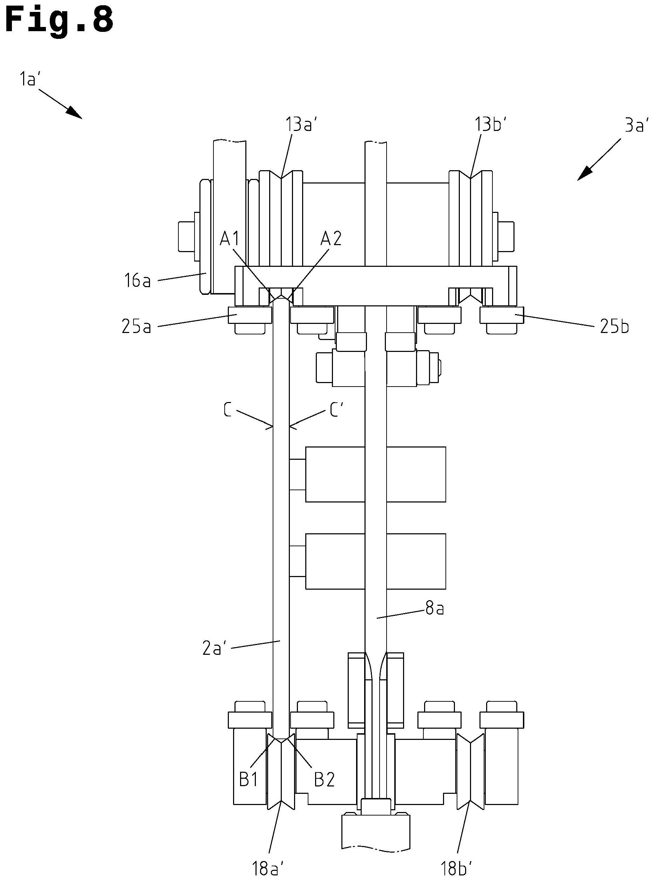

In dem in den Fig. 6 und 7 dargestellten Fall hat das erste Leitelement 39 eine Lauffläche A' und eine Gegenlauffläche B', und das zweite Leitelement 40 hat eine Lauffläche A" und eine Gegenlauffläche B". Denkbar wäre aber auch, dass das erste Leitelement 39 und das zweite Leitelement 40 analog zu der in Fig. 8 dargestellten Führungsschiene 2a' jeweils zwei Laufflächen A1, A2 und jeweils zwei Gegenlaufflächen B1, B2 aufweisen.

Hierbei kann vorgesehen sein, dass in der ersten Schaltstellung ein erstes Ende der ersten Lauffläche A1 des ersten Leitelementes 39 an die erste Lauffläche A1 der ersten Schienenstrecke F1 und ein zweites Ende der ersten Lauffläche A1 des ersten Leitelementes 39 an die erste Lauffläche A1 der zweiten Schienenstrecke F2 anschließt und in der zweiten Schaltstellung ein erstes Ende der ersten Lauffläche A1 des zweiten Leitelementes 40 an die erste Lauffläche A1 der ersten Schienenstrecke F1 und ein zweites Ende der ersten Lauffläche A1 des zweiten Leitelementes 40 an die erste Lauffläche A1 der dritten Schienenstrecke F3 anschließt, sodass der Transportträger 3a wahlweise von der ersten Schienenstrecke F1 auf die zweite Schienenstrecke F2 oder auf die dritte Schienenstrecke F3 überführt werden kann. Gleichermaßen schließt in diesem Fall in der ersten Schaltstellung ein erstes Ende der zweiten Lauffläche A2 des ersten Leitelementes 39 an die zweite Lauffläche A2 der ersten Schienenstrecke F1 und ein zweites Ende der zweiten Lauffläche A2 des ersten Leitelementes 39 an die zweite Lauffläche A2 der zweiten Schienenstrecke F2 an, und in der zweiten Schaltstellung schließt ein erstes Ende der zweiten Lauffläche A2 des zweiten Leitelementes 40 an die zweite Lauffläche A2 der ersten Schienenstrecke F1 und ein zweites Ende der zweiten Lauffläche A2 des zweiten Leitelementes 40 an die zweite Lauffläche A2 der dritten Schienenstrecke F3 an, sodass der Transportträger 3a wahlweise von der ersten Schienenstrecke F1 auf die zweite Schienenstrecke F2 oder auf die dritte Schienenstrecke F3 überführt werden kann.

Das Weichenelement 38 umfasst mehrere Weichenleitflächen C1, C1', C2, C2'. In der ersten Schaltstellung des Weichenelementes 38 (siehe Fig. 6) wirken die ersten Weichenleitflächen C1, C1' des ersten Leitelements 39 mit dem Transportträger 3a zusammen, wobei der Transportträger 3a entlang des ersten Transportweges, insbesondere geradeaus, geleitet wird. Konkret wirken dabei die ersten Führungsräder 25a, 27a auf die ersten Weichenleitflächen C1, C1'. In der zweiten Schaltstellung des Weichenelementes 38 (siehe Fig. 7) wirken die zweiten Weichenleitflächen C2, C2' des zweiten Leitelements 40 mit dem Transportträger 3a zusammen, wobei der Transportträger 3a entlang des zweiten Transportweges geleitet wird. Somit kann der Transportträger 3a beispielsweise umgeleitet werden. Konkret wirken dabei die zweiten Führungsräder 25b, 27b auf die zweiten Weichenleitflächen C2, C2'.

Aus den Fig. 4 bis 7 ist insbesondere erkennbar, dass die Räder 13a, 13b, 18a, 18b, 20a, 20b, 25a, 25b, 27a, 27b des Transportträgers 3a doppelt ausgeführt sind und paarweise symmetrisch um die in Längsrichtung der Führungsschiene 2 verlaufende Vertikalebene G angeordnet sind, wobei in einem Betriebszustand des Transportträgers 3a jeweils ein Satz der paarweise vorgesehenen Räder 13a, 13b, 18a, 18b, 20a, 20b, 25a, 25b, 27a, 27b im Eingriff mit der Führungsschiene 2a ist.

Darüber hinaus ist denkbar, dass in einem Schaltzustand der Weiche 37a jeweils ein Satz der paarweise am Transportträger 3a vorgesehenen Räder 13a, 13b, 18a, 18b, 20a, 20b, 25a, 25b, 27a, 27b im Eingriff mit dem Weichenelement 38 ist oder beide Sätze der paarweise am Transportträger 3a vorgesehenen Räder 13a, 13b, 18a, 18b, 20a, 20b, 25a, 25b, 27a, 27b kurzfristig im Eingriff mit dem Weichenelement 38 sind. Letzteres ermöglicht einen unterbrechungsfreien Antrieb des Transportträgers 3a. "Kurzfristig" bedeutet im gegebenen Zusammenhang insbesondere, dass beide Sätze der Räder 13a, 13b, 18a, 18b, 20a, 20b, 25a, 25b, 27a, 27b so lange im Eingriff mit dem Weichenelement 38 sind, bis die Antriebskraft vollständig von einem Satz übernommen werden kann.

An dieser Stelle wird angemerkt, dass sich die obige Beschreibung insbesondere auf die in den Fig. 1 bis 9 dargestellte Bauform der Weiche 37a als rechte Weiche bezieht und bei Verwendung einer linken Weiche entsprechend andere Verhältnisse vorliegen können.

### Ausführungsvariante 1b (schräge Laufflächen)

Fig. 8 zeigt nun einen Ausschnitt aus einer Vorderansicht der Hängefördervorrichtung 1a' beziehungsweise des Transportträgers 3a'. Die in Fig. 8 gezeigte Hängefördervorrichtung 1a' und der Transportträger 3a' sind im Wesentlichen analog zu den zuvor beschriebenen Beispielen ausgebildet. Zusätzlich zu zuvor beschriebenen Merkmalen sind hierbei die Führungsschiene 2a' und die Leitelemente 39, 40 oben und unten seitlich angefast und die Antriebsräder 13a', 13b' und die Anstellräder 18a', 18b'doppelkegelig ausgeführt. Sie könnten aber auch durch Aneinanderreihen jeweils zweier Kegelräder gebildet werden.

In diesem Fall umfasst die Führungsschiene 2a' eine erste Lauffläche A1 und eine zweite Lauffläche A2, wobei die erste Lauffläche A1 und die zweite Lauffläche A2 mit gegenseitigem Horizontalabstand zueinander geneigt verlaufen. In diesem Beispiel sind die erste Lauffläche A1 und die zweite Lauffläche A2 symmetrisch zu einer in Längsrichtung der Führungsschiene 2a' verlaufenden Vertikalebene angeordnet. In gleicher Weise können ein erstes Leitelement 39 und ein zweites Leitelement 40 eines Weichenelementes 38 jeweils eine erste Lauffläche A1 und eine zweite Lauffläche A2 aufweisen.

Sind die Antriebsräder 13a', 13b' jeweils durch Aneinanderreihen zweier Kegelräder gebildet, dann ist ein Rad der genannten Räder des Transportträgers 3a' als erstes Antriebsrad 13a' eines ersten Antriebsräderpaares ausgebildet, wobei das erste Antriebsrad 13a' ein erstes Kegelrad und ein zweites Kegelrad umfasst, welche mit einer Deckfläche aneinandergereiht sind. Hierbei können das erste Kegelrad des ersten Antriebsrads 13a' auf der ersten Lauffläche A1 und das zweite Kegelrad des ersten Antriebsrads 13a' auf der zweiten Lauffläche A2 der Führungsschiene 2a', wie dies in Fig. 8 gezeigt ist, oder des ersten Leitelements 39 abrollbar aufliegen.

Ein weiteres Rad der genannten Räder des Transportträgers 3a' ist hierbei als zweites Antriebsrad 13b' des ersten Antriebsräderpaares ausgebildet, wobei das zweite Antriebsrad 13b' ein erstes Kegelrad und ein zweites Kegelrad umfasst, welche mit einer Deckfläche aneinandergereiht sind. Hierbei können gegebenenfalls das erste Kegelrad des zweiten Antriebsrads 13b' auf der ersten Lauffläche A1 und das zweite Kegelrad des zweiten Antriebsrads 13a'auf der zweiten Lauffläche A2 der Führungsschiene 2a' oder des zweiten Leitelements 40 abrollbar aufliegen.

Hierbei sind das erste Antriebsrad 13a' und das zweite Antriebsrad 13b' des ersten Antriebsräderpaares koaxial auf einer ersten mit dem Motor 11a gekoppelten Antriebswelle angeordnet. Somit können die Antriebsräder 13a', 13b' jeweils symmetrisch zu der in Längsrichtung der Führungsschiene 2a' verlaufenden Vertikalebene G angeordnet.

Die erste Lauffläche A1 und die zweite Lauffläche A2 haben dabei nicht nur eine tragende Funktion, sondern wirken auch als Seitenführungsflächen. Konkret wirken die erste Lauffläche A1 als erste Seitenführungsfläche und die zweite Lauffläche A2 als zweite Seitenführungsfläche. Dies gilt sowohl für die Führungsschiene 2a' als auch für das erste Leitelement 39 und das zweite Leitelement 40 des Weichenelementes 38.

Mittels der genannten Antriebsräder 13a', 13b' hängt der Transportträger 3a' wiederum an der Führungsschiene 2a'. Die Antriebsvorrichtung 10a kann wie zuvor beschrieben einen Zugmitteltrieb aufweisen, über welchen die genannten Antriebsräder 13a', 13b' mit dem Motor 11a gekoppelt sind.

Darüber hinaus weist die Führungsschiene 2a' eine erste Gegenlauffläche B1 und eine zweite Gegenlauffläche B2 auf, welche mit gegenseitigem Horizontalabstand parallel zueinander verlaufen und mit einem Vertikalabstand parallel zu den Laufflächen A1, A2 verlaufen. In diesem Beispiel sind die erste Gegenlauffläche B1 und die zweite Gegenlauffläche B2 symmetrisch zu der in Längsrichtung der Führungsschiene 2a' verlaufenden Vertikalebene G angeordnet. Die erste Gegenlauffläche B1 und die zweite Gegenlauffläche B2 nehmen nicht nur die Anstellkraft auf, sondern wirken in diesem Beispiel ebenfalls als Seitenführungsflächen. Konkret wirken die erste Gegenlauffläche B1 als erste Seitenführungsfläche und die zweite Gegenlauffläche B2 als zweite Seitenführungsfläche. Dies gilt sowohl für die Führungsschiene 2a' als auch für das erste Leitelement 39 und das zweite Leitelement 40 des Weichenelementes 38.

Ein Rad der genannten Räder des Transportträgers 3a' ist als erstes Anstellrad 18a' eines ersten Anstellräderpaares ausgebildet ist und ein weiteres Rad der genannten Räder des Transportträgers ist als zweites Anstellrad 18b' des ersten Anstellräderpaares ausgebildet, wobei das erste Anstellrad 18a'und das zweite Anstellrad 18b' des ersten Anstellräderpaares koaxial auf einer Lagerachse angeordnet sind.

Sind die Anstellräder 18a', 18b' jeweils durch Aneinanderreihen zweier Kegelräder gebildet, dann können die Anstellräder 18a', 18b' wie zuvor für die Antriebsräder 13a', 13b' beschrieben ausgebildet sein, wobei das erste Anstellrad 18a' des ersten Anstellräderpaares ein erstes Kegelrad und ein zweites Kegelrad umfasst, welche mit einer Deckfläche aneinandergereiht sind. Hierbei können das erste Kegelrad des ersten Anstellrads 18a'auf der ersten Gegenlauffläche B1 und das zweite Kegelrad des ersten Anstellrads 18a' auf der zweiten Gegenlauffläche B2 der Führungsschiene 2a', wie dies in Fig. 8 gezeigt ist, oder des ersten Leitelements 39 abrollbar anliegen.

Das zweite Anstellrad 18b' des ersten Anstellräderpaares kann in gleicher Weise ein erstes Kegelrad und ein zweites Kegelrad umfassen, welche mit einer Deckfläche aneinandergereiht sind. Hierbei können gegebenenfalls das erste Kegelrad des zweiten Anstellrads 18b' auf der ersten Gegenlauffläche B1 und das zweite Kegelrad des zweiten Anstellrads 18b' auf der zweiten Gegenlauffläche B2 der Führungsschiene 2a' oder des zweiten Leitelements 40 abrollbar anliegen. Die Räder des ersten Anstellräderpaares sind spiegelbildlich zu Rädern eines zweiten Anstellräderpaares ausgebildet. Mit anderen Worten sind die Anstellräder 18a', 18b' jeweils symmetrisch zu der in Längsrichtung der Führungsschiene 2b verlaufenden Vertikalebene G angeordnet. Selbstverständlich wäre auch die Anwendung eines zweiten Anstellräderpaares wiederum möglich.

Durch die Anstellvorrichtung 22a können das erste Anstellrad 18a' mit einer ersten Anstellkraft gegen die erste und/oder zweite Gegenlauffläche B1, B2, insbesondere der Führungsschiene 2a', angelegt und/oder das zweite Anstellrad 18b' mit einer zweiten Anstellkraft gegen die erste und/oder zweite Gegenlauffläche B1, B2, insbesondere der Führungsschiene 2a' oder des zweiten Leitelements 40, angelegt werden. Hierbei kann vorgesehen sein, dass das erste Anstellrad 18a' oder das zweite Anstellrad 18b' oder beide Anstellräder 18a', 18b' gegen die jeweilige Gegenlauffläche B1, B2 angelegt werden.

Bei dieser Ausführungsform der Antriebsräder 13a', 13b' und/oder der Anstellräder 18a', 18b' haben diese kegelige Laufflächen, um auf den schrägen Laufflächen A1, A2 und Gegenlaufflächen B1, B2 abrollen zu können. Dies ist aber keine zwingende Bedingung. Denkbar wäre beispielsweise auch, dass die Antriebsräder 13a', 13b' und die Anstellräder 18a', 18b' zylindrisch ausgebildet sind und entsprechend schräg gestellte Drehachsen aufweisen.

### Weitere allgemeine Punkte zu den Ausführungsvarianten 1 und 1b

Wie aus den Figuren erkennbar ist, weisen der Transportträger 3a, 3a', die Führungsschiene 2a, 2a' und die Weiche 37a Seitenführungselemente auf, welche mit komplementär zueinander ausgebildeten Seitenführungsflächen versehen sind, um eine Bewegung des Transportträgers 3a, 3a' quer zur Längserstreckung der Führungsschiene 2a, 2a' zu begrenzen und so den Transportträger 3a, 3a' während der Transportbewegung entlang der Längserstreckung der Führungsschiene 2a, 2a' zu führen.

Beispielsweise können die Laufflächen A1, A2 und/oder die Gegenlaufflächen B1, B2 an der Führungsschiene 2a, 2a' und/oder an der Weiche 37a als Seitenführungselement jeweils eine gesonderte beziehungsweise eine daran anschließende Seitenführungsfläche aufweisen. Insbesondere können die erste Lauffläche A1 und/oder zweite Lauffläche A2 beziehungsweise die erste Gegenlauffläche B1 und/oder zweite Gegenlauffläche B2 zu diesem Zweck an der Führungsschiene 2a, 2a' und/oder an der Weiche 37a wie zuvor beschrieben zueinander geneigt verlaufen, so wie das bei der in Fig. 8 dargestellten Ausführungsform der Fall ist.

Denkbar ist weiterhin, dass die Antriebsräder 18a, 18b, 18a', 18b' des Transportträgers 3a, 3a' als Seitenführungselement jeweils eine Seitenführungsfläche aufweisen. In den dargestellten Beispielen ist dies durch einen beidseitigen Bund an den Antriebsrädern 18a, 18b erreicht, beziehungsweise durch kegelförmige Ausbildung der Antriebsräder 18a', 18b', wie dies etwa in Fig. 8 gezeigt ist.

Grundsätzlich können auch die Führungsräder 25a, 25b, 27a, 27b und Schienenleitflächen C, C' sowie die Weichenleitflächen C1, C1', C2, C2' als Seitenführungselemente beziehungsweise Seitenführungsflächen betrachtet werden.

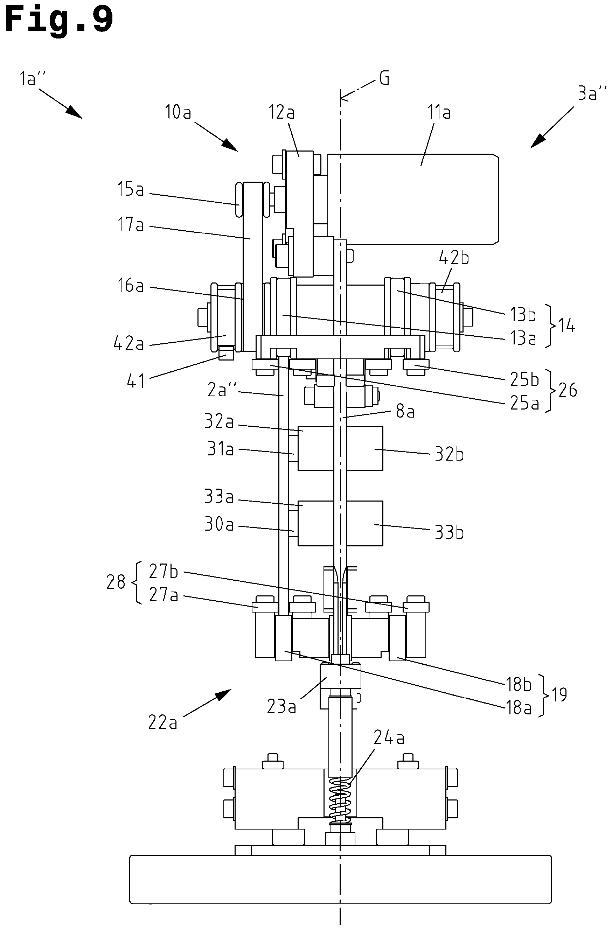

Die Fig. 9 zeigt nun eine Vorderansicht der Hängefördervorrichtung 1a" beziehungsweise des Transportträgers 3a", welche im Wesentlichen wie zuvor im Zusammenhang mit den Fig. 1 bis 8 beschrieben aufgebaut sind oder aufgebaut sein können. Zusätzlich dazu umfassen die Hängefördervorrichtung 1a"eine parallel zur Führungsschiene 2a" verlaufende Zahnstange 41 und der Transportträger 3a"ein erstes Zahnrad 42a, das mit der Zahnstange 41 kämmt und mit dem Motor 11a gekoppelt ist. Der Transportträger 3a" kann zudem ein gegenüberliegendes zweites Zahnrad 42b umfassen, das aber in dem in Fig. 9 dargestellten Zustand nicht im Eingriff mit einer Zahnstange 41 steht. Die Zahnstange 41 und die Zahnräder 42a, 42b können als Teil einer Vorschubvorrichtung aufgefasst werden.

Insbesondere ist die Vorschubvorrichtung einem Transportabschnitt der Führungsschiene 2a" zugeordnet, welcher zwischen einem ersten Höhenniveau und einem zweiten Höhenniveau, insbesondere von dem ersten Höhenniveau zum zweiten Höhenniveau, verläuft. Der Transportträger 3a" ist hierbei über den Transportabschnitt von dem ersten Höhenniveau auf das zweite Höhenniveau bringbar. Bevorzugt ist das zweite Höhenniveau vom ersten Höhenniveau verschieden. Im Transportabschnitt kann die Vorschubvorrichtung mit dem Transportträger 3a" in einer Wirkverbindung stehen, sodass der Transportträger 3a" zumindest während der Transportbewegung zwischen den unterschiedlichen Höhenniveaus durch die Vorschubvorrichtung mit einer Vorschubkraft beaufschlagt wird. Durch die Vorschubvorrichtung sind höhere Antriebskräfte übertragbar, wodurch sich der Transportträger 3a" auch auf relativ steilen Transportabschnitten nach oben oder unten bewegen kann. Die Vorschubkraft kann zusätzlich zur Antriebskraft wirken. Alternativ ist denkbar, dass der Antrieb im Transportabschnitt weggeschaltet wird und nur die Vorschubkraft auf den Transportträger 3a" wirkt.

Vorteilhaft ist es, wenn die Antriebsräder 13a, 13b und die Zahnräder 42a, 42b miteinander gekoppelt sind. Insbesondere können die Antriebsräder 13a, 13b und die Zahnräder 42a, 42b drehfest miteinander gekoppelt sein. Des Weiteren können die Antriebsräder 13a, 13b und die Zahnräder 42a, 42b auf einer gemeinsamen Antriebswelle befestigt und darauf axial zueinander versetzt angeordnet sein, so wie das in dem in Fig. 9 dargestellten Beispiel der Fall ist.

Alternativ kann die Vorschubeinrichtung beispielsweise auch durch einen Bolzen gebildet sein, welcher auf einem parallel zur Führungsschiene 2a" verlaufenden Zugmitteltrieb befestigt ist und den Transportträger 3a" formschlüssig hintergreifen kann.

### Ausführungsvariante 2 (Transportträger zweiseitig schienengeführt)

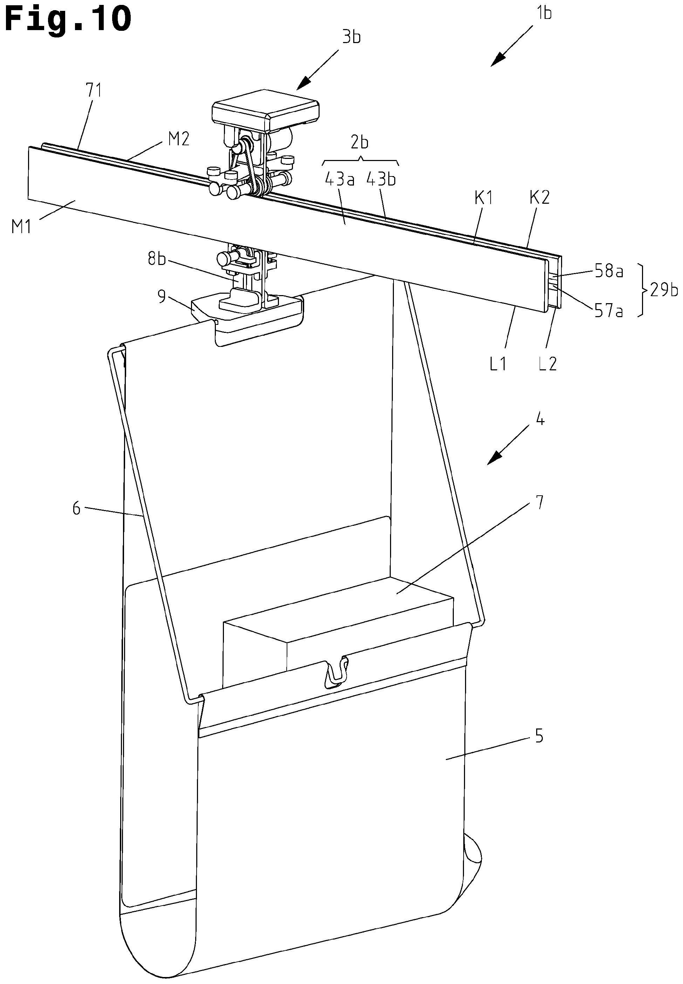

Fig. 10 zeigt eine Schrägansicht einer erfindungsgemäßen zweiten Ausführungsvariante einer Hängefördervorrichtung 1b für ein Kommissioniersystem, welche eine als Führungsschiene 2b ausgebildete Tragstruktur 71 sowie einen Transportträger 3b zum Transport von Hängeware 4 umfasst. Die Führungsschiene 2b ist zweigeteilt und umfasst eine erste Führungsteilschiene 43a mit einer ersten Lauffläche K1 und eine zweite Führungsteilschiene 43b mit einer zweiten Lauffläche K2. Die Hängeware 4 umfasst in diesem Beispiel wiederum eine Transporttasche mit einem Taschenkörper 5, welcher an einem Bügel 6 befestigt ist und für die Aufbewahrung einer Ware 7 vorgesehen ist. Alternativ kann die Hängeware 4 auch hier durch ein Kleidungsstück gebildet sein, das mit Hilfe eines Kleiderbügels am Transportträger 3b hängt.

Konkret kann der Transportträger 3b wiederum einen Basiskörper 8b und einen Tragkörper 9 mit einer Aufnahme zum Aufhängen der Hängeware 4 aufweisen, so wie das vorangehend zur ersten Ausführungsvariante beschrieben wurde und in dem in Fig. 10 dargestellten Beispiel der Fall ist. Hier umfasst die Aufnahme eine vollständig umschlossene Aufnahmeöffnung zum Einhängen des Bügels 6 der Hängeware 4. Alternativ könnte auch ein offener Aufnahmeabschnitt (Haken) zum Einhängen oder Aufhängen des Bügels 6 der Hängeware 4 vorgesehen sein. Der Tragkörper 9 kann insbesondere über eine Verbindungsvorrichtung auswechselbar am Basiskörper 8b befestigt sein.

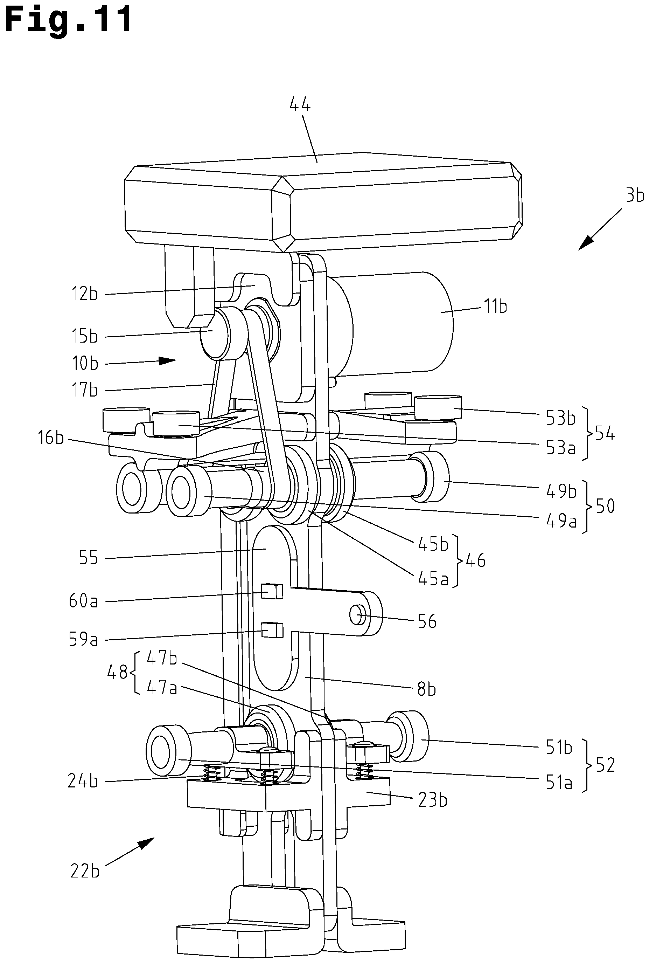

Fig. 11 zeigt den Transportträger 3b nun im Detail. Der Transportträger 3b umfasst einen Basiskörper 8b und mehrere an diesem drehbar gelagerte Räder 45a, 45b, 47a, 47b, 49a, 49b, 51a, 51b, 53a, 53b. Weiterhin umfasst der Transportträger 3b eine Antriebsvorrichtung 10b zum Bewegen des Transportträgers 3b entlang der Führungsschiene 2b. Die Antriebsvorrichtung 10b weist einen elektrisch betriebenen Motor 11b auf, welcher am Transportträger 3b gelagert ist. Bevorzugt ist der Motor 11b über eine Motorhalterung 12b mit dem Basiskörper 8b verbunden. Die Motorhalterung 12b kann hierbei auch als Teil des Basiskörpers 8b aufgefasst werden.

Zumindest ein Rad der am Basiskörper 8b gelagerten Räder 45a, 45b, 47a, 47b, 49a, 49b, 51a, 51b, 53a, 53b ist als Antriebsrad ausgebildet, das mit dem Motor 11b gekoppelt ist. In diesem Beispiel sind ein erstes Antriebsrad 45a und ein zweites Antriebsrad 45b eines ersten Antriebsräderpaares 46 vorgesehen, welche koaxial auf einer ersten gemeinsamen Antriebswelle angeordnet und mit dem Motor 11b gekoppelt sind, insbesondere über einen Zugmitteltrieb der Antriebsvorrichtung 10b. Der Zugmittelantrieb umfasst vorzugsweise ein Motorritzel 15b, ein auf der Antriebswelle sitzendes Zahnrad 16b sowie einen um das Motorritzel 15b und das Zahnrad 16b geführten Zahnriemen 17b. Darüber hinaus können ein in Fig. 11 nicht explizit bezeichnetes erstes Antriebsrad und zweites Antriebsrad eines zweiten Antriebsräderpaares vorgesehen sein, welche koaxial auf einer gemeinsamen zweiten Antriebswelle angeordnet und ebenfalls über den Zugmitteltrieb der Antriebsvorrichtung 10b mit dem Motor 11b gekoppelt sind.

Die Antriebsräder 45a, 45b können hierbei gegebenenfalls wie zuvor im Zusammenhang mit der ersten Ausführungsvariante beschrieben ausgebildet sein. Insbesondere können die Antriebsräder 45a, 45b wie zuvor im Zusammenhang mit Fig. 8 beschrieben durch Aneinanderreihung von jeweils zwei Kegelrädern ausgebildet sein.

Wie insbesondere aus der Fig. 10 erkennbar ist, liegen die Antriebsräder 45a, 45b des ersten Antriebsräderpaares 46 und die Antriebsräder des zweiten Antriebsräderpaares auf den Laufflächen K1, K2 abrollbar auf. Mit anderen Worten hängt der Transportträger 3b mittels des ersten Antriebsräderpaares 46 und mittels des zweiten Antriebsräderpaares an der Führungsschiene 2b. Dadurch bewirkt das Gewicht des Transportträgers 3b und gegebenenfalls ein Gewicht der Hängeware 4 eine Anpresskraft des ersten Antriebsräderpaares 46 und des zweiten Antriebsräderpaares auf die Laufflächen K1, K2, wodurch eine mit Hilfe des ersten Antriebsräderpaares 46 und mittels des zweiten Antriebsräderpaares übertragene Reibkraft erhöht wird.

In diesem Beispiel ist der elektrisch betriebene Motor 11b oberhalb der Antriebsräder 45a, 45b am Basiskörper 8b angeordnet. Weiterhin ist der elektrisch betriebene Motor 11b vorzugsweise oberhalb der Führungsschiene 2b angeordnet, wenn der Transportträger 3b an der Führungsschiene 2b hängt. Dadurch können die Antriebsräder 45a, 45b gut und auf kurzem Weg an den elektrischen Motor 11b gekoppelt beziehungsweise der Motor 11b dort angeordnet sein, wo üblicherweise ohnehin ausreichend Raum vorhanden ist.

Vorteilhaft ist es, wenn die erste Führungsteilschiene 43a eine entlang dieser verlaufende erste Gegenlauffläche L1 und die zweite Führungsteilschiene 43b eine entlang dieser verlaufende zweite Gegenlauffläche L2 aufweisen und wenn zumindest ein Rad der am Basiskörper 8b gelagerten Räder 45a, 45b, 47a, 47b, 49a, 49b, 51a, 51b, 53a, 53b als Anstellrad ausgebildet ist und auf den Gegenlaufflächen L1, L2 abrollbar anliegt, so wie das in dem in den Fig. 10 und 11 dargestellten Beispiel der Fall ist. Insbesondere sind in diesem Beispiel ein erstes Anstellrad 47a und ein zweites Anstellrad 47b eines (ersten) Anstellräderpaares 48 vorgesehen, die koaxial auf einer Lagerachse angeordnet sind. Das erste Anstellrad 47a liegt dabei abrollbar auf der ersten Gegenlauffläche L1 an, und das zweite Anstellrad 47b liegt abrollbar auf der zweiten Gegenlauffläche L2 an. Dadurch wird eine Führung des Transportträgers 3b auf der Führungsschiene 2b verbessert. Vorteilhaft verlaufen die Gegenlaufflächen L1, L2 mit einem Vertikalabstand parallel zu den Laufflächen K1, K2, so wie das im gezeigten Beispiel der Fall ist. Auch ein Horizontalabstand zwischen den Laufflächen K1, K2 und den Gegenlaufflächen L1, L2 ist möglich.

Ebenso können die Laufflächen K1, K2 und/oder die Gegenlaufflächen L1, L2 wie zuvor im Zusammenhang mit der ersten Ausführungsvariante beschrieben ausgebildet sein. Insbesondere können die Laufflächen K1, K2 und/oder die Gegenlaufflächen L1, L2 wie zuvor im Zusammenhang mit Fig. 8 beschrieben jeweils eine erste und zweite Seitenführungsfläche aufweisen oder als solche wirken.

Von Vorteil ist es auch, wenn der Transportträger 3b eine Anstellvorrichtung 22b aufweist, durch welche die Anstellräder 47a, 47b mit einer Anstellkraft gegen die Gegenlaufflächen L1, L2 angelegt werden, so wie das in dem in den Fig. 10 und 11 dargestellten Beispiel der Fall ist. Günstig ist es, wenn das erste Anstellrad 47a durch die Anstellvorrichtung 22b mit einer ersten Anstellkraft gegen die erste Gegenlauffläche L1 und/oder das zweite Anstellrad 47b durch die Anstellvorrichtung 22b mit einer zweiten Anstellkraft gegen die zweite Gegenlauffläche L2 angelegt werden. Dadurch wird eine Führung des Transportträgers 3b auf der Führungsschiene 2b weiter verbessert. Zudem wird auch eine durch die Antriebsräder 45a, 45b übertragene Reibkraft erhöht. Insbesondere kann auf die Antriebsräder 45a, 45b die vom Transportträger 3b verursachte Gewichtskraft, die von der Hängeware 4 verursachte Gewichtskraft und die Anstellkraft wirken.

Zu diesem Zweck weist die Anstellvorrichtung 22b in diesem Beispiel einen beweglich am Basiskörper 8b gelagerten Schlitten 23b und einen gegen den Schlitten 23b angestellten Krafterzeuger 24b auf, wobei die Anstellräder 47a, 47b am Schlitten 23b gelagert sind. Der Krafterzeuger 24b ist in diesem Beispiel durch eine vorgespannte Feder gebildet. Grundsätzlich wäre aber auch der Einsatz anderer Krafterzeuger vorstellbar, beispielsweise der Einsatz eines vorgespannten Gummipuffers, einer pneumatischen Feder, eines Permanentmagneten oder eines Elektromagneten. In dem in Fig. 11 dargestellten Beispiel ist der Schlitten 23b vertikal verschiebbar am Basiskörper 8b gelagert. Denkbar wäre alternativ auch der Einsatz einer beweglich (drehbar) am Basiskörper 8b gelagerten Schwinge und eines gegen die Schwinge angestellten Krafterzeugers, wobei die Anstellräder 47a, 47b an der Schwinge gelagert sind.

Gemäß dem gezeigten Beispiel können zudem ein Rad der genannten Räder 45a, 45b, 47a, 47b, 49a, 49b, 51a, 51b, 53a, 53b des Transportträgers 3b als erstes Stützrad 49a eines ersten Stützräderpaares 50 und ein weiteres Rad der genannten Räder 45a, 45b, 47a, 47b, 49a, 49b, 51a, 51b, 53a, 53b des Transportträgers 3b als zweites Stützrad 49b des ersten Stützräderpaares 50 ausgebildet sein, welche koaxial auf der ersten mit dem Motor 11b gekoppelten Antriebswelle beidseits des ersten Antriebsräderpaares 46 angeordnet sind. Zudem sind weitere nicht explizit mit einem Bezugszeichen versehene Räder des Transportträgers 3b als erstes Stützrad und zweites Stützrad eines zweiten Stützräderpaares ausgebildet, welche koaxial auf der zweiten mit dem Motor 11b gekoppelten Antriebswelle beidseits des zweiten Antriebsräderpaares angeordnet sind. In dem gezeigten Beispiel sind die Stützräder 49a, 49b des ersten Stützräderpaares 50 und die Stützräder des zweiten Stützräderpaares drehbar gegenüber der jeweiligen Antriebswelle gelagert und daher nicht angetrieben. Denkbar wäre jedoch auch, dass die Stützräder 49a, 49b des ersten Stützräderpaares 50 und die Stützräder des zweiten Stützräderpaares drehfest mit der jeweiligen Antriebswelle verbunden und daher angetrieben sind.

Darüber hinaus ist in diesem Beispiel ein Rad der genannten Räder 45a, 45b, 47a, 47b, 49a, 49b, 51a, 51b, 53a, 53b des Transportträgers 3b als erstes Zusatzanstellrad 51a eines Zusatzanstellräderpaares 52 und ein weiteres Rad der genannten Räder 45a, 45b, 47a, 47b, 49a, 49b, 51a, 51b, 53a, 53b des Transportträgers 3b als zweites Zusatzanstellrad 51b des Zusatzanstellräderpaares 52 ausgebildet, welche koaxial auf der ersten Lagerachse beidseits des ersten Anstellräderpaares 48 angeordnet sind. In dem gezeigten Beispiel sind die Zusatzanstellräder 51a, 51b drehbar gegenüber der ersten Lagerachse des ersten Anstellräderpaares 48 gelagert und können sich daher relativ zu diesen drehen. Denkbar wäre jedoch auch, dass die Zusatzanstellräder 51a, 51b drehfest mit der ersten Lagerachse des ersten Anstellräderpaares 48 verbunden sind und sich daher gegenüber diesen nicht drehen können.

Bei dem in Fig. 10 und 11 dargestellten Transportträger 3b sind zudem einige der am Basiskörper 8b gelagerten Räder 45a, 45b, 47a, 47b, 49a, 49b, 51a, 51b, 53a, 53b als Führungsräder ausgebildet. Insbesondere sind ein Rad der genannten Räder 45a, 45b, 47a, 47b, 49a, 49b, 51a, 51b, 53a, 53b des Transportträgers 3b als erstes Führungsrad 53a eines ersten Führungsräderpaares 54 ausgebildet und ein weiteres Rad der genannten Räder 45a, 45b, 47a, 47b, 49a, 49b, 51a, 51b, 53a, 53b des Transportträgers als zweites Führungsrad 53b des ersten Führungsräderpaares 54. Zudem sind weitere nicht explizit mit einem Bezugszeichen versehene Räder des Transportträgers 3b als erstes Führungsrad und zweites Führungsrad eines zweiten Führungsräderpaares ausgebildet. Die Führungsräder 53a, 53b des ersten Führungsräderpaares 54 und die Führungsräder des zweiten Führungsräderpaares sind dabei jeweils um Vertikalachsen gelagert.

Der Transportträger 3b weist zudem ein optionales, an einem Leuchtelement-Halter 55 befestigtes Leuchtelement 56 auf, dessen Funktion später bei der Beschreibung der Steuerung des Transportträgers 3b erläutert wird.

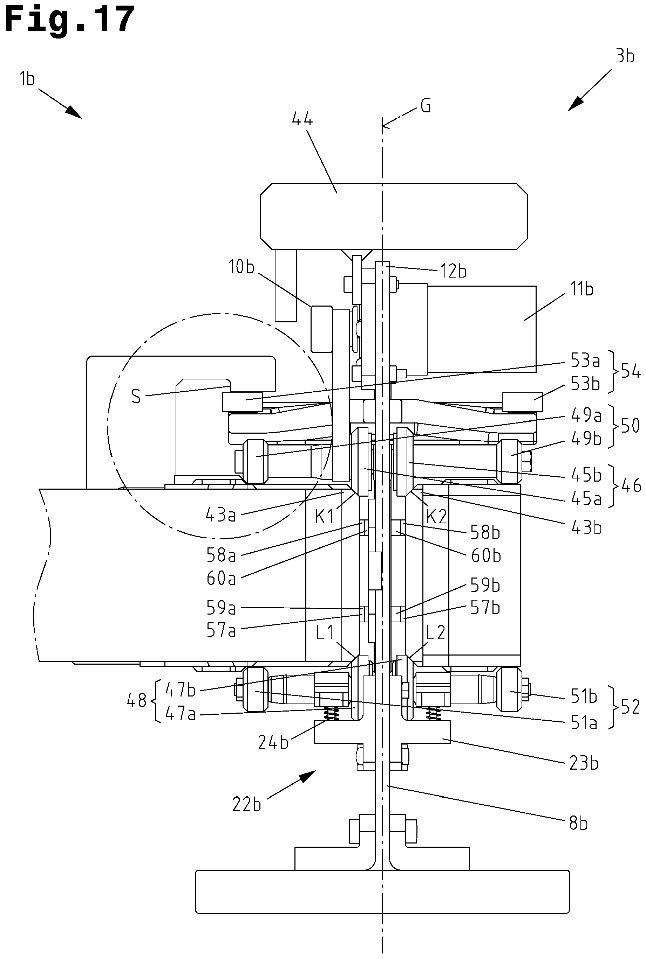

Die in der Fig. 10 dargestellte, beispielhafte Hängefördervorrichtung 1b umfasst weiterhin ein optionales Energieversorgungssystem 29b, welches einen Isolator und freiliegende elektrische Leiter 57a, 58a aufweist, welche entlang der Führungsschiene 2b verlaufen und in diesem Fall auf der Führungsschiene 2b befestigt sind (konkret auf der zweiten Führungsteilschiene 43b). Das Energieversorgungssystem 29b umfasst weitere elektrische Leiter 57b, 58b auf der ersten Führungsteilschiene 43a, die jedoch in der Fig. 10 nicht sichtbar sind (siehe aber Fig. 17). Der Transportträger 3b weist zudem Stromabnehmer 59a, 60a auf, welche elektrisch in Kontakt mit den elektrischen Leitern 57a, 58a stehen und elektrisch mit dem Motor 11b verbunden sind. Der Transportträger 3b weist zudem Stromabnehmer 59b, 60b auf, welche elektrisch in Kontakt mit den elektrischen Leitern 57b, 58b stehen und ebenfalls elektrisch mit dem Motor 11b verbunden sind. Die Stromabnehmer 59a, 59b, 60a, 60b sind in diesem Beispiel als Schleifkontakte ausgebildet, die bei Bewegung des Transportträgers 3b auf den elektrischen Leitern 57a, 57b, 58a, 58b gleiten/schleifen. Die Stromabnehmer 59a, 59b, 60a, 60b können aber auch rad- oder rollenförmig ausgebildet sein und auf den elektrischen Leitern 57a, 57b, 58a, 58b abrollen. In dem gezeigten Beispiel sind die elektrischen Leiter 57a, 57b, 58a, 58b auf der Führungsschiene 2b befestigt. Erfindungsgemäß verlaufen die elektrischen Leiter 57a, 57b, 58a, 58b in einem Abstand zur Führungsschiene 2b. Anstelle einer kontaktbehafteten Energieübertragung könnte auch eine kontaktlose Energieübertragung mit Hilfe eines induktiven Energieversorgungssystems vorgesehen sein. Dazu wird auf die Fig. 3 und die dazu offenbarte technische Lehre verwiesen, die sinngemäß und uneingeschränkt auch auf die in den Fig. 10 und 11 offenbarte Ausführungsvariante anwendbar ist.

Wie zuvor beschrieben kann auch hierbei vorgesehen sein, dass das Energieversorgungssystem 29b nur auf geraden Streckenabschnitten der Führungsschiene 2b vorgesehen ist. Dadurch kann das Energieversorgungssystem 29b einfacher gestaltet sein. In Kurven und auf Weichen kann der Motor 11b beispielweise aus einem Energiespeicher versorgt werden (siehe hierzu Fig. 29).

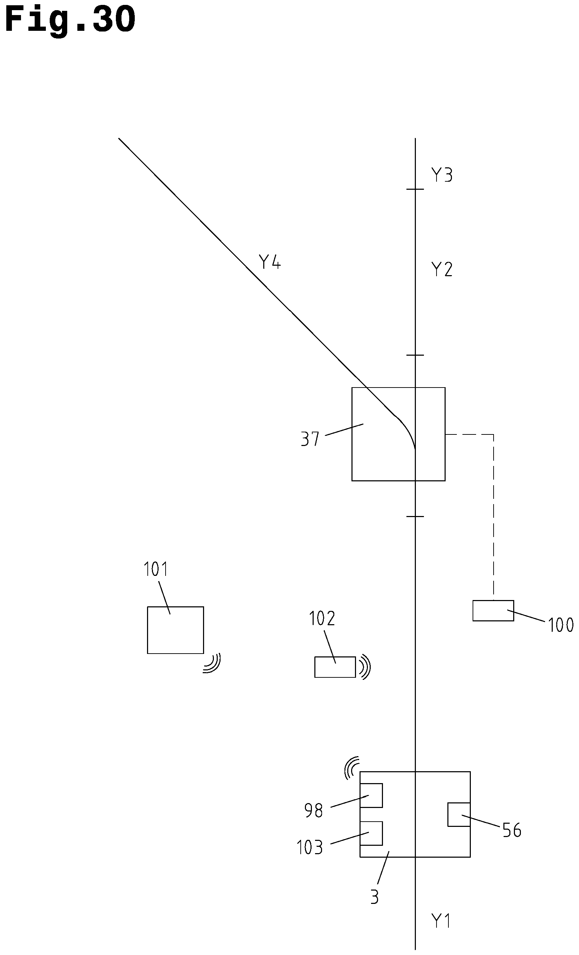

Darüber hinaus kann vorgesehen sein, dass der Transportträger 3b und/oder die IIängeware 4, insbesondere die Transporttasche, einen mit dem Motor 11b elektrisch verbundenen Energiespeicher und/oder eine mit dem Motor 11b elektrisch verbundene Energiequelle aufweisen, die in den Fig. 10 und 11 zwar nicht explizit dargestellt ist, jedoch im oder am Gehäuse 44 einer Steuereinheit angeordnet sein kann, wobei die Steuereinheit insbesondere so wie die in Fig. 29 dargestellte Steuereinheit 94 aufgebaut sein kann und/oder die im Zusammenhang mit den Ansprüchen 86 bis 117 beziehungsweise die im Zusammenhang mit den Fig. 29 und 30 beschriebenen Funktionen übernehmen kann. Insbesondere ist der Motor 11b über ein Schaltelement oder Steuerelement mit dem Energiespeicher / der Energiequelle verbunden. Der Energiespeicher kann beispielsweise als Akkumulator ausgebildet sein, die Energiequelle als Solarmodul.

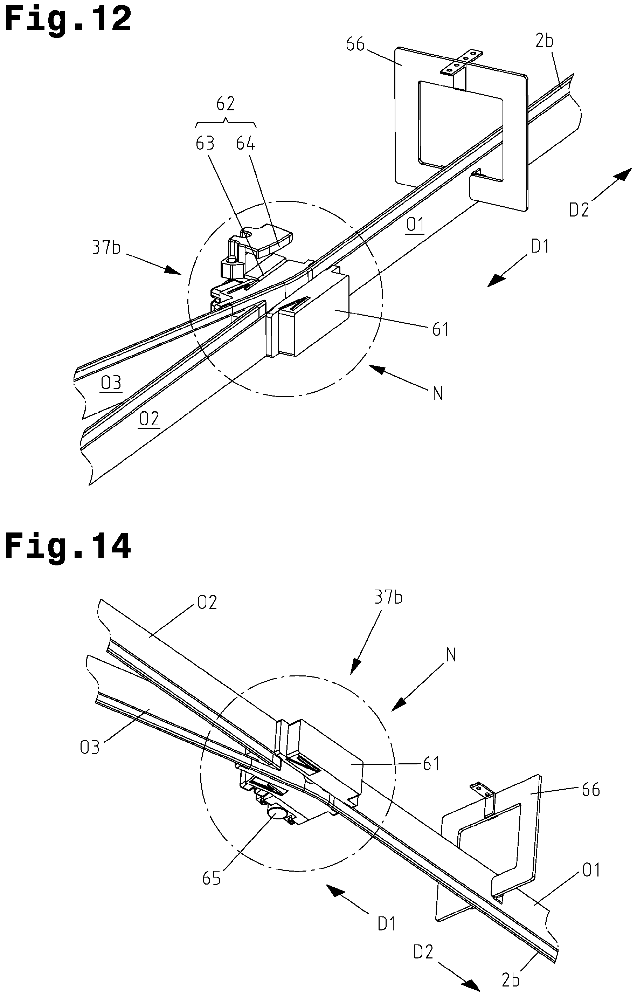

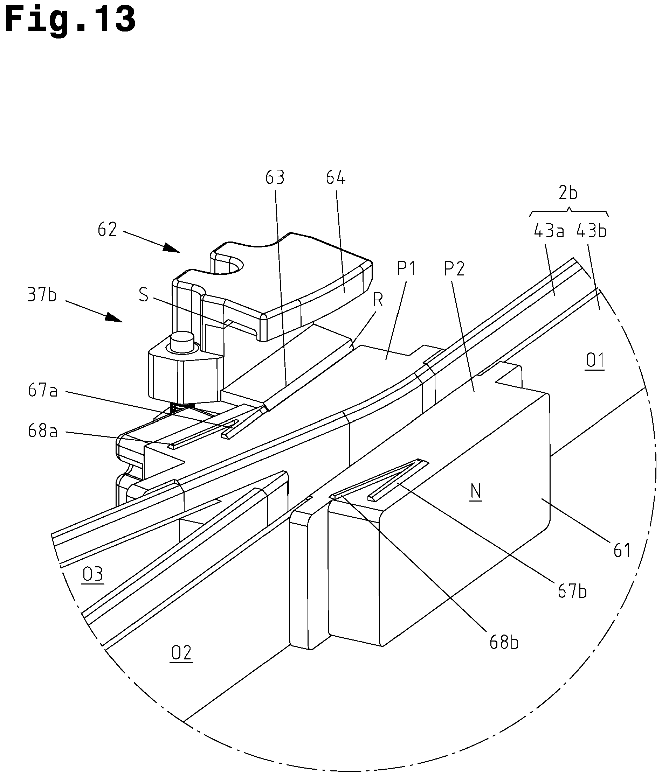

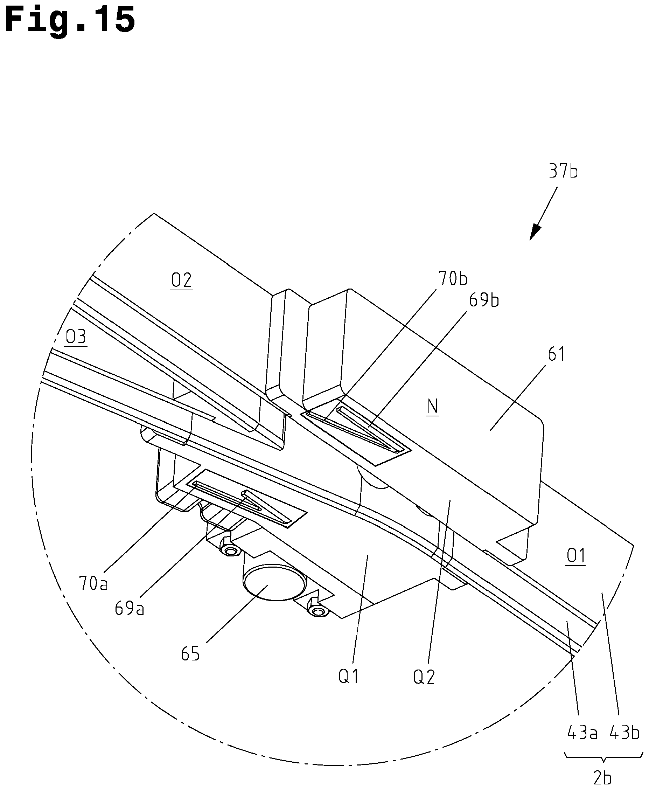

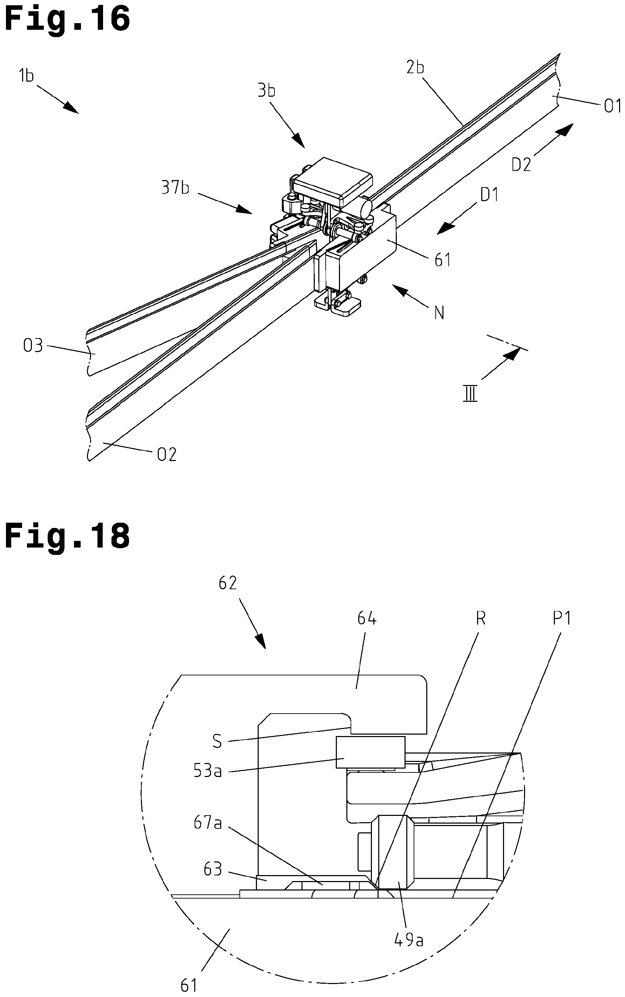

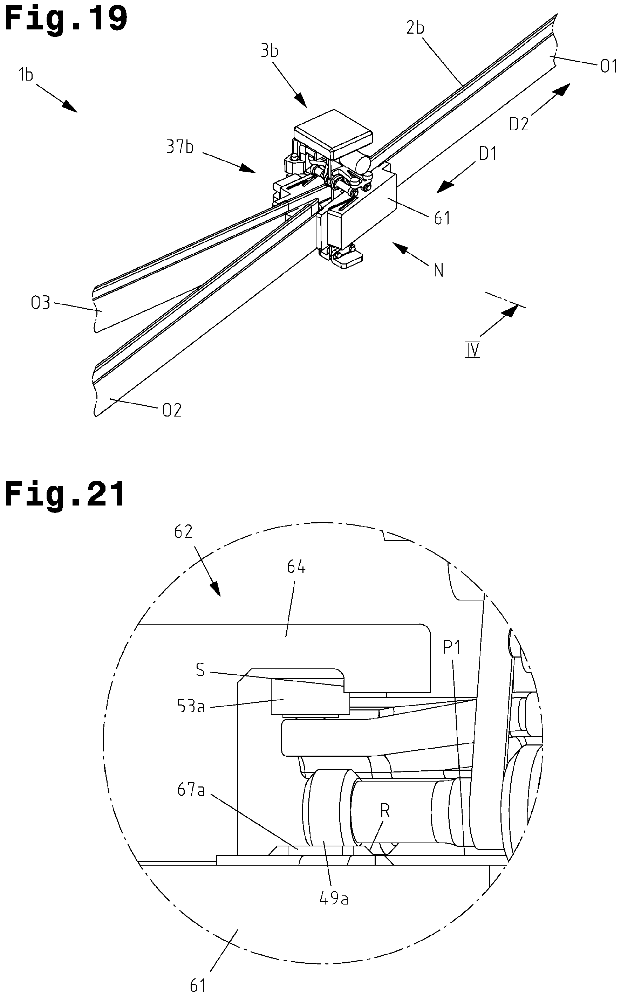

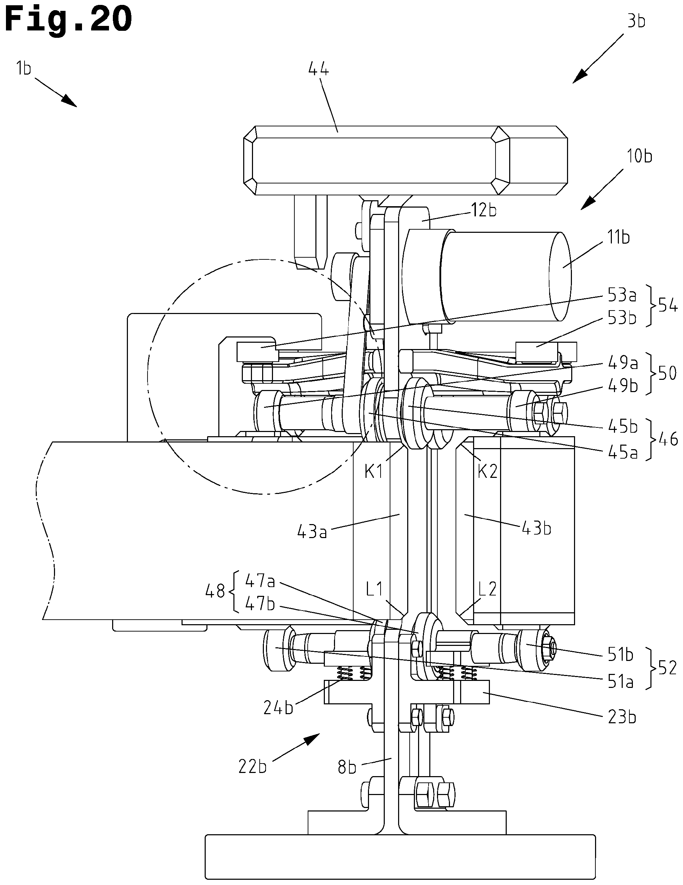

Die Fig. 12 bis 21 zeigen nun die Vorgänge im Bereich einer Weiche 37b. Konkret zeigt die Fig. 12 eine Ansicht der Führungsschiene 2b ohne den Transportträger 3b im Bereich der Weiche 37b von schräg oben, Fig. 13 zeigt eine Detailansicht der Weiche 37b von schräg oben, Fig. 14 zeigt eine Ansicht der Führungsschiene 2b ohne den Transportträger 3b im Bereich der Weiche 37b von schräg unten, Fig. 15 zeigt eine Detailansicht der Weiche 37b von schräg unten, Fig. 16 zeigt eine Ansicht der Führungsschiene 2b inklusive des Transportträgers 3b im Bereich der Weiche 37b bei Geradeausfahrt von schräg oben, Fig. 17 zeigt eine Vorderansicht des Transportträgers 3b im Bereich der Weiche 37b bei Geradeausfahrt (das heißt die Ansicht III-III), Fig. 18 zeigt eine Detailansicht der in Fig. 17 dargestellten Vorderansicht im Bereich der Weiche 37b, Fig. 19 zeigt eine Ansicht der Führungsschiene 2b inklusive des Transportträgers 3b im Bereich der Weiche 37b bei Umleitfahrt von schräg oben, Fig. 20 zeigt eine Vorderansicht des Transportträgers 3b im Bereich der Weiche 37b bei Umleitfahrt (das heißt die Ansicht IV-IV), und Fig. 21 zeigt eine Detailansicht der in Fig. 20 dargestellten Vorderansicht im Bereich der Weiche 37b.

Die Weiche 37b ist einem Weichenabschnitt N der Führungsschiene 2b zugeordnet. Die Führungsschiene 2b umfasst zudem eine der Weiche 37b in der ersten Transportrichtung D1 des Transportträgers 3b vorgeordnete erste Schienenstrecke O1 und der Weiche 37b in der ersten Transportrichtung D1 des Transportträgers 3b nachgeordnete zweite Schienenstrecke O2 und dritte Schienenstrecke O3. Die Weiche 37b weist einen Grundkörper 61 sowie ein im beziehungsweise am Grundkörper 61 gelagertes und zwischen einer ersten Schaltstellung und zweiten Schaltstellung umschaltbares Weichenelement 62 auf. Mit dem Weichenelement 62 kann der Transportträger 3b wahlweise entlang eines ersten Transportweges zwischen der ersten Schienenstrecke O1 und der zweiten Schienenstrecke O2, insbesondere von der ersten Schienenstrecke O1 auf die zweite Schienenstrecke O2, oder entlang eines zweiten Transportweges zwischen der ersten Schienenstrecke O1 und dritten Schienenstrecke O3, insbesondere von der ersten Schienenstrecke O1 auf die dritte Schienenstrecke O3, geleitet werden. Im dargestellten Beispiel entspricht somit der erste Transportweg einer Geradeausfahrt und der zweite Transportweg einer Umleitfahrt. Das Weichenelement 61 umfasst in diesem Beispiel dazu ein erstes Leitelement 63 für die Geradeausfahrt sowie ein zweites Leitelement 64 für die Umleitfahrt.

Das Weichenelement 62 ist in diesem Beispiel vertikal verstellbar, insbesondere vertikal verschiebbar, ausgestaltet. Denkbar wäre aber auch, dass das Weichenelement 62 bei entsprechender Bauform horizontal verstellbar und/oder verschwenkbar ausgestaltet ist. Die Verstellung des Weichenelementes 62 erfolgt mit dem Antrieb 65 (siehe insbesondere Fig. 14).

Weiterhin ist in den Fig. 12 und 14 auch eine Führungsschienen-Halterung 66 beispielhaft dargestellt.

Wird eine zweite Transportrichtung D2 des Transportträgers 3b angenommen, dann kehren sich die Verhältnisse zum Teil um. Die Führungsschiene 2b weist dann die der Weiche 37b in der zweiten Transportrichtung D2 des Transportträgers 3b nachgeordnete erste Schienenstrecke O1 und die der Weiche 37b in der zweiten Transportrichtung D2 des Transportträgers 37b vorgeordnete zweite Schienenstrecke O2 und dritte Schienenstrecke O3 auf. Der Transportträger 3b kann mit dem umschaltbaren Weichenelement 62 in diesem Fall wahlweise entlang eines ersten Transportweges zwischen der zweiten Schienenstrecke O2 und der ersten Schienenstrecke O1, insbesondere von der zweiten Schienenstrecke O2 auf die erste Schienenstrecke O1, oder entlang eines zweiten Transportweges zwischen der dritten Schienenstrecke O3 und ersten Schienenstrecke O1, insbesondere von der dritten Schienenstrecke O3 auf die erste Schienenstrecke O1, geleitet werden.

Das Weichenelement 62, hier insbesondere das erste Leitelement 63, umfasst zudem eine erste Weichenleitfläche R, welche in der (oberen) ersten Schaltstellung des Weichenelementes 62 auf ein Stützrad 49a, 49b des ersten Stützräderpaares 50 und, so wie in dem vorliegenden Beispiel, auf ein Stützrad des zweiten Stützräderpaares wirkt, wobei der Transportträger 3b entlang des ersten Transportweges (entsprechend der Geradeausfahrt) geleitet wird. In der (unteren) zweiten Schaltstellung des Weichenelementes 62 steht die erste Weichenleitfläche R dagegen in keiner Wirkverbindung mit dem Transportträger 3b und ist somit wirkungslos. Der Transportträger 3b kann dann ungehindert entlang des zweiten Transportweges bewegt werden.

Das Weichenelement 62, hier insbesondere das zweite Leitelement 64, umfasst zudem eine zweite Weichenleitfläche S (Umleitfläche), welche in der (oberen) ersten Schaltstellung des Weichenelementes 62 in keiner Wirkverbindung mit dem Transportträger 3b steht, wobei der Transportträger 3b entlang des ersten Transportweges (entsprechend einer Geradeausfahrt) bewegbar ist. In der (unteren) zweiten Schaltstellung des Weichenelementes 62 wirkt die zweite Weichenleitfläche S (Umleitfläche) dagegen mit dem Führungsrad 53a, 53b des ersten Führungsräderpaares 54 und, so wie in dem vorliegenden Beispiel, mit einem Führungsrad des zweiten Führungsräderpaares zusammen, wodurch der Transportträger 3b entlang des zweiten Transportweges geleitet wird. Somit kann der Transportträger 3b beispielsweise umgeleitet werden.

In den Fig. 12, 13, 16, 17 und 18 befindet sich das Weichenelement 62 in der ersten (oberen) Schaltstellung für Geradeausfahrt. In diesem Zustand ist die erste Weichenleitfläche R für Geradeausfahrt wirksam. Die zweite Weichenleitfläche S für Umleitfahrt ist dagegen unwirksam.

In den Fig. 19 bis 21 befindet sich das Weichenelement 62 dagegen in der zweiten (unteren) Schaltstellung für Umleitfahrt. In diesem Zustand ist die zweite Weichenleitfläche S für Umleitfahrt wirksam. Das erste Weichenleitfläche R für Geradeausfahrt ist dann dagegen unwirksam.

Der Weichengrundkörper 61 umfasst eine Oberseite, eine Unterseite sowie einen sich von der Oberseite bis zur Unterseite erstreckenden und entlang eines ersten Transportweges verlaufenden ersten Durchgangskanal (in diesem Beispiel für Geradeausfahrt), an welchen an einem Ende des Durchgangskanals die erste Schienenstrecke O1 und an einem gegenüberliegenden weiteren Ende des Durchgangskanals die zweite Schienenstrecke O2 anschließt. Darüber hinaus umfasst der Weichengrundkörper 61 einen sich von der Oberseite bis zur Unterseite erstreckenden und entlang eines zweiten Transportweges verlaufenden zweiten Durchgangskanal (in diesem Beispiel für Umleitfahrt), welcher an einem Ende des zweiten Durchgangskanals in den ersten Durchgangskanal mündet und an einem gegenüberliegenden weiteren Ende des zweiten Durchgangskanals an die dritte Schienenstrecke O3 anschließt.

An der Oberseite des Weichengrundkörpers 61 befinden sich eine erste Lauffläche K1 und eine zweite Lauffläche K2. Bei der in den Fig. 12 bis 21 dargestellten Bauform der Weiche 37b als rechte Weiche und bei der in den Fig. 12 bis 21 dargestellten Orientierung des Transportträgers 3b liegen das erste Antriebsrad 45a des ersten Antriebsräderpaares 46 und, so wie in dem vorliegenden Beispiel, das erste Antriebsrad des zweiten Antriebsräderpaares abrollbar (und permanent) auf der ersten Lauffläche K1 auf, wenn der Transportträger 3b entlang des zweiten Transportweges bewegt wird. Wie in Fig. 19 bis 21 beispielhaft gezeigt, wird der Transportträger 3b hierbei umgeleitet. Das zweite Antriebsrad 45b des ersten Antriebsräderpaares 46 und, so wie in dem vorliegenden Beispiel, das zweite Antriebsrad des zweiten Antriebsräderpaares liegen bei dieser Bauform und Orientierung abrollbar (und permanent) auf der zweiten Lauffläche K2 auf, wenn der Transportträger 3b entlang des ersten Transportweges, insbesondere geradeaus, bewegt wird.

Auf dem zweiten Transportweg, insbesondere bei der Umleitfahrt, hebt das zweite Antriebsrad 45b des ersten Antriebsräderpaares 46 und, so wie in dem vorliegenden Beispiel, das zweite Antriebsrad des zweiten Antriebsräderpaares kurzfristig von der zweiten Lauffläche K2 ab. In der übrigen Zeit liegen das zweite Antriebsrad 45b des ersten Antriebsräderpaares 46 und, so wie in dem vorliegenden Beispiel, das zweite Antriebsrad des zweiten Antriebsräderpaares auch auf dem zweiten Transportweg auf der zweiten Lauffläche K2 auf.

Auf dem ersten Transportweg, insbesondere bei der Geradeausfahrt, heben das erste Antriebsrad 45a des ersten Antriebsräderpaares 46 und, so wie in dem vorliegenden Beispiel, das erste Antriebsrad des zweiten Antriebsräderpaares kurzfristig von der ersten Lauffläche K1 ab. In der übrigen Zeit liegen das erste Antriebsrad 45a des ersten Antriebsräderpaares 46 und, so wie in dem vorliegenden Beispiel, das erste Antriebsrad des zweiten Antriebsräderpaares auch auf dem ersten Transportweg auf der ersten Lauffläche K1 auf.

"Kurzfristig" bedeutet im gegebenen Zusammenhang insbesondere jenen Bereich im Weichenabschnitt N, W, in dem die erste Lauffläche K1 und die zweite Lauffläche K2 nicht parallel zueinander verlaufen, beziehungsweise jene Zeitspanne, welche der Transportträger 3b zum Passieren dieses Bereichs benötigt.

Im Falle einer linken Weiche 37b und/oder wenn der Transportträger 3b um 180° verdreht auf die Führungsschiene 2b aufgesetzt wird, liegen dementsprechend geänderte Verhältnisse vor. Dabei können das erste Antriebsrad 45a des ersten Antriebsräderpaares 46 und, so wie in dem vorliegenden Beispiel, das erste Antriebsrad des zweiten Antriebsräderpaares abrollbar (und permanent) auf der ersten Lauffläche K1 aufliegen, wenn der Transportträger 3b entlang des ersten Transportweges, insbesondere geradeaus, bewegt wird, und das zweite Antriebsrad 45b des ersten Antriebsräderpaares 46 und, so wie in dem vorliegenden Beispiel, das zweite Antriebsrad des zweiten Antriebsräderpaares können abrollbar (und permanent) auf der zweiten Lauffläche K2 aufliegen, wenn der Transportträger 3b entlang des zweiten Transportweges bewegt, insbesondere umgeleitet, wird.

Auf dem ersten Transportweg heben das zweite Antriebsrad 45b des ersten Antriebsräderpaares 46 und, so wie in dem vorliegenden Beispiel, das zweite Antriebsrad des zweiten Antriebsräderpaares dann kurzfristig von der zweiten Lauffläche K2 ab. In der übrigen Zeit liegen das zweite Antriebsrad 45b des ersten Antriebsräderpaares 46 und, so wie in dem vorliegenden Beispiel, das zweite Antriebsrad des zweiten Antriebsräderpaares auch auf dem ersten Transportweg auf der zweiten Lauffläche K2 auf.

Auf dem zweiten Transportweg heben das erste Antriebsrad 45a des ersten Antriebsräderpaares 46 und, so wie in dem vorliegenden Beispiel, das erste Antriebsrad des zweiten Antriebsräderpaares dann kurzfristig von der ersten Lauffläche K1 ab. In der übrigen Zeit liegen das erste Antriebsrad 45a des ersten Antriebsräderpaares 46 und, so wie in dem vorliegenden Beispiel, das erste Antriebsrad des zweiten Antriebsräderpaares auch auf dem zweiten Transportweg auf der ersten Lauffläche K1 auf.

An der Oberseite des Weichengrundkörpers 61 befindet sich vorzugsweise eine erste Stützfläche P1, auf welcher das erste Stützrad 49a des ersten Stützräderpaares 50 und, so wie in dem vorliegenden Beispiel, das erste Stützrad des zweiten Stützräderpaares abrollbar aufliegt. An der Oberseite des Weichengrundkörpers 61 kann sich zudem eine zweite Stützfläche P2 befinden, auf welcher das zweite Stützrad 49b des ersten Stützräderpaares 50 und, so wie in dem vorliegenden Beispiel, das zweite Stützrad des zweiten Stützräderpaares abrollbar aufliegen.

An der Oberseite des Weichengrundkörpers 61 befindet sich außerdem eine erste Geradführung 67a, auf welcher das erste Stützrad 49a des ersten Stützräderpaares 50 und, so wie in dem vorliegenden Beispiel, das erste Stützrad des zweiten Stützräderpaares abrollbar anliegen, wenn der Transportträger 3b geradeaus bewegt wird. An der Oberseite des Weichengrundkörpers 61 befindet sich zudem eine zweite Geradführung 67b, auf welcher das zweite Stützrad 49b des ersten Stützräderpaares 50 und, so wie in dem vorliegenden Beispiel, das zweite Stützrad des zweiten Stützräderpaares abrollbar anliegen, wenn der Transportträger 3b geradeaus bewegt wird.

An der Oberseite des Weichengrundkörpers 61 befindet sich darüber hinaus eine erste Umleitführung 68a, auf welcher das erste Stützrad 49a des ersten Stützräderpaares 50 und, so wie in dem vorliegenden Beispiel, das erste Stützrad des zweiten Stützräderpaares abrollbar anliegen, wenn der Transportträger 3b umgeleitet wird. An der Oberseite des Weichengrundkörpers 61 befindet sich zudem eine zweite Umleitführung 68b, auf welcher das zweite Stützrad 49b des ersten Stützräderpaares 50 und, so wie in dem vorliegenden Beispiel, das zweite Stützrad des zweiten Stützräderpaares abrollbar anliegen, wenn der Transportträger 3b umgeleitet wird.

An der Unterseite des Weichengrundkörpers 61 befindet sich darüber hinaus eine erste Gegenlauffläche L1 und eine zweite Gegenlauffläche L2. Bei der in den Fig. 12 bis 21 dargestellten Bauform der Weiche 37b als rechte Weiche und bei der in den Fig. 12 bis 21 dargestellten Orientierung des Transportträgers 3b liegt das erste Anstellrad 47a des (ersten) Anstellräderpaares 48 abrollbar (und permanent) an der ersten Gegenlauffläche L1 an, wenn der Transportträger 3b entlang des zweiten Transportweges bewegt, insbesondere umgeleitet, wird. Das zweite Anstellrad 47b des (ersten) Anstellräderpaares 48 liegt bei dieser Bauform und Orientierung abrollbar (und permanent) auf der zweiten Gegenlauffläche L2 an, wenn der Transportträger 3b entlang des ersten Transportweges, insbesondere geradeaus, bewegt wird.

Für die Anstellräder 47a, 47b gelten ähnliche Überlegungen wie für die Antriebsräder 45a, 45b. Demgemäß hebt das zweite Anstellrad 47b des ersten Anstellräderpaares 48 auf dem zweiten Transportweg kurzfristig von der zweiten Gegenlauffläche L2 ab. In der übrigen Zeit liegt das zweite Anstellrad 47b auch auf dem zweiten Transportweg an der zweiten Gegenlauffläche L2 an. Auf dem ersten Transportweg hebt das erste Anstellrad 47a des ersten Anstellräderpaares 48 kurzfristig von der ersten Gegenlauffläche L1 ab. In der übrigen Zeit liegt das erste Anstellrad 47a auch auf dem ersten Transportweg auf der ersten Gegenlauffläche L1 an.

Im Falle einer linken Weiche 37b und/oder wenn der Transportträger 3b um 180° verdreht auf die Führungsschiene 2b aufgesetzt wird, liegen dementsprechend wieder geänderte Verhältnisse vor. Dabei kann das erste Anstellrad 47a des ersten Anstellräderpaares 48 abrollbar (und permanent) auf der ersten Gegenlauffläche L1 anliegen, wenn der Transportträger 3b entlang des ersten Transportweges, insbesondere geradeaus, bewegt wird, und das zweite Anstellrad 47b des ersten Anstellräderpaares 48 kann abrollbar (und permanent) auf der zweiten Gegenlauffläche K2 anliegen, wenn der Transportträger 3b entlang des zweiten Transportweges bewegt, insbesondere umgeleitet, wird.

Auf dem ersten Transportweg hebt das zweite Anstellrad 47b des ersten Anstellräderpaares 48 dann kurzfristig von der zweiten Gegenlauffläche K2 ab. In der übrigen Zeit liegt das zweite Anstellrad 47b auch auf dem ersten Transportweg auf der zweiten Gegenlauffläche K2 an. Auf dem zweiten Transportweg hebt das erste Anstellrad 47a des ersten Anstellräderpaares 48 dann kurzfristig von der ersten Gegenlauffläche L1 ab. In der übrigen Zeit liegt das erste Anstellrad 47a auch auf dem zweiten Transportweg auf der ersten Gegenlauffläche L1 an.

An der Unterseite des Weichengrundkörpers 61 befindet sich außerdem eine erste Zusatz-Stützfläche Q1, auf welcher das erste Zusatzanstellrad 51a des Zusatzanstellräderpaares 52 abrollbar anliegt, sowie eine zweite Zusatz-Stützfläche Q2, auf welcher das zweite Zusatzanstellrad 51b des Zusatzanstellräderpaares 52 abrollbar anliegt.

An der Unterseite des Weichengrundkörpers 61 befindet sich darüber hinaus eine erste Zusatz-Geradführung 69a, auf welcher das erste Zusatzanstellrad 51a des Zusatzanstellräderpaares 52 abrollbar anliegt, wenn der Transportträger 3b geradeaus bewegt wird. An der Unterseite des Weichengrundkörpers 61 befindet sich zudem eine zweite Zusatz-Geradführung 69b, auf welcher das zweite Zusatzanstellrad 51b des Zusatzanstellräderpaares 52 abrollbar anliegt, wenn der Transportträger 3b geradeaus bewegt wird.

An der Unterseite des Weichengrundkörpers 61 befindet sich weiterhin eine erste Zusatz-Umleitführung 70a, auf welcher das erste Zusatzanstellrad 51 a des Zusatzanstellräderpaares 50 abrollbar anliegt, wenn der Transportträger 3b umgeleitet wird. An der Unterseite des Weichengrundkörpers 61 befindet sich zudem eine zweite Zusatz-Umleitführung 70b, auf welcher das zweite Zusatzanstellrad 51b des Zusatzanstellräderpaares 50 abrollbar anliegt, wenn der Transportträger 3b umgeleitet wird.

Aus den Fig. 17 und 20 sind insbesondere folgende optionale Merkmale erkennbar:
Die Führungsschiene 2b umfasst eine erste Lauffläche K1 und eine zweite Lauffläche K2, welche mit gegenseitigem Horizontalabstand parallel zueinander verlaufen.
Die Führungsschiene 2b umfasst eine erste Gegenlauffläche L1 und eine zweite Gegenlauffläche L2, welche mit gegenseitigem Horizontalabstand parallel zueinander verlaufen.
Die erste Lauffläche K1 und die zweite Lauffläche K2 sind symmetrisch zu einer in Längsrichtung der Führungsschiene 2b verlaufenden Vertikalebene G angeordnet.
Die erste Gegenlauffläche L1 und die zweite Gegenlauffläche L2 sind ebenfalls symmetrisch zu der in Längsrichtung der Führungsschiene 2b verlaufenden Vertikalebene G angeordnet.
Die Räder des Transportträgers 3b sind doppelt ausgeführt und paarweise symmetrisch um die in Längsrichtung der Führungsschiene 2b verlaufende Vertikalebene G angeordnet. Insbesondere betrifft dies die doppelt ausgeführten und jeweils symmetrisch um die in Längsrichtung der Führungsschiene 2b verlaufende Vertikalebene G angeordneten Antriebsräder 45a, 45b, die doppelt ausgeführten und jeweils symmetrisch um die in Längsrichtung der Führungsschiene 2b verlaufende Vertikalebene G angeordneten Anstellräder 47a, 47b, die doppelt ausgeführten und jeweils symmetrisch um die in Längsrichtung der Führungsschiene 2b verlaufende Vertikalebene G angeordneten Stützräder 49a, 49b, die doppelt ausgeführten und jeweils symmetrisch um die in Längsrichtung der Führungsschiene 2b verlaufende Vertikalebene G angeordneten Zusatz-Anstellräder 51a, 51b sowie die doppelt ausgeführten und jeweils symmetrisch um die in Längsrichtung der Führungsschiene 2b verlaufende Vertikalebene G angeordneten Führungsräder 53a, 53b.
Die Antriebsräder 45a, 45b des ersten Antriebsräderpaares 46 und die Antriebsräder des zweiten Antriebsräderpaares sind alle im Eingriff mit der Führungsschiene 2b, wenn der Transportträger 3b auf der Führungsschiene 2b bewegt wird. Dadurch wird ein Kippen des Transportträgers 3b und in Folge ein Herunterfallen desselben von der Führungsschiene 2b wirkungsvoll vermieden.
Die Anstellräder 47a, 47b des ersten Anstellräderpaares 48 sind alle im Eingriff mit der Führungsschiene 2b, wenn der Transportträger 3b auf der Führungsschiene 2b bewegt wird. Dadurch wird ein Kippen des Transportträgers 3b und in Folge ein Herunterfallen desselben von der Führungsschiene 2b wirkungsvoll ebenfalls vermieden.
In einem Schaltzustand der Weiche 37b ist vom ersten Antriebsräderpaar 46 kurzfristig nur eines der Antriebsräder 45a, 45b im Eingriff mit dem Weichengrundkörper 61. Vom zweiten Antriebsräderpaar ist in einem Schaltzustand der Weiche 37b ebenfalls kurzfristig nur eines der Antriebsräder im Eingriff mit dem Weichengrundkörper 61.
In einem Schaltzustand der Weiche 37b ist vom ersten Anstellräderpaares 48 kurzfristig nur eines der Anstellräder 47a, 47b im Eingriff mit dem Weichengrundkörper 61.

In diesen kurzfristigen Zuständen liegen bei Geradeausfahrt beziehungsweise entlang des ersten Transportweges folgende Verhältnisse vor: Jeweils ein Antriebsrad 45a, 45b der Antriebsräderpaare 46 und ein Anstellrad 47a, 47b des ersten Anstellräderpaares 48 werden von den Stützrädern 49a, 49b der Stützräderpaare 50, welche sich auf erste Weichenleitfläche R und auf den Geradführungen 67a, 67b abstützen, und den Zusatz-Anstellrädern 51a, 51b des Zusatzanstellräderpaares 52, welche sich auf den Zusatz-Geradführungen 69a, 69b abstützen, gegen eine der Laufflächen K1, K2 beziehungsweise gegen eine der Gegenlaufflächen L1, L2 gedrückt. In den Fig. 16 bis 18 werden das zweite Antriebsrad 45b des ersten Antriebsräderpaares 46, das zweite Antriebsrad des zweiten Antriebsräderpaares und das zweite Anstellrad 47b des ersten Anstellräderpaares 48 gegen die zweite Lauffläche K2 beziehungsweise gegen die zweite Gegenlauffläche L2 gedrückt. Wird der Transportträger 3b um 180° gedreht auf die Führungsschiene 2b aufgesetzt, dann werden das erste Antriebsrad 45a des ersten Antriebsräderpaares 46, das erste Antriebsrad des zweiten Antriebsräderpaares und das erste Anstellrad 47a des ersten Anstellräderpaares 48 gegen die zweite Lauffläche K2 beziehungsweise gegen die zweite Gegenlauffläche L2 gedrückt. Der Kontakt der Stützräder 49a, 49b des ersten Stützräderpaares 50 und der Stützräder des zweiten Stützräderpaares mit den Stützflächen P1, P2 und der Kontakt der Zusatz-Anstellräder 51a, 51b des Zusatzanstellräderpaares 52 mit den Zusatz-Stützflächen Q1, Q2 verhindert in beiden Fällen ein Verkippen des Transportträgers 3b.

Bei Umleitfahrt beziehungsweise entlang des zweiten Transportweges liegen in diesen kurzfristigen Zuständen dagegen folgende Verhältnisse vor: Jeweils ein Antriebsrad 45a, 45b der Antriebsräderpaare 46 und ein Anstellrad 47a, 47b des ersten Anstellräderpaares 48 werden vom gegenüberliegenden Führungsrad 53a, 53b des ersten Führungsräderpaares 54 und vom gegenüberliegenden Führungsrad des zweiten Führungsräderpaares, welche sich auf der zweiten Weichenleitfläche S (Umleitfläche) abstützen, von den Stützrädern 49a, 49b der Stützräderpaare 50, welche sich auf den Umleitführungen 68a, 68b abstützen, sowie von den Zusatz-Anstellrädern 51a, 51b des Zusatzanstellräderpaares 52, welche sich auf den Zusatz-Umleitführungen 70a, 70b abstützen, gegen eine der Laufflächen K1, K2 beziehungsweise gegen eine der Gegenlaufflächen L1, L2 gedrückt beziehungsweise gezogen. In den Fig. 19 bis 21 werden das erste Antriebsrad 45a des ersten Antriebsräderpaares 46, das erste Antriebsrad des zweiten Antriebsräderpaares und das erste Anstellrad 47a des ersten Anstellräderpaares 48 solcherart gegen die erste Lauffläche K1 beziehungsweise gegen die erste Gegenlauffläche L1 gedrückt. Wird der Transportträger 3b um 180° gedreht auf die Führungsschiene 2b aufgesetzt, dann werden das zweite Antriebsrad 45b des ersten Antriebsräderpaares 46, das zweite Antriebsrad des zweiten Antriebsräderpaares und das zweite Anstellrad 47b des ersten Anstellräderpaares 48 gegen die erste Lauffläche K1 beziehungsweise gegen die erste Gegenlauffläche L1 gedrückt. Der Kontakt der Stützräder 49a, 49b des ersten Stützräderpaares 50 und der Stützräder des zweiten Stützräderpaares mit den Stützflächen P1, P2 und der Kontakt der Zusatz-Anstellräder 51a, 51b des Zusatzanstellräderpaares 52 mit den Zusatz-Stützflächen Q1, Q2 verhindert ebenfalls in beiden Fällen ein Verkippen des Transportträgers 3b.

Aus dem Gesagten wird erkennbar, dass die Stützräder 49a, 49b des ersten Stützräderpaares 50, die Stützräder des zweiten Stützräderpaares sowie die Führungsräder 53a, 53b des ersten Führungsräderpaares 54 und die Führungsräder des zweiten Führungsräderpaares doppelt ausgeführt sind und paarweise symmetrisch um die Vertikalebene G angeordnet sind, wobei in einem Schaltzustand der Weiche 37b kurzfristig jeweils nur ein Satz der besagten, paarweise am Transportträger 3b vorgesehenen Räder 49a, 49b, 53a, 53b im Eingriff mit dem Weichenelement 62 sind. Die erste Weichenleitfläche R, die zweite Weichenleitfläche S, die Stützflächen P1, P2 sowie die Zusatz-Stützflächen Q1, Q2 sind dabei lediglich im Bereich der Weiche 37b vorgesehen.

Wie aus den Figuren erkennbar ist, weisen der Transportträger 3b, die Führungsschiene 2b, und die Weiche 37b Seitenführungselemente auf, welche mit komplementär zueinander ausgebildeten Seitenführungsflächen versehen sind, um den Transportträger 3b während der Transportbewegung quer zur Längserstreckung der Führungsschiene 2b zu führen.

Beispielsweise können die Laufflächen K1, K2 und/oder die Gegenlaufflächen L1, L2 an der Führungsschiene 2b und/oder an der Weiche 37b als Seitenführungselement jeweils eine Seitenführungsfläche aufweisen. Insbesondere können die erste Lauffläche K1 und zweite Lauffläche K2 zu diesem Zweck an der Führungsschiene 2b und/oder an der Weiche 37b als zueinander geneigt verlaufende Laufflächen ausgebildet sein, so wie das bei der in den Fig. 10 bis 21 dargestellten Ausführungsform der Fall ist. Des Weiteren können die erste Gegenlauffläche L1 und zweite Gegenlauffläche L2 zu diesem Zweck an der Führungsschiene 2b und/oder an der Weiche 37b als zueinander geneigt verlaufende Gegenlaufflächen ausgebildet sein, so wie das bei der in den Fig. 10 bis 21 dargestellten Ausführungsform der Fall ist.

Denkbar ist weiterhin, dass die Antriebsräder 45a, 45b und/oder die Anstellräder 47a, 47b des Transportträgers 3b als Seitenführungselement jeweils eine Seitenführungsfläche aufweisen. In den dargestellten Beispielen ist dies durch kegelförmige Ausbildung der Antriebsräder 45a, 45b und durch kegelförmige Ausbildung der Anstellräder 47a, 47b erreicht.

Die Hängefördervorrichtung 1b kann auch bei dieser Ausführungsform eine Vorschubvorrichtung wie zuvor beschrieben aufweisen. Diese kann ebenso eine parallel zur Führungsschiene 2b verlaufende Zahnstange sowie ein Zahnrad des Transportträgers 3b aufweisen, das mit der Zahnstange kämmt und mit dem Motor 11b gekoppelt ist. Um ein Wenden des Transportträgers 3b zu ermöglichen, können beidseitige Zahnräder vorgesehen sein. Diesbezüglich wird auf die Fig. 9 verwiesen. Die dort offenbarte Lehre ist analog auf das in den Fig. 10 bis 21 dargestellte Ausführungsbeispiel anwendbar.

Insbesondere ist die Vorschubvorrichtung einem Transportabschnitt der Führungsschiene 2b zugeordnet, welcher zwischen einem ersten Höhenniveau und einem zweiten Höhenniveau, insbesondere von dem ersten Höhenniveau zum zweiten Höhenniveau, verläuft, wobei die Vorschubvorrichtung mit dem Transportträger 3b in einer Wirkverbindung steht und der Transportträger 3b zumindest während der Transportbewegung zwischen den unterschiedlichen Höhenniveaus durch die Vorschubvorrichtung mit einer Vorschubkraft beaufschlagt wird. Durch die Vorschubvorrichtung sind höhere Antriebskräfte übertragbar, wodurch sich der Transportträger 3b auch auf relativ steilen Transportabschnitten nach oben und unten bewegen kann. Die Vorschubkraft kann zusätzlich zur Antriebskraft wirken. Alternativ ist denkbar, dass der Antrieb im Transportabschnitt weggeschaltet wird und nur die Vorschubkraft auf den Transportträger 3b wirkt.

Vorteilhaft ist es, wenn die Antriebsräder 45a, 45b und die Zahnräder gekoppelt sind. Insbesondere können die Antriebsräder 45a, 45b und die Zahnräder drehfest miteinander gekoppelt sein. Des Weiteren können die Antriebsräder 45a, 45b und die Zahnräder auf einer gemeinsamen Antriebswelle befestigt und darauf axial zueinander versetzt angeordnet sein, so wie das in dem in Fig. 9 dargestellten Beispiel der Fall ist.

Alternativ kann die Vorschubeinrichtung beispielsweise auch durch einen Bolzen gebildet sein, welcher auf einem parallel zur Führungsschiene 2b verlaufenden Zugmitteltrieb befestigt ist und den Transportträger 3b formschlüssig hintergreifen kann.

An dieser Stelle wird angemerkt, dass die Führungsschiene 2b auch in diesem Ausführungsbeispiel außenliegende Schienenleitflächen M1, M2 sowie nicht explizit bezeichnete innenliegende Schienenleitflächen aufweist, auf denen in diesem Ausführungsbeispiel keine Räder des Transportträgers 3b abrollen. Es wäre aber denkbar, dass der Transportträger 3b entsprechende Räder aufweist, um diesen zu stützen und/oder zu stabilisieren. Insbesondere können diese dann von Vorteil sein, wenn die Antriebsräder 45a, 45b und die Anstellräder 51a, 51b zylindrisch ausgebildet und die Laufflächen K1, K2 und die Gegenlaufflächen L1, L2 horizontal ausgerichtet sind.

Weiterhin wird angemerkt, dass die Antriebsräder 45a, 45b und die Anstellräder 47a, 47b auch bei dieser Ausführungsform kegelige Laufflächen aufweisen, um auf den schrägen Laufflächen K1, K2 und die Gegenlaufflächen L1, L2 abrollen zu können, was jedoch keine zwingende Bedingung ist. Denkbar wäre auch in diesem Fall, dass die Antriebsräder 45a, 45b und die Anstellräder 47a, 47b zylindrisch ausgebildet sind und entsprechend schräg gestellte Drehachsen aufweisen.

### Ausführungsvariante 3 (Transportträger haftend auf Tragstruktur)

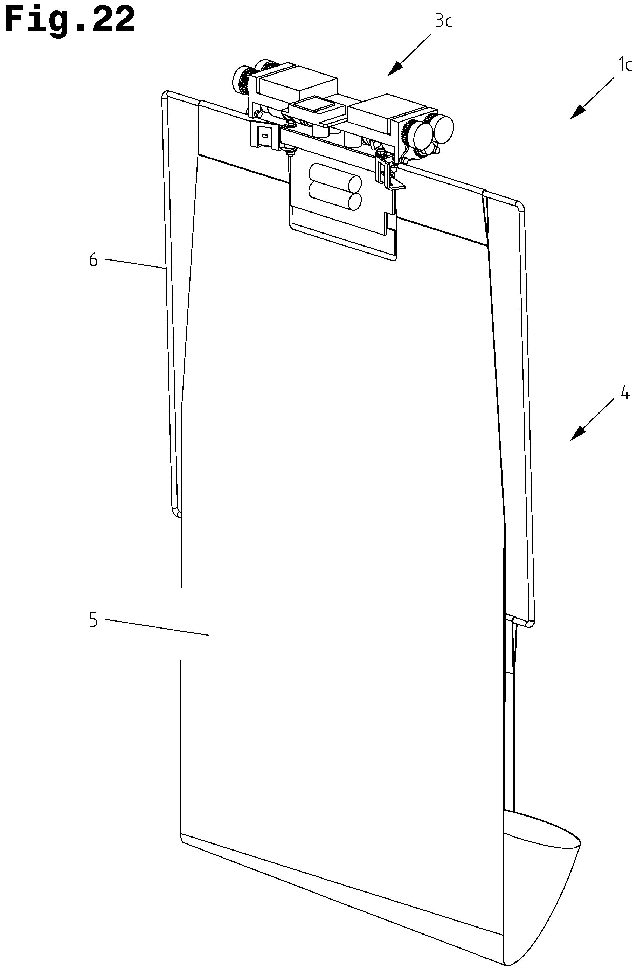

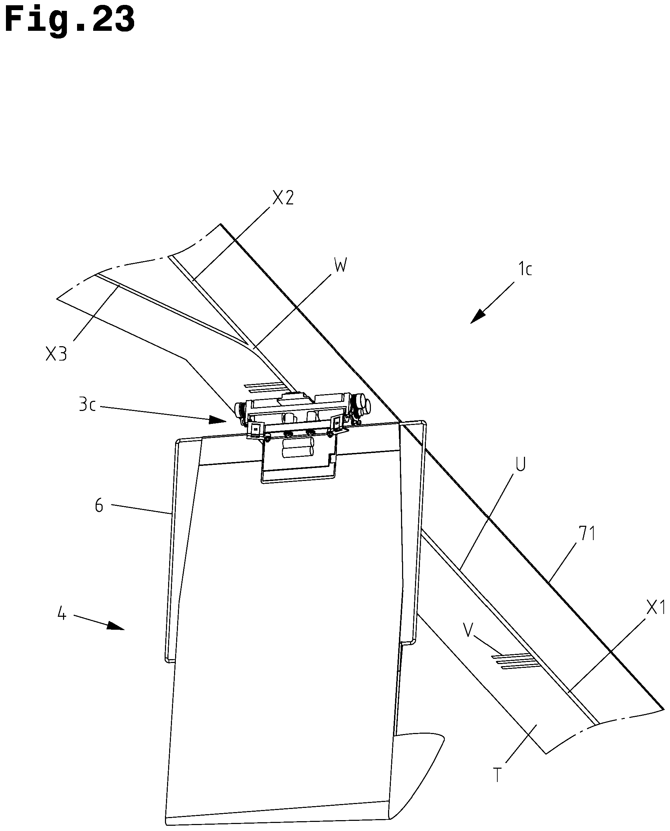

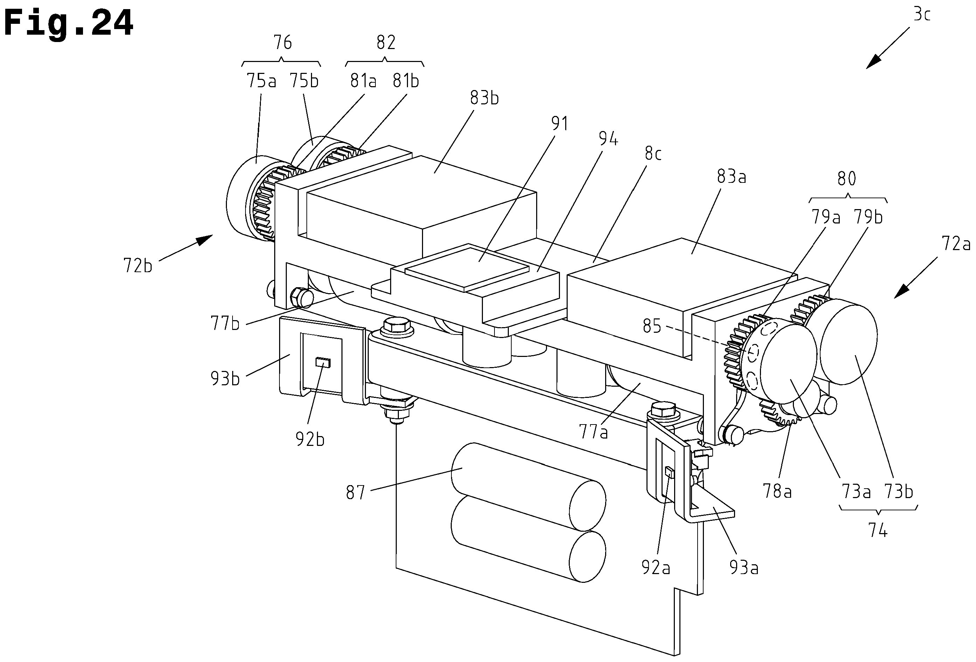

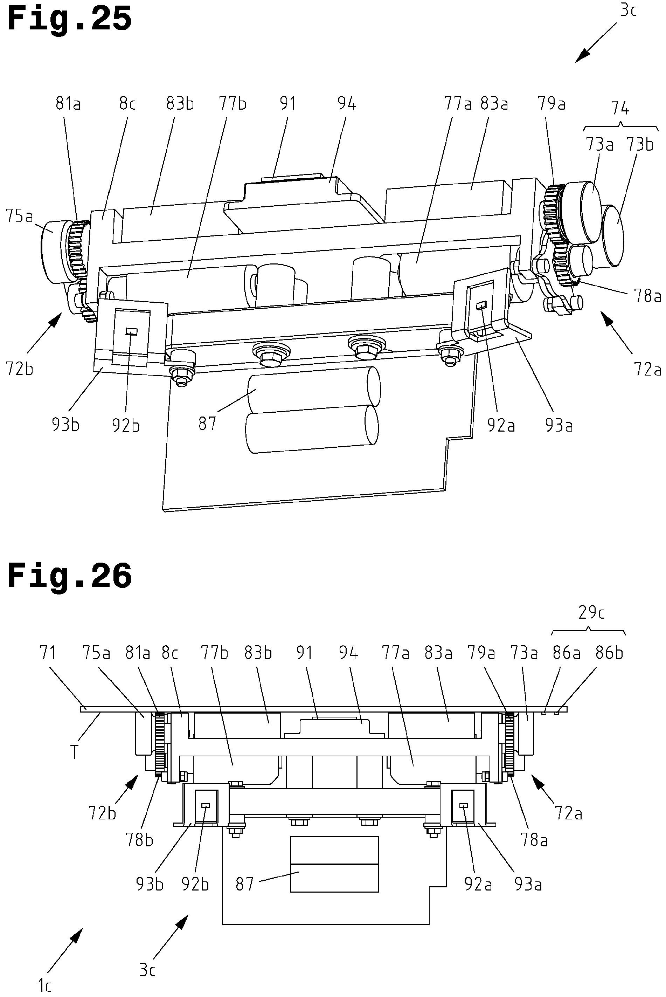

Die Fig. 22 bis 26 zeigen nun eine weitere Ausführungsform einer Hängefördervorrichtung 1c für ein Kommissioniersystem, beziehungsweise eines Transportträgers 3c zum Transport von Hängeware 4. Die Fig. 22 zeigt den Transportträger 3c mit einer Hängeware 4 von schräg oben, die Fig. 23 zeigt die Hängefördervorrichtung 1c von schräg unten, die Fig. 24 zeigt den Transportträger 3c in detaillierter Darstellung von schräg oben, die Fig. 25 zeigt den Transportträger 3c in detaillierter Darstellung von schräg unten und die Fig. 26 zeigt den Transportträger 3c beziehungsweise die Hängefördervorrichtung 1c in detaillierter Darstellung in Vorderansicht.

Die Hängefördervorrichtung 1c umfasst eine Tragstruktur 71, welche eine Fahrfläche T ausbildet, und einen Transportträger 3c zum Transport von Hängeware 4, welcher einen Basiskörper 8c ausbildet. Der Basiskörper 8c bildet eine erste Transportträgerseite und eine, insbesondere der ersten Transportträgerseite gegenüberliegende, zweite Transportträgerseite aus. Die Hängeware 4 umfasst in diesem Beispiel wiederum eine Transporttasche mit einem Taschenkörper 5, welcher an einem Bügel 6 befestigt ist und für die Aufbewahrung einer hier nicht explizit dargestellten Ware vorgesehen ist. Alternativ kann die Hängeware 4 auch durch ein Kleidungsstück gebildet sein, das mit Hilfe eines Kleiderbügels am Transportträger 3c hängt.

Der Transportträger 3c kann - so wie das in dem in Fig. 23 dargestellten Beispiel der Fall ist - einen Tragkörper mit einer Aufnahme zum Aufhängen der Hängeware 4 aufweisen. Die Aufnahme kann eine vollständig umschlossene Aufnahmeöffnung zum Einhängen des Bügels 6 der Hängeware 4 aufweisen. Alternativ könnte auch ein offener Aufnahmeabschnitt (Haken) zum Einhängen oder Aufhängen des Bügels 6 der Hängeware 4 vorgesehen sein. Der Tragkörper kann insbesondere über eine Verbindungsvorrichtung auswechselbar am Basiskörper 8a befestigt sein. Die dabei im Zusammenhang mit der Fig. 1 offenbarte technische Lehre ist uneingeschränkt auch auf den Transportträger 3c anwendbar.

Weiterhin umfasst der Transportträger 3c zwei Antriebsvorrichtungen 72a, 72b zum Bewegen des Transportträgers 3c auf der Fahrfläche T sowie einen Haftkrafterzeuger 83a, 83b, durch welchen der Transportträger 3c an der Tragstruktur 71 und insbesondere an der Fahrfläche T bewegbar haftet.

Die Antriebsvorrichtungen 72a, 72b umfassen jeweils Antriebsorgane, welche an der Fahrfläche T anliegen, und mehrere elektrisch betriebene Motoren 77a, 77b, die am Basiskörper 8c angeordnet sind. Insbesondere sind die Antriebsorgane in diesem Beispiel durch Antriebsräder 73a, 73b, 75a, 75b gebildet. Im gezeigten Beispiel umfasst ein erstes Antriebsorgan auf der ersten Transportträgerseite ein erstes Antriebsrad 73a und ein zweites Antriebsrad 73b. Darüber hinaus umfasst ein zweites Antriebsorgan auf der zweiten Transportträgerseite ein erstes Antriebsrad 75a und ein zweites Antriebsrad 75b.

Somit befinden sich auf der ersten Transportträgerseite (rechts) zwei Antriebsräder 73a, 73b eines ersten Antriebsräderpaares 74, welche das erste Antriebsorgan bilden, und auf der zweiten Transportträgerseite (links) zwei Antriebsräder 75a, 75b eines zweiten Antriebsräderpaares 76, welche das zweite Antriebsorgan bilden. Die Antriebsräder 73a, 73b des ersten Antriebsorgans sind mit einem ersten Motor 77a der elektrisch betriebenen Motoren 77a, 77b gekoppelt. Analog dazu sind die Antriebsräder 75a, 75b des zweiten Antriebsorgans mit einem zweiten Motor 77b der elektrisch betriebenen Motoren 77a, 77b gekoppelt.

In diesem Beispiel sind also zwei Motoren 77a, 77b vorgesehen. Denkbar wäre aber auch, dass die Antriebsorgane 73a, 73b, 75a, 75b mit einem einzigen Motor gekoppelt sind.

In diesem Ausführungsbeispiel erfolgt die Kopplung der Antriebsorgane 73a, 73b, 75a, 75b mit den elektrisch betriebenen Motoren 77a, 77b über ein auf dem jeweiligen Motor 77a, 77b sitzendes Motorritzel 78a, 78b sowie über Zahnräder 79a, 79b eines ersten Zahnradpaares 80 und Zahnräder 81a, 81b eines zweiten Zahnradpaares 82. Konkret sind das erste Zahnrad 79a des ersten Zahnradpaares 80 koaxial mit dem ersten Antriebsrad 73a des ersten Antriebsräderpaares 74, das zweite Zahnrad 79b des ersten Zahnradpaares 80 koaxial mit dem zweiten Antriebsrad 73b des ersten Antriebsräderpaares 74, das erste Zahnrad 81a des zweiten Zahnradpaares 82 koaxial mit dem ersten Antriebsrad 75a des zweiten Antriebsräderpaares 76 und das zweite Zahnrad 81b des zweiten Zahnradpaares 82 koaxial mit dem zweiten Antriebsrad 75b des zweiten Antriebsräderpaares 76 angeordnet.

Im Gegensatz zu den bisher dargestellten Beispielen erfolgt die Kopplung der Antriebsräder 73a, 73b, 75a, 75b mit den Motoren 77a, 77b über Zahnradgetriebe. Denkbar wäre auch hier wieder die Verwendung eines Zugmittelantriebs, so wie das in den in den Fig. 1 bis 21 dargestellten Beispielen der Fall ist. Umgekehrt wäre auch in den in den Fig. 1 bis 21 dargestellten Beispielen die Verwendung von Zahnradgetrieben anstelle der dort verwendeten Zugmittelantriebe möglich.

Obwohl der Antrieb des Transportträgers 3c in dem in den Fig. 22 bis 26 gezeigten Beispiel durch Motoren 77a, 77b erfolgt, die am Transportträger 3c angeordnet sind, wäre auch denkbar, dass der Antrieb des Transportträgers 3c mittels des linearmotorischen Prinzips erfolgt. Beispielsweise können entlang der Fahrfläche T Spulen und am Transportträger 3c eine Kurzschlussspule, eine fremderregte Spule oder ein Permanentmagnet vorgesehen sein, sodass die Anordnung als linearer Asynchronmotor beziehungsweise linearer Synchronmotor wirkt.

Der Transportträger 3c weist weiterhin einen oder mehrere Haftkrafterzeuger auf, welche in dem in den Fig. 22 bis 26 gezeigten Beispiel zwei Permanentmagneten 83a, 83b umfassen. Die Permanentmagneten 83a, 83b beziehungsweise Haftkrafterzeuger sind am Basiskörper 8c zwischen der ersten Transportträgerseite und zweiten Transportträgerseite angeordnet.

Die Tragstruktur 71 bildet darüber hinaus die Fahrfläche T aus und ist vorzugsweise aus einem (ferro)magnetischen Werkstoff hergestellt ist. Beispielsweise kann die Tragstruktur 71 beziehungsweise die Fahrfläche T aus einem Stahlblech gefertigt sein. Mit Hilfe der Permanentmagneten 83a, 83b haftet der Transportträger 3c kopfüber an der Fahrfläche T, wobei der Transportträger 3c auf der Fahrfläche T bewegbar ist.

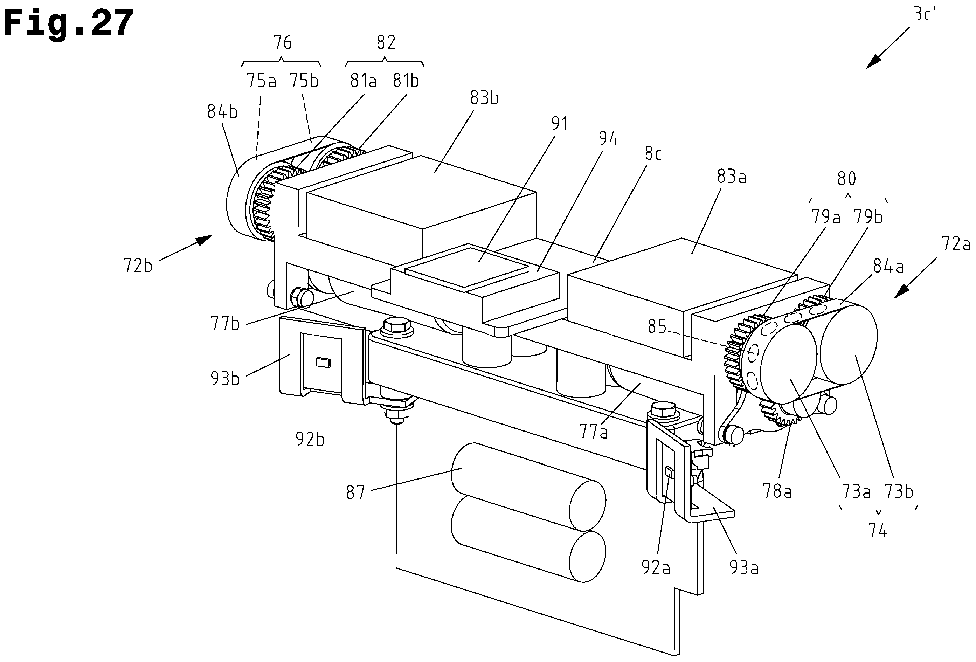

In dem in den Fig. 22 bis 26 gezeigten Beispiel sind die Antriebsorgane durch Antriebsräder 73a, 73b, 75a, 75b gebildet. Dies ist aber nicht die einzig vorstellbare Möglichkeit. Denkbar wäre auch, dass die Antriebsorgane ein auf der ersten Transportträgerseite um die Antriebsräder 73a, 73b des ersten Antriebsräderpaares 74 geführtes, erstes endlos umlaufendes Raupenband 84a und ein auf der zweiten Transportträgerseite um die Antriebsräder 75a, 75b des zweiten Antriebsräderpaares 76 geführtes, zweites endlos umlaufendes Raupenband 84b umfassen, so wie das in dem in Fig. 27 dargestellten Beispiel der Fall ist.

Analog wäre auch denkbar, dass anstelle der Raupenbänder 84a, 84b Ketten vorgesehen sind. Die Antriebsorgane sind dann durch eine auf der ersten Transportträgerseite um die Antriebsräder 73a, 73b des ersten Antriebsräderpaares 74 geführte, erste endlos umlaufende Kette und durch eine auf der zweiten Transportträgerseite um die Antriebsräder 75a, 75b des zweiten Antriebsräderpaares 76 geführte, zweite endlos umlaufende Kette gebildet.

In dem in den Fig. 22 bis 27 gezeigten Beispiel umfassen die Haftkrafterzeuger Permanentmagneten 83a, 83b. Dies ist aber nicht die einzig vorstellbare Möglichkeit. Denkbar wäre auch, dass die Haftkrafterzeuger Haftlamellen nach dem Gecko-Prinzip, Saugnäpfe und/oder ein Klettband einer Klettverbindung und somit beispielsweise Haken oder Pilzköpfe einer Klettverbindung umfassen, die am Außenumfang der Antriebsorgane angeordnet sind, also zum Beispiel umfangsseitig auf den Antriebsrädern 73a, 73b, 75a, 75b oder außen auf den Raupenbändern 84a, 84b oder Ketten. In der Fig. 24 sind optionale Saugnäpfe 85 durch strichlierte Kreise auf dem Antriebsrad 73a und in der Fig. 27 durch strichlierte Kreise auf dem Raupenband 84a angedeutet. In der Realität ist die Anwendung von Saugnäpfen 85 natürlich nicht auf das Antriebsrad 73a und das Raupenband 84a beschränkt. So können diese alternativ oder zusätzlich auch auf den anderen Antriebsrädern 73b, 75a und 75b und/oder auf dem Raupenband 84b angeordnet sein. Im Falle einer Klettverbindung kann am Außenumfang der Antriebsorgane ein Teil eines Klettbands angeordnet sein. Der andere Teil der Klettverbindung befindet sich dann auf der Fahrfläche T.

Bei Anwendung von Haftlamellen, Saugnäpfen oder einer Klettverbindung können die Permanentmagneten 83a, 83b weggelassen oder zusätzlich zu den genannten Haftkrafterzeugern vorgesehen werden.

Das in den Fig. 22 bis 27 gezeigte Ausführungsbeispiel der Hängefördervorrichtung 1c beziehungsweise des Transportträgers 3c umfasst wiederum ein optionales Energieversorgungssystem 29c, welches einen Isolator und freiliegende elektrische Leiter 86a, 86b aufweist, welche entlang der Fahrfläche T verlaufen und auf dieser befestigt sein können (in Fig. 26 explizit dargestellt). Der Transportträger 3c kann zudem Stromabnehmer aufweisen (in den Fig. 22 bis 27 nicht dargestellt), welche elektrisch in Kontakt mit den elektrischen Leitern 86a, 86b stehen und elektrisch mit den Motoren 77a, 77b verbunden sind. Die Stromabnehmer können auch in diesem Beispiel als Schleifkontakte ausgebildet sein, die bei Bewegung des Transportträgers 3c auf den elektrischen Leitern 86a, 86b gleiten/schleifen. Die Stromabnehmer können aber auch rad- oder rollenförmig ausgebildet sein und auf den elektrischen Leitern 86a, 86b abrollen.

Das Energieversorgungssystem 29c kann insbesondere analog zu den in den Fig. 1 bis 2 und 4 bis 21 dargestellten Energieversorgungssystemen 29a, 29b ausgebildet sein. Die dazu offenbarte technische Lehre ist daher sinngemäß auch auf das Energieversorgungssystem 29c übertragbar.

Anstelle einer kontaktbehafteten Energieübertragung könnte auch eine kontaktlose Energieübertragung mit Hilfe eines induktiven Energieversorgungssystems vorgesehen sein. Dazu wird auf die Fig. 3 und die dazu offenbarte technische Lehre verwiesen, die sinngemäß und uneingeschränkt auch auf die in den Fig. 22 bis 27 offenbarte Ausführungsvariante anwendbar ist.

Wenn die Haftkrafterzeuger Permanentmagneten 83a, 83b umfassen und die Tragstruktur 71 aus einem (ferro)magnetischen Werkstoff besteht, ist es von Vorteil, wenn die elektrischen Leiter 86a, 86b unterhalb der Tragstruktur 71 angeordnet sind, so wie das in der Fig. 26 dargestellt ist. Denkbar wäre aber auch, dass die elektrischen Leiter 86a, 86b über der Tragstruktur 71 angeordnet sind, konkret über einem isolierenden Bereich der Tragstruktur 71 oder auch wenn die Tragstruktur 71 ganz aus einem isolierenden Werkstoff gefertigt ist. In diesem Fall sollten als Haftkrafterzeuger Haftlamellen, Saugnäpfe 85 und/oder eine Klettverbindung vorgesehen sein.

In einer Ausführungsvariante kann wiederum vorgesehen sein, dass das Energieversorgungssystem 29c nur auf geraden Streckenabschnitten der Fahrfläche T vorgesehen ist. Dadurch kann das Energieversorgungssystem 29c einfacher gestaltet sein. In Kurven und im Bereich von Abzweigungen können die Motoren 77a, 77b bei dieser Ausführungsform wieder aus einem Energiespeicher 87 versorgt werden, wie dies bereits im Zusammenhang mit den anderen Ausführungsvarianten beschrieben wurde. Ist die Fahrfläche T relativ schmal ausgebildet, so kann diese auch als "Fahrbahn" angesehen und bezeichnet werden.

Dazu kann vorgesehen sein, dass der Transportträger 3c und/oder die Transporttasche einen mit den Motoren 77a, 77b elektrisch verbundenen Energiespeicher 87 und/oder eine mit den Motoren 77a, 77b elektrisch verbundene Energiequelle aufweist. Die in den Fig. 22 bis 27 angegebene Position des Energiespeichers 87 ist nicht zwingend. Stattdessen kann der Energiespeicher 87 beispielsweise auch in ein Gehäuse einer Steuereinheit eingebaut sein kann (siehe hierzu auch Fig. 29). Insbesondere sind die Motoren 77a, 77b über Schaltelemente oder Steuerelemente mit dem Energiespeicher 87 verbunden. Der Energiespeicher 87 kann beispielsweise als Akkumulator ausgebildet sein. Zusätzlich oder alternativ kann ein Solarmodul als Energiequelle vorgesehen sein.

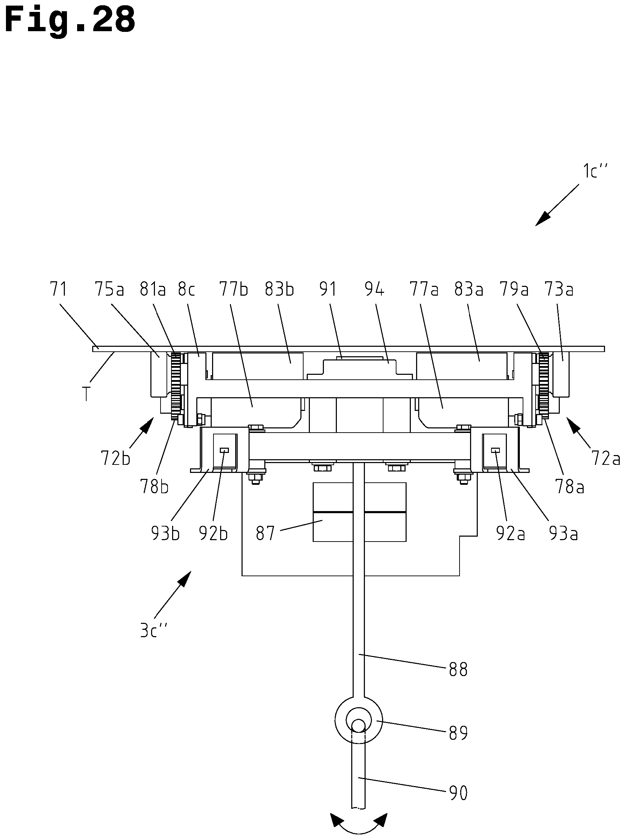

Denkbar ist weiterhin, dass die Fahrfläche T nicht horizontal ausgerichtet ist, so wie das in den Fig. 23 und 26 dargestellt ist, sondern schräg verläuft oder sogar vertikal ausgerichtet ist, also im Prinzip eine Wand ausbildet. An dieser Wand können die an der Fahrfläche T haftenden Transportträger 3c ebenfalls fahren. Zum Beispiel könnte auf diese Weise eine platzsparende Lagerfläche für die Transportträger 3c gebildet werden. Insbesondere in diesem Zusammenhang ist es von Vorteil, wenn der Transportträger 3c eine Gelenkanordnung umfasst, welche ein Ausschwenken der Hängeware 4 relativ zum Basiskörper 8c um mehr als 45° und insbesondere um zumindest 90° quer zur Bewegungsrichtung des Transportträgers 3c ermöglicht. In diesem Zusammenhang offenbart die Fig. 28 einen Transportträger 3c" in Vorderansicht, welcher ähnlich ausgebildet ist wie der Transportträger 3c der Fig. 22 bis 26. Im Unterschied dazu umfasst der Transportträger 3c" eine Verlängerungsstange 88 mit einer daran angeordneten Öse 89 und einem darin drehbar gelagerten Haken 90 einer Hängeware 4. Diese kann aufgrund der Aufhängung sowohl in Längsrichtung als auch in Querrichtung (siehe den Doppelpfeil) ausschwenken. Durch eine entsprechende Wahl der Länge der Verlängerungsstange 88 kann insbesondere der seitliche Ausschwenkwinkel bestimmt werden.

### Fahrsteuerung des Transportträgers

Die Hängefördervorrichtung 1c weist noch weitere Merkmale auf, deren Funktion im Folgenden näher erläutert werden. Konkret betrifft dies eine Fahrmarkierung U und eine Steuermarkierung V, die auf der Fahrfläche T angebracht sind, sowie einen auf dem Transportträger 3c angeordneten Fahrflächensensor 91. Darüber hinaus kann der Transportträger 3c mehrere, insbesondere zwei Abstandssensoren 92a, 92b umfassen, die mit Hilfe von Sensorhaltern 93a, 93b am Basiskörper 8c befestigt sind. Aus der Fig. 23 ist auch erkennbar, dass die Fahrmarkierung U in einen Weichenabschnitt W und drei Fahrstrecken X1..X3 gegliedert ist, analog zu den Weichenabschnitten E, N und Schienenstrecken F1..F3, 01..03 der Hängefördervorrichtungen 1a, 1b.

In diesem Zusammenhang offenbart die Fig. 29 auch ein beispielhaftes, elektrisches Blockschaltbild eines Transportträgers 3a..3c". Der Transportträger 3a..3c" umfasst eine Steuereinheit 94, mit einer als Mikrocontroller ausgebildeten Fahrsteuerung 95, einem damit verbundenen Speicher 96 (Daten- und/oder Programmspeicher), einer mit der Fahrsteuerung 95 verbundenen Leistungselektronik 97 und einem mit der Fahrsteuerung 95 verbundenen Kommunikationsmodul 98. Die Fahrsteuerung 95 beziehungsweise das Kommunikationsmodul 98 kann zur optischen, funkbasierten oder drahtgebundenen Kommunikation ausgebildet sein, insbesondere zur Kommunikation über das Energieversorgungssystem 29 entsprechend der Powerline-Communication-Technologie. Darüber hinaus kann die Steuereinheit 94 ein Energiemanagement-Modul 99 und den damit verbundenen Energiespeicher 87 umfassen. An die Fahrsteuerung 95 können darüber hinaus der Fahrflächensensor 91 und der Abstandssensor 92 (oder sofern zwei Abstandssensoren 92a, 92b vorhanden sind, beide Abstandssensoren 92a, 92b) angeschlossen sein. An die Leistungselektronik 97 sind die beiden Motoren 77a, 77b (oder im Falle nur eines Motors 11a, 11b nur der Motor 11a, 11b) angeschlossen. Darüber hinaus sind das Energiemanagement-Modul 99 und das Kommunikationsmodul 98 mit dem Energieversorgungssystem 29 verbunden oder Teil desselben. An dieser Stelle wird angemerkt, dass sich das in der Fig. 29 dargestellte Blockschaltbild sowie die Funktion der Steuereinheit 94 nicht nur auf den Transportträger 3c beziehen, sondern auf alle Bauarten von Transportträgern, somit insbesondere auch auf die Transportträger 3a..3c".

Die Funktion des solcherart ausgestatteten Transportträgers 3a..3c" ist nun wie folgt:
Wie erwähnt weist der Transportträger 3a..3c" die Fahrsteuerung 95 und den damit verbundenen beschreib- und auslesbar ausgebildeten Speicher 96 auf. Insbesondere kann die Fahrsteuerung 95 dazu ausgebildet sein, eine Bewegung des Transportträgers 3a..3c" auf der Tragstruktur 71 beziehungsweise den als Tragstruktur fungierenden Führungsschienen 2a..2b auf Basis von im Speicher 96 hinterlegten beziehungsweise gespeicherten Bewegungsdaten zu beeinflussen beziehungsweise zu steuern oder zu regeln.

Beispielsweise kann die Fahrsteuerung 95 des Transportträgers 3a..3c" zur Regelung einer Geschwindigkeit des Transportträgers 3a..3c" ausgebildet sein. Dazu werden die Motoren 11a, 11b, 77a, 77b von der Fahrsteuerung 95 entsprechend angesteuert. Konkret steuert die Fahrsteuerung 95 dabei die mit den Motoren 11a, 11b, 77a, 77b verbundene Leistungselektronik 97 an, welche die für den Betrieb der Motoren 11a, 11b, 77a, 77b nötige elektrische Energie über das Energiemanagement-Modul 99 vom Energieversorgungssystem 29 beziehungsweise vom Energiespeicher 87 bezieht.

Der Fahrflächensensor 91 kann dazu verwendet werden, den Transportträger 3c..3c" entlang der Fahrmarkierung U zu führen. Bei der Fahrmarkierung U kann es sich beispielsweise um eine auf die Fahrfläche T aufgemalte, aufgedruckte oder aufgeklebte Linie handeln, die eine andere Helligkeit und/oder Farbe als die übrige Fahrfläche T aufweist. Beispielsweise kann die Fahrmarkierung U schwarz auf hellem Grund sein. In diesem Fall ist der Fahrflächensensor 91 als optischer Fahrflächensensor ausgebildet, beispielsweise als Sensor-Array mehrerer optischer Sensoren. Durch Auswertung des Sensorsignals können Richtungskorrekturen oder Richtungsänderungen für den Transportträger 3c..3c" abgeleitet werden. Eine Richtungskorrektur oder Richtungsänderung wird durch unterschiedliche Ansteuerung der Motoren 77a, 77b ausgeführt. Unterschiedliche Drehzahlen führen dazu, dass der Transportträger 3c..3c" eine Kurve fährt.

Denkbar wäre auch, dass die Fahrmarkierung U als Magnetstreifen und der Fahrflächensensor 91 als Magnet-Sensor (insbesondere als Hall-Sensor) ausgebildet sind. Auch auf diese Weise kann der Transportträger 3c..3c" entlang der Fahrmarkierung U geführt werden.

Der Abstandssensor 92 (oder die Abstandssensoren 92a, 92b) kann zum Messen eines Abstands zu einem anderen, vorausfahrenden Transportträger 3a..3c" ausgebildet und mit der Fahrsteuerung 95 verbunden sein. Die Fahrsteuerung 95 kann hierbei dazu ausgebildet sein, einen Abstand zu dem anderen, vorausfahrenden Transportträger 3a..3c auf Basis des vom Abstandssensor 92 (oder von den Abstandssensoren 92a, 92b) gemessenen Abstands zu regeln. Beispielsweise kann der Abstandssensor 92, 92a, 92b als Ultraschallsensor ausgebildet sein.

Die beiden Abstandssensoren 92a, 92b sind in diesem Beispiel vorteilhaft in einem spitzen Winkel (mehr als 0° und kleiner als 90°) zueinander angeordnet. Dadurch kann der Abstand zu einem vorausfahrenden Transportträger 3a..3c" auch in Kurven oder im Weichenabschnitt E, N, W gut gemessen werden. Dabei wird jeweils das Signal des in das Kurveninnere weisenden Abstandssensors 92a, 92b bevorzugt oder ausschließlich ausgewertet. Ganz allgemein wäre aber auch ein Winkel von mehr als 0° und kleiner als 180° zwischen den beiden Abstandssensoren 92a, 92b möglich.

Die Fahrsteuerung 95 des Transportträgers 3a..3c" kann also zur Regelung einer Geschwindigkeit des Transportträgers 3a..3c" und/oder zur Regelung eines Abstands zu einem anderen Transportträger 3a..3c" ausgebildet sein.

Weiterhin ist denkbar, dass die Bewegung des Transportträgers 3a..3c" auf der Tragstruktur 71 beziehungsweise auf den Führungsschienen 2a..2b mit Hilfe der Steuermarkierung V beeinflusst wird. Diese kann ebenfalls optisch oder magnetisch auf die Fahrfläche T oder auf den Führungsschienen 2a..2b aufgebracht werden und vom Fahrflächensensor 91 oder einem anderen dafür vorgesehenen Sensor gelesen werden, wobei dieselben Erwägungen wie für die Fahrmarkierung U gelten.

Beispielsweise kann die Steuermarkierung V bedeuten, dass der Transportträger 3a..3c" seine Geschwindigkeit bei Erfassung der Steuermarkierung V ändern (also erhöhen oder verringern) soll, den Abstand zu einem vorausfahrenden Transportträger 3c..3c" ändern (also erhöhen oder verringern) soll, anhalten soll oder seine Fahrt beim Weichenabschnitt E, N, W ausgehend von der ersten Fahrstrecke F1, O1, X1 entlang der zweiten Fahrstrecke F2, O2, X2 oder entlang der dritten Fahrstrecke F3, O3, X3 fortzusetzen soll.

Das Einstellen einer Zielgeschwindigkeit des Transportträgers 3a..3c" oder eines Zielabstands des Transportträgers 3a..3c" zu einem anderen Transportträger 3a..3c" kann also anhand einer Steuermarkierung V bewirkt werden, welche im Bereich der Tragstruktur 71 beziehungsweise auf den Führungsschienen 2a..2b durch den Transportträger 3a..3c" erfassbar angeordnet ist.

Der Fahrflächensensor 91 des Transportträgers 3c..3c" ist in diesem Beispiel zusammenfassend ein mit der Fahrsteuerung 95 verbundenes, lichtempfindliches Element, mit dem eine auf der Tragstruktur 71 angebrachte optische Fahrmarkierung U und/oder optische Steuermarkierung V lesbar ist, mit welcher eine Bewegung des Transportträgers 3c..3c" auf der Tragstruktur 71 beeinflussbar ist. Die optische Markierung U, V kann als Fahrlinie oder Fahrmarkierung U auf der Fahrfläche T der Tragstruktur 71 ausgebildet sein, sie kann aber auch als Steuerelement oder Steuermarkierung V für den Transportträger 3c..3c" ausgebildet sein und als Abbiegepunkt wirken, wenn die Steuermarkierung V die Fahrtrichtung des Transportträgers 3c..3c" beeinflusst, oder als Haltepunkt, wenn die Steuermarkierung V das Anhalten des Transportträgers 3c..3c" bewirkt. Die optische Steuermarkierung V kann insbesondere auch als Barcode oder QR-Code ausgebildet sein. Zudem kann die optische Steuermarkierung V auch länger ausgebildet sein und auf mehrere aufeinanderfolgenden Transportträger 3c..3c" wirken.

Denkbar wäre weiterhin, dass die Fahrmarkierung U und/oder die Steuermarkierung V nicht fix auf der Tragstruktur T aufgebracht ist, sondern als steuerbare Lichtquelle ausgebildet ist, wodurch ein Steuerbefehl von der Lichtquelle an den Fahrflächensensor 91 oder einen anderes lichtempfindlichen Element des Transportträgers 3c..3c" und damit von der Tragstruktur 71 an die Fahrsteuerung 95 des Transportträgers 3c..3c" übertragbar ist. Beispielsweise kann die steuerbare Lichtquelle auf der Tragstruktur 71 mehrere individuell aktivierbare und matrixförmig angeordnete Leuchtpunkte aufweisen. Durch die vorgeschlagenen Maßnahmen sind die an den Transportträger 3c..3c" übertragenen Steuerbefehle nicht fix, sondern können flexibel an eine bestimmte Situation angepasst werden.

Beispielsweise kann die Steuermarkierung V wahlweise dazu eingesetzt werden, die Geschwindigkeit des Transportträgers 3a..3c" bedarfsweise zu ändern, den Abstand zu einem vorausfahrenden Transportträger 3c..3c" bedarfsweise zu ändern, den Transportträger 3c..3c" bedarfsweise anzuhalten und/oder die Fahrtrichtung des Transportträger 3c..3c" beim Weichenabschnitt W bedarfsweise zu steuern. Auch die Fahrmarkierung U kann die Fahrtrichtung des Transportträger 3c..3c" flexibel beeinflussen. Durch entsprechende Vorgabe der Geschwindigkeit des Transportträgers 3a..3c" und des Abstandes des Transportträgers 3a..3c" zu einem vorausfahrenden Transportträger 3c..3c" kann auch ein bestimmter Durchsatz von Transportträgern 3c..3c" vorgegeben beziehungsweise erreicht werden. Beispielsweise kann die besagte Geschwindigkeit und der besagte Abstand in Kurven verringert und auf geraden Abschnitten erhöht werden. Der besagte Durchsatz kann dabei insbesondere konstant gehalten werden.

An dieser Stelle wird angemerkt, dass sich die oben angeführte technische Lehre zur Steuermarkierung V uneingeschränkt auch auf die Transportträger 3a..3b bezieht. Demgemäß können die Transportträger 3a..3b einen entsprechenden Sensor zur Erfassung einer solchen Steuermarkierung V aufweisen.

Denkbar ist nicht nur die Ansteuerung des Transportträgers 3c..3c" durch eine Fahrmarkierung U und/oder Steuermarkierung V auf der Tragstruktur 71, sondern auch die Ansteuerung von (fixen) Elementen der Hängefördervorrichtung 1a..1a", 1b, 1c durch den Transportträger 3a..3c". Mit anderen Worten kann die Fahrsteuerung 95 dazu ausgebildet sein, eine Bewegung eines Steuerelements der Tragstruktur 71 beziehungsweise auf den Führungsschienen 2a..2b auf Basis von im Speicher 96 hinterlegten beziehungsweise gespeicherten Steuerdaten zu beeinflussen. Beispielsweise kann das Steuerelement der Tragstruktur 71 beziehungsweise der Führungsschiene 2a..2a", 2b als Weiche 37a, 37b ausgebildet sein, und ein Steuerbefehl der Fahrsteuerung 95 des Transportträgers 3a..3c" kann eine Schaltung der Weiche 37a, 37b in eine vorgebbare Schaltstellung bewirken. Das heißt, der besagte Steuerbefehl kann eine Schaltung des Weichenelementes 38, 61 für Geradeausfahrt oder Umleitfahrt bewirken.

Beispielsweise kann der Transportträger 3a..3c" eine mit der Fahrsteuerung 95 verbundene Lichtquelle und das Steuerelement der Tragstruktur 71 ein lichtempfindliches Element aufweisen, wobei mit der Lichtquelle über das lichtempfindliche Element ein Steuerbefehl von der Fahrsteuerung 95 des Transportträgers 3a..3c" an das Steuerelement der Tragstruktur 71 übertragbar ist. Als repräsentatives Beispiel für eine solche Lichtquelle wird das Leuchtelement 56 des Transportträgers 3b herangezogen. Das Leuchtelement 56 könnte aber auch an den anderen beispielhaft offenbarten Transportträgern 3a..3a", 3c..3c" angeordnet sein. Beispielsweise kann das Weichenelement 38, 61 in die Stellung für Umleitfahrt gebracht werden, wenn das vom Leuchtelement 56 emittierte Licht empfangen wird, wohingegen das Weichenelement 38, 61 ansonsten in der Stellung für Geradeausfahrt verharrt und umgekehrt.

Die Fig. 30 zeigt dazu ergänzend eine schematische Darstellung eines Ausschnitts aus einem Transportnetz mit einer Weiche 37, welche mit einem lichtempfindlichen Element 100 verbunden ist. Empfängt dieses bei Vorbeifahrt des Transportträgers 3 ein entsprechendes Signal, wird das Weichenelement 38, 61 der Weiche 37 entsprechend angesteuert.

Durch die vorgeschlagenen Maßnahmen ist es möglich, dass sich der Transportträger 3a..3c" autonom über das durch die Tragstruktur 71 beziehungsweise über das durch die durch die Führungsschiene 2a..2a", 2b und die Weichen 37, 37a, 37b gebildete Transportnetz bewegt.

Beispielsweise kann die Fahrsteuerung 95 des Transportträgers 3a..3c" zum Empfang einer Wegdefinition von einer übergeordneten Steuerung 101, zum Speichern dieser Wegdefinition im Speicher 96 des Transportträgers 3a..3c" und zur Auswahl eines Weges von mehreren Wegen in einem Weichenabschnitt E, N, W mit Hilfe der Fahrsteuerung 95 und entsprechend dieser Wegdefinition ausgebildet sein. Die Wegdefinition kann mit Hilfe von optischer, drahtgebundener oder funkbasierter Kommunikation übermittelt werden (insbesondere via Powerline-Communication).

Die Auswahl eines Weges kann insbesondere das autonome Schalten von Weichen 37, 37a, 37b der Tragstruktur 71 mittels der Fahrsteuerung 95 und der Wegdefinition umfassen. Beispielsweise kann dies, wie oben ausgeführt, mit Hilfe des Leuchtelements 56 und mit Hilfe von lichtempfindlichen Elementen 100 entlang der Tragstruktur 71 beziehungsweise entlang der Führungsschienen 2a..2a", 2b erfolgen. Selbstverständlich können Steuerelemente der Tragstruktur 71 auch anders angesteuert werden, beispielsweise mit Hilfe drahtgebundener oder funkbasierter Kommunikation. Auch eine komplexere optische Datenübertragung durch entsprechende Modulation des Leuchtelements 56 wäre möglich

Die Wegdefinition kann etwa die Wahl einer bestimmten Fahrmarkierung U in einem Weichenabschnitt W oder die Abfolge zum Schalten der beispielsweise nächsten vier Weichen 37, 37a, 37b umfassen, also etwa die Abfolge "Geradeausfahrt, Umleitfahrt, Umleitfahrt, Geradeausfahrt". Diese Wegdefinition wird, wie erwähnt, an die Fahrsteuerung 95 übermittelt, im Speicher 96 gespeichert, und dient dann der Wahl einer bestimmten Fahrmarkierung U oder dem autonomen Schalten der Weichen 37, 37a, 37b. Im Fall einer Fahrmarkierung U wird im ersten Weichenabschnitt W demzufolge jene Fahrmarkierung U gewählt, welche eine Geradeausfahrt bewirkt, im zweiten Weichenabschnitt W jene Fahrmarkierung U, welche eine Umleitfahrt bewirkt, und so weiter. Dazu kann vorgesehen sein, dass der Transportträger 3c..3c" mit Hilfe des Fahrflächensensors 91 und der Steuereinheit 94 der linken oder rechten Kante der Fahrmarkierung U nachfährt. Durch Wahl der entsprechenden Kante kann die Wahl des gewünschten Weges im Weichenabschnitt W bewirkt werden. Im Fall von umschaltbaren Weichen 37, 37a, 37b bewirkt die beispielhafte Wegdefinition, dass die die erste Weiche 37, 37a, 37b, welche der Transportträger 3a..3c" bei seiner Bewegung erreicht, wird so angesteuert, dass das Weichenelement 38, 61 auf Geradeausfahrt steht, die zweite Weiche 37, 37a, 37b so, dass das Weichenelement 38, 61 auf Umleitfahrt steht, und so weiter. Die übergeordnete Steuerung 101 gibt also den Weg vor, welcher dann autonom vom Transportträger 3a..3c" mit Hilfe der Fahrsteuerung 95 befahren wird. Die Abfolge zum Schalten der beispielsweise nächsten vier Weichen 37, 37a, 37b kann aber auch richtungsunabhängig sein und bloß Schaltbefehle für die Weichen 37, 37a, 37b angeben, also etwa die Abfolge "nicht umschalten, umschalten, umschalten, nicht umschalten". Ein Umschaltbefehl ist dabei nicht an eine bestimmte Richtung gebunden. Je nach Bauart der Weiche 37, 37a, 37b kann "Umschalten" eine Geradeausfahrt oder eine Umleitfahrt bedeuten. Dasselbe gilt für das Nicht-Umschalten. Die Abfolge kann auch rein binär angegeben werden, beispielsweise in der Abfolge "0, 1, 1, 0" und dann direkt für die Ansteuerung einer mit der Fahrsteuerung 95 verbundenen Lichtquelle 56 des Transportträgers 3, 3a..3c" verwendet werden, wenn die Weiche 37, 37a, 37b ein lichtempfindliches Element 100 zur Ansteuerung der Weiche 37, 37a, 37b aufweist.

Denkbar wäre auch, dass eine Schaltung einer Weiche 37, 37a, 37b anhand einer Steuermarkierung V bewirkt wird, welche im Bereich der Tragstruktur 71 beziehungsweise der Führungsschiene 2a..2a", 2b durch den Transportträger 3, 3a..3c" erfassbar angeordnet ist.

Selbstverständlich ist die Übertragung von Daten von der übergeordneten Steuerung 101 zur Fahrsteuerung 95 des Transportträgers 3, 3a..3c" nicht auf Wegdefinitionen beschränkt, sondern es kann auch eine Sollgeschwindigkeit oder ein Sollabstand zu einem vorausfahrenden Transportträger 3, 3a..3c" übermittelt werden. Dies kann zusätzlich oder alternativ zur Steuerung mit Hilfe von Steuermarkierungen V erfolgen.

Vorteilhaft ist es insbesondere, wenn die Fahrsteuerung 95 des Transportträgers 3, 3a..3c" zum Empfang eines Gewichts einer vom Transportträger 3, 3a..3c" getragenen Masse (also zum Beispiel zum Empfang des Gewichts der Ware 7) von der übergeordneten Steuerung 101, zum Speichern dieses Gewichts im Speicher 96 und zum Ausführen eines Beschleunigungsprofils mit Hilfe der Fahrsteuerung 95 und in Abhängigkeit dieses Gewichts ausgebildet ist. Auf diese Weise kann die Fahrdynamik des Transportträgers 3, 3a..3c" an die Ware 7 angepasst werden. Das genannte Gewicht kann beispielsweise aus einer Datenbank stammen, in welcher das Gewicht zugeordnet zu einer Ware 7 gespeichert ist, oder durch Abwiegen ermittelt werden.

In einer weiteren möglichen Ausführungsvariante löst die Steuermarkierung V ein (aktives) Melden der Fahrsteuerung 95 bei der übergeordneten Steuerung 101 aus. Das Lesen der Steuermarkierung V kann wiederum durch den Fahrflächensensor 91 oder einen anderen Sensor des Transportträgers 3, 3a..3c" erfolgen.

Beispielsweise kann das Melden der Fahrsteuerung 95 bei der übergeordneten Steuerung 101 das Senden einer Wegdefinition durch die übergeordnete Steuerung 101 bewirken. Beispielsweise kann das durch die Tragstruktur 71 beziehungsweise das durch die durch die Führungsschiene 2a..2a", 2b und die Weichen 37, 37a, 37b gebildete Transportnetz in mehrere durch Meldepunkte getrennte Segmente unterteilt sein. Beim aktiven Melden der Fahrsteuerung 95 an einer als Meldepunkt wirkenden Steuermarkierung V erhält die Fahrsteuerung 95 von der übergeordneten Steuerung 101 die Wegdefinition für das folgende Segment. Auf diese Weise kann der Transportträger 3, 3a..3c" flexibel durch das Transportnetz geleitet werden (vergleiche auch die Versorgungs-Segmente Y1..Y4 in Fig. 30).

Denkbar wäre auch, dass im Transportnetz Kurzdistanz-Funksender 102 verteilt sind und die Transportträger 3, 3a..3c" mit der Fahrsteuerung 95 verbundene Kurzdistanz-Funkempfänger 103 aufweisen oder umgekehrt, so wie das in der Fig. 30 schematisch dargestellt ist. Wird durch einen Kurzdistanz-Funkempfänger 103 ein Signal eines Kurzdistanz-Funksenders 102 erfasst, kann das Melden der Fahrsteuerung 95 bei der übergeordneten Steuerung 101 und in Folge ebenfalls die Übermittlung einer Wegdefinition von der übergeordneten Steuerung 101 an die Fahrsteuerung 95 ausgelöst werden. Sind im Transportnetz Kurzdistanz-Funkempfänger 103 verteilt und weisen die Transportträger 3, 3a..3c" Kurzdistanz-Funksender 102 auf, dann sind die in der Fig. 30 dargestellten Rollen umgekehrt. In diesem Fall kann der Empfang des Signals des Kurzdistanz-Funksenders 102 beim stationären Kurzdistanz-Funkempfänger 103 das Melden des Transportträgers 3, 3a..3c" bei der übergeordneten Steuerung 101 durch den Kurzdistanz-Funkempfänger 103 und in Folge ebenfalls die Übermittlung einer Wegdefinition von der übergeordneten Steuerung 101 an die Fahrsteuerung 95 auslösen.

Der Steuermarkierung V oder dem Kurzdistanz-Funksender 102 (beziehungsweise alternativ dem im Transportnetz angeordneten Kurzdistanz-Funkempfänger 103) kann eine örtliche Position zugeordnet sein, und das Melden der Fahrsteuerung 95 bei der übergeordneten Steuerung 101 kann eine Anpassung der Wegdefinition ausgehend von der genannten Position durch die übergeordnete Steuerung 101 bewirken, wenn eine Soll-Position des Transportträgers 3, 3a..3c" nicht mit der örtlichen Position der Steuermarkierung V oder des Kurzdistanz-Funksender 102 (beziehungsweise des Kurzdistanz-Funkempfängers 103) übereinstimmt. Es kann vorkommen, dass die tatsächliche Position oder Ist-Position des Transportträgers 3, 3a..3c", welche bei Erfassung der Steuermarkierung V oder bei Erfassung des Signals des Kurzdistanz-Funksenders 102 der Position dieser Steuermarkierung V oder dieses Kurzdistanz-Funksenders 102 (beziehungsweise dieses Kurzdistanz-Funkempfängers 103) entspricht, nicht mit der von der Fahrsteuerung 95 angenommenen Position des Transportträger 3a..3c" (Soll-Position) übereinstimmt. Die Wahl eines bestimmten Weges beziehungsweise das Schalten von Weichen 37, 37a, 37b entsprechend der im Speicher 96 gespeicherten Wegdefinition führt dann gegebenenfalls zu Fehlschaltungen und Fehlleitungen. Mit den vorgeschlagenen Maßnahmen kann eine Abweichung der tatsächlichen Position des Transportträgers 3, 3a..3c" von der von der Fahrsteuerung 95 angenommenen Position berücksichtigt beziehungsweise die Soll-Position des Transportträgers 3, 3a..3c" wieder korrigiert werden, das heißt auf dessen Ist-Position gesetzt werden.

Denkbar wäre auch, dass die Steuermarkierung V oder der Kurzdistanz-Funksender 102 (beziehungsweise der Kurzdistanz-Funkempfängers 103) dazu ausgebildet sind, das gleichzeitige Melden der Fahrsteuerungen 95 mehrerer Transportträger 3a..3c" bei der übergeordneten Steuerung 101 zu bewirken.

Sind das Energieversorgungssystem 29, 29a, 29b der Hängefördervorrichtung 1a..1a", 1b, 1c (also die Schleifleitung oder das induktive Energieversorgungssystem) auch zur drahtgebundenen Kommunikation mit der Fahrsteuerung 95 des Transportträgers 3, 3a..3c" ausgebildet, kann vorteilhaft vorgesehen sein, dass das Energieversorgungssystem 29, 29a, 29b der Hängefördervorrichtung 1a..1a", 1b, 1c in mehrere Versorgungs-Segmente Y1..Y4 gegliedert ist, welche unterschiedliche Adressen in einem Kommunikationssystem der Hängefördervorrichtung 1a..1a", 1b, 1c aufweisen, so wie das in der Fig. 30 symbolisch dargestellt ist.

Einem Versorgungs-Segment Y1..Y4 des Energieversorgungssystems 29, 29a, 29b kann weiterhin eine örtliche Position zugeordnet sein, wobei das Einfahren des Transportträgers 3, 3a..3c" in dieses Versorgungs-Segment Y1..Y4 eine Anpassung der Wegdefinition ausgehend von der genannten Position durch die übergeordnete Steuerung 101 bewirkt, wenn eine Soll-Position des Transportträgers 3a..3c" nicht mit der örtlichen Position des Versorgungs-Segments Y1..Y4 des Energieversorgungssystems 29, 29a, 29b übereinstimmt. Die Wahl eines bestimmten Weges beziehungsweise das Schalten von Weichen 37, 37a, 37b entsprechend der im Speicher 96 gespeicherten Wegdefinition führt bei der genannten Abweichung wiederum zu Fehlschaltungen und Fehlleitungen. Mit den vorgeschlagenen Maßnahmen kann eine Abweichung der tatsächlichen Position des Transportträgers 3, 3a..3c" von der von der Fahrsteuerung 95 angenommenen Position aber berücksichtigt und die Soll-Position des Transportträgers 3, 3a..3c" wieder korrigiert werden, das heißt auf dessen Ist-Position gesetzt werden (in diesem Fall auf die Position des Versorgungs-Segments Y1..Y4, in welches der Transportträger 3, 3a..3c" einfährt).

In dem in Fig. 30 dargestellten Beispiel ist im Bereich der Weiche 37 kein Versorgungs-Segment Y1..Y4 vorgesehen. Stattdessen wird der Transportträger dort aus dem Energiespeicher 87 versorgt. Dies ist aber nicht zwingend, sondern im Bereich der Weiche 37 könnte ebenfalls ein Versorgungs-Segment Y1..Y4 vorgesehen sein.

Ergänzend wird angemerkt, dass die offenbarten Überlegungen zur Ansteuerung eines Transportträgers 3, "3a..3c" für alle in den Fig. 1 bis 28 dargestellten Ausführungsformen gelten und auf diese anwendbar sind. Lediglich das Schalten einer Weiche 37, 37a, 37b entfällt für die in den Fig. 22 bis 28 dargestellte Ausführungsform, sofern der Weichenabschnitt ohne bewegliches Weichenelement 38, 62 ausgeführt ist.

Abschließend wird festgehalten, dass der Schutzbereich durch die Patentansprüche bestimmt ist. Die Beschreibung und die Zeichnungen sind jedoch zur Auslegung der Ansprüche heranzuziehen.

Insbesondere wird auch festgehalten, dass die dargestellten Vorrichtungen in der Realität auch mehr oder auch weniger Bestandteile als dargestellt umfassen können. Teilweise können die dargestellten Vorrichtungen beziehungsweise deren Bestandteile auch unmaßstäblich und/oder vergrößert und/oder verkleinert dargestellt sein.

### Bezugszeichenaufstellung

- 1a..1c": Hängefördervorrichtung
- 2a..2b: Führungsschiene / Tragstruktur
- 3, 3a..3c'': Transportträger
- 4: Hängeware
- 5: Taschenkörper

- 6: Bügel
- 7: Ware
- 8a, 8b, 8c: Basiskörper
- 9: Tragkörper
- 10a, 10b: Antriebsvorrichtung

- 11a, 11b: Motor
- 12a, 12b: Motorhalterung
- 13a..13b': Antriebsrad
- 14: Antriebsräderpaar
- 15a, 15b: Motorritzel

- 16a, 16b: Zahnrad
- 17a, 17b: Zahnriemen
- 18a..18b': Anstellrad
- 19: erstes Anstellräderpaar
- 20a, 20b: Anstellrad
- 21: zweites Anstellräderpaar
- 22a, 22b: Anstellvorrichtung
- 23a, 23b: Schlitten
- 24a, 24b: Krafterzeuger
- 25a, 25b: Führungsrad
- 26: Führungsräderpaar
- 27a, 27b: Führungsrad
- 28: Führungsräderpaar
- 29, 29a, 29b: Energieversorgungssystem
- 30a, 30b: elektrischer Leiter

- 31a, 31b: elektrischer Leiter
- 32a, 32b: Stromabnehmer
- 33a, 33b: Stromabnehmer
- 34: Spule
- 35: ferromagnetischer Kern

- 36: Gehäuse
- 37, 37a, 37b: Weiche
- 38: Weichenelement
- 39: erstes Leitelement (für Geradeausfahrt)
- 40: zweites Leitelement (für Umleitfahrt)

- 41: Zahnstange
- 42a, 42b: Zahnrad
- 43a, 43b: Führungsteilschiene
- 44: Gehäuse
- 45a, 45b: Antriebsrad

- 46: erstes Antriebsräderpaar
- 47a, 47b: Anstellrad
- 48: (erstes) Anstellräderpaar
- 49a, 49b: Stützrad
- 50: erstes Stützräderpaar
- 51a, 51b: Zusatzanstellrad
- 52: Zusatzanstellräderpaar
- 53a, 53b: Führungsrad
- 54: Führungsräderpaar
- 55: Leuchtelement-Halter

- 56: Leuchtelement
- 57a, 57b: elektrischer Leiter
- 58a, 58b: elektrischer Leiter
- 59a, 59b: Stromabnehmer
- 60a, 60b: Stromabnehmer

- 61: Weichengrundkörper
- 62: Weichenelement
- 63: erstes Leitelement (für Geradeausfahrt)
- 64: zweites Leitelement (für Umleitfahrt)
- 65: Antrieb für Weichenelement

- 66: Führungsschienen-Halterung
- 67a, 67b: Geradführung
- 68a, 68b: Umleitführung
- 69a, 69b: Zusatz-Geradführung
- 70a, 70b: Zusatz-Umleitführung

- 71: Tragstruktur
- 72a, 72b: Antriebsvorrichtung
- 73a..73b: Antriebsrad
- 74: erstes Antriebsräderpaar
- 75a..75b: Antriebsrad
- 76: zweites Antriebsräderpaar
- 77a, 77b: Motor
- 78a, 78b: Motorritzel
- 79a, 79b: Zahnrad
- 80: erstes Zahnradpaar

- 81a, 81b: Zahnrad
- 82: zweites Zahnradpaar
- 83a, 83b: Permanentmagnet
- 84a, 84b: Raupenband
- 85: Saugnapf

- 86a, 86b: elektrischer Leiter
- 87: Energiequelle, Energiespeicher, Energiepuffer
- 88: Verlängerungsstange
- 89: Öse
- 90: Haken

- 91: Fahrflächensensor
- 92, 92a, 92b: Abstandssensor
- 93a, 93b: Sensorhalter
- 94: Steuereinheit
- 95: Fahrsteuerung

- 96: Speicher
- 97: Leistungselektronik
- 98: Kommunikationsmodul
- 99: Energiemanagement-Modul
- 100: lichtempfindliches Element
- 101: übergeordnete Steuerung
- 102: Kurzdistanz-Funksender
- 103: Kurzdistanz-Empfänger

- A..A2: Lauffläche
- B..B2: Gegenlauffläche
- C..C2': Schienenleitfläche / Weichenleitfläche
- D1, D2: Transportrichtung
- E: Weichenabschnitt

- F1..F3: Schienenstrecke
- G: Vertikalebene
- K1, K2: Lauffläche
- L1, L2: Gegenlauffläche
- M1, M2: Schienenleitfläche
- N: Weichenabschnitt
- 01..03: Schienenstrecke
- P1, P2: Stützfläche
- Q1, Q2: Zusatz-Stützfläche
- R: erste Weichenleitfläche

- S: zweite Weichenleitfläche (Umleitfläche)
- T: Fahrfläche
- U: Fahrmarkierung
- V: Steuermarkierung
- W: Weichenabschnitt
- X1..X3: Fahrstrecke
- Y1..Y4: Versorgungs-Segment

## Patentansprüche

1. Hängefördervorrichtung (1a..1b) für ein Kommissioniersystem, umfassend
eine als Führungsschiene (2a..2b) ausgebildete Tragstruktur (71) mit einer entlang der Führungsschiene (2a..2b) verlaufenden Lauffläche (A, A1, A2, K1, K2),
einen Transportträger (3, 3a..3b) zum Transport von Hängeware (4), welcher einen Basiskörper (8a, 8b) und mehrere am Basiskörper (8a, 8b) drehbar gelagerte Räder (13a..13b', 18a..18b', 20a, 20b, 25a, 25b, 27a, 27b, 45a, 45b, 47a, 47b, 49a, 49b, 51a, 51b, 53a, 53b) aufweist, und
eine Antriebsvorrichtung (10a, 10b) zum Bewegen des Transportträgers (3, 3a..3b) entlang der Führungsschiene (2a..2b), wobei
die Antriebsvorrichtung (10a, 10b) einen elektrisch betriebenen Motor (11a, 11b) aufweist, welcher am Transportträger (3, 3a..3b) gelagert ist,
ein Rad der genannten mehreren Räder als Antriebsrad (13a..13b', 45a, 45b) ausgebildet ist, das mit dem Motor (11a, 11b) gekoppelt ist,
die Führungsschiene (2a..2b) zweigeteilt ist und eine erste Führungsteilschiene (43a) mit einer ersten Lauffläche (A1, K1) und eine zweite Führungsteilschiene (43b) mit einer zweiten Lauffläche (A2, K2) umfasst, wobei die erste Lauffläche (A1, K1) und die zweite Lauffläche (A2, K2) mit gegenseitigem Horizontalabstand parallel oder geneigt zueinander verlaufen,
der elektrisch betriebene Motor (11a, 11b) oberhalb der Führungsschiene (2a..2b) angeordnet ist, wenn der Transportträger (3b) an der Führungsschiene (2a..2b) hängt, und
der Transportträger (3, 3a..3b) einen Tragkörper (9) mit einer Aufnahme zum Aufhängen der Hängeware (4) aufweist,
**dadurch gekennzeichnet, dass**
der Transportträger (3, 3a..3b) Stromabnehmer aufweist, welche elektrisch mit dem Motor (11a, 11b) verbunden sind, und
ein elektrisches Energieversorgungssystem (29a, 29b) vorgesehen ist, welches einen Isolator und freiliegende elektrische Leiter (30a, 30b, 31a, 31b, 57a, 57b, 58a, 58b) umfasst, wobei die elektrischen Leiter entlang der und in einem Abstand zur Führungsschiene (2a..2b) angeordnet und von den Stromabnehmern kontaktierbar sind und bei Bewegung des Transportträgers (3, 3a..3b) auf den elektrischen Leitern gleiten, schleifen oder abrollen.

2. Hängefördervorrichtung (1a..1b) nach Anspruch 1, **dadurch gekennzeichnet, dass** das Antriebsrad (13a..13b', 45a, 45b) auf der Lauffläche (A, A1, A2, K1, K2) abrollbar aufliegt und dass der Transportträger (3, 3a..3b) mittels des Antriebsrads (13a..13b', 45a, 45b) an der Führungsschiene (2a..2b) hängt.

3. Hängefördervorrichtung (1a..1b) nach Anspruch 1 oder 2, **dadurch gekennzeichnet, dass** die Hängefördervorrichtung (1a..1b) die Hängeware (4) umfasst, welche mit dem Transportträger (3, 3a..3b) transportierbar ist, und die Hängeware (4) eine Transporttasche mit einem Taschenkörper (5) zur Aufbewahrung einer Ware (7) aufweist.

4. Hängefördervorrichtung (1a..1b) nach einem der Ansprüche 1 bis 3, **dadurch gekennzeichnet, dass** der Transportträger (3, 3a..3b) und/oder die Hängeware (4), insbesondere die Transporttasche, einen mit dem Motor (11a, 11b) elektrisch verbundenen Energiespeicher (87) und/oder eine mit dem Motor (11a, 11b) elektrisch verbundene Energiequelle aufweist.

5. Hängefördervorrichtung (1a..1b) nach einem der Ansprüche 1 bis 4, **dadurch gekennzeichnet, dass** das Antriebsrad (13a..13b', 45a, 45b) des Transportträgers (3, 3a..3b) als erstes Antriebsrad (13a, 13a', 45a, 73a) eines ersten Antriebsräderpaares (14, 46, 74) ausgebildet ist und ein weiteres Rad der genannten mehreren Räder des Transportträgers (3, 3a..3b) als zweites Antriebsrad (13b, 13b', 45b) des ersten Antriebsräderpaares (14, 46, 74) ausgebildet ist, wobei das erste Antriebsrad (13a, 13a', 45a, 73a) und das zweite Antriebsrad (13b, 13b', 45b, 73b) des ersten Antriebsräderpaares (14, 46, 74) koaxial auf einer mit dem Motor (11a, 11b) gekoppelten ersten Antriebswelle angeordnet sind.

6. Hängefördervorrichtung (1a..1b) nach Anspruch 5, **dadurch gekennzeichnet, dass** das erste Antriebsrad (13a, 13a', 45a, 73a) des ersten Antriebsräderpaares (14, 46, 74) auf der ersten Lauffläche (A, A1, A2, K1, K2) abrollbar aufliegt und das zweite Antriebsrad (13b, 13b', 45b, 73b) des ersten Antriebsräderpaares (14, 46, 74) auf der zweiten Lauffläche (A, A1, A2, K1, K2) abrollbar aufliegt.

7. Hängefördervorrichtung (1a..1b) nach Anspruch 5 oder 6, **dadurch gekennzeichnet, dass** der Transportträger (3, 3a..3b) mittels der genannten Antriebsräder (13a, 13b, 13a', 13b', 45a, 45b) an der Führungsschiene (2a..2b) hängt.

8. Hängefördervorrichtung (1a..1b) nach einem der Ansprüche 1 bis 7, **dadurch gekennzeichnet, dass** diese in einem Weichenabschnitt (E, N, W) eine Weiche (37, 37a, 37b) umfasst, wobei die Führungsschiene (2a..2b) eine der Weiche (37, 37a, 37b) in einer ersten Transportrichtung (D1) des Transportträgers (3, 3a..3b) vorgeordnete erste Schienenstrecke (F1, O1) und der Weiche (37, 37a, 37b) in der ersten Transportrichtung (D1) des Transportträgers (3, 3a..3b) nachgeordnete zweite Schienenstrecke (F2, O2) und dritte Schienenstrecke (F3, O3) umfasst und dass die Weiche (37, 37a, 37b) ein zwischen einer ersten Schaltstellung und zweiten Schaltstellung umschaltbares Weichenelement (38, 62) aufweist, um den Transportträger (3, 3a..3b) wahlweise entlang eines ersten Transportweges zwischen der ersten Schienenstrecke (F1, O1) und der zweiten Schienenstrecke (F2, O2) oder entlang eines zweiten Transportweges zwischen der ersten Schienenstrecke (F1, O1) und dritten Schienenstrecke (F3, O3) zu leiten.

9. Hängefördervorrichtung (1a..1b) nach Anspruch 8, **dadurch gekennzeichnet, dass** das Weichenelement (38, 62) horizontal oder vertikal verstellbar, insbesondere verschwenkbar oder verschiebbar, ist.

10. Hängefördervorrichtung (1a..1c") nach einem der Ansprüche 5 bis 7 in Kombination mit den Ansprüchen 8 oder 9, **dadurch gekennzeichnet, dass** zumindest einige der mehreren Räder des Transportträgers (3, 3a..3b) doppelt ausgeführt sind und paarweise symmetrisch zu einer in Längsrichtung der Führungsschiene (2a..2b) verlaufenden Vertikalebene (G) angeordnet sind,
wobei in einem Schaltzustand der Weiche (37, 37a, 37b) jeweils ein Satz der paarweise am Transportträger (3, 3a..3b) vorgesehenen Räder (13a..13b', 18a..18b', 20a, 20b, 25a, 25b, 27a, 27b, 45a, 45b, 47a, 47b, 49a, 49b, 51a, 51b, 53a, 53b,) im Eingriff mit dem Weichenelement (38, 62) ist, oder
wobei in einem Schaltzustand der Weiche (37, 37a, 37b) beide Sätze der paarweise am Transportträger (3, 3a..3b) vorgesehenen Räder (13a..13b', 18a..18b', 20a, 20b, 25a, 25b, 27a, 27b, 45a, 45b, 47a, 47b, 49a, 49b, 51a, 51b, 53a, 53b) so lange im Eingriff mit dem Weichenelement (38, 62) sind, bis eine Antriebskraft für den Transportträger (3, 3a..3b) vollständig von einem Satz der paarweise vorgesehenen Antriebsräder (13a..13b', 45a, 45b) übernommen werden kann.

11. Hängefördervorrichtung (1a..1b) nach einem der Ansprüche 1 bis 10, **dadurch gekennzeichnet, dass** der Transportträger (3, 3a..3b), die Führungsschiene (2a..2b) und die Weiche (37, 37a, 37b) Seitenführungselemente aufweisen, welche mit komplementär zueinander ausgebildeten Seitenführungsflächen versehen sind, um den Transportträger (3, 3a..3b) während einer Transportbewegung des Transportträgers (3, 3a..3b) entlang einer Längserstreckung der Führungsschiene (2a..2b) oder entlang einer Längserstreckung der Weiche (37, 37a, 37b) zu führen.

12. Hängefördervorrichtung (1a..1b) nach einem der Ansprüche 1 bis 11, **dadurch gekennzeichnet, dass** der Transportträger (3, 3a..3b) eine Fahrsteuerung (95) und einen mit der Fahrsteuerung (95) verbundenen beschreib- und auslesbar ausgebildeten Speicher (96) aufweist.

13. Hängefördervorrichtung (1a..1b) nach Anspruch 12, **dadurch gekennzeichnet, dass** die Tragstruktur (71) zumindest ein Steuerelement aufweist und die Fahrsteuerung (95) dazu ausgebildet ist, auf Basis von im Speicher (96) gespeicherten Steuerdaten eine Bewegung des zumindest eines Steuerelements der Tragstruktur (71) zu steuern, wobei die Fahrsteuerung (95) des Transportträgers (3, 3a..3b) und/oder das zumindest eine Steuerelement der Tragstruktur (71) zur optischen, drahtgebundenen oder funkbasierten Kommunikation ausgebildet sind, wobei der Transportträger (3, 3a..3b) eine mit der Fahrsteuerung (95) verbundene Lichtquelle (56) und das Steuerelement der Tragstruktur (71) ein lichtempfindliches Element (100) aufweisen, wobei mit der Lichtquelle (56) über das lichtempfindliche Element (100) ein Steuerbefehl von der Fahrsteuerung (95) des Transportträgers (3, 3a..3b) an das Steuerelement der Tragstruktur (71) übertragbar ist.

14. Hängefördervorrichtung (1a..1b) nach Anspruch 13, **dadurch gekennzeichnet, dass** das Steuerelement der Tragstruktur (71) als Weiche (37, 37a, 37b) ausgebildet ist und ein Steuerbefehl der Fahrsteuerung (95) des Transportträgers (3, 3a..3b) eine Schaltung der Weiche (37, 37a, 37b) in eine vorgebbare Schaltstellung bewirkt.

15. Hängefördervorrichtung (1a..1b) nach Anspruch 12 bis 14, **dadurch gekennzeichnet, dass** der Transportträger (3, 3a..3b) einen mit der Fahrsteuerung (95) verbundenen Fahrflächensensor (91) aufweist, mit dem eine auf der Tragstruktur (71) angeordnete Fahrmarkierung (U) und/oder Steuermarkierung (V) lesbar ist, mit welcher eine Bewegung des Transportträgers (3, 3a..3b) auf der Tragstruktur (71) beeinflussbar ist.

16. Hängefördervorrichtung (1a..1b) nach einem der Ansprüche 12 bis 15, **dadurch gekennzeichnet, dass** die Fahrsteuerung (95) des Transportträgers (3, 3a..3b)
zur Regelung einer Geschwindigkeit des Transportträgers (3, 3a..3b), und/oder
zur Regelung eines Abstands zu einem anderen Transportträger (3, 3a..3b) ausgebildet ist.

17. Hängefördervorrichtung (1a..1b) nach Anspruch 16, **dadurch gekennzeichnet, dass** der Transportträger (3, 3a..3b) mehrere Abstandssensoren (92) aufweist, welche mit der Fahrsteuerung (95) verbunden und derart angeordnet sind, dass diese paarweise einen Winkel von mehr als 0° und kleiner als 180° einschließen.

18. Hängefördervorrichtung (1a..1b) nach einem der Ansprüche 15 bis 17, **dadurch gekennzeichnet, dass** ein Einstellen einer Zielgeschwindigkeit des Transportträgers (3, 3a..3b) oder eines Zielabstands des Transportträgers (3, 3a..3b) zu einem anderen Transportträger (3, 3a..3b) anhand der Steuermarkierung (V) bewirkt wird, welche im Bereich der Tragstruktur (71) angeordnet und durch den Transportträger (3, 3a..3b) erfassbar ist.

## Claims

1. An overhead conveying device (1a..1b) for an order-picking system, comprising
a support structure (71) configured as a guide rail (2a..2b) with a running surface (A, A1, A2, K1, K2) extending along the guide rail (2a..2b),
a transport carrier (3, 3a..3b) for transporting a hanging article (4) having a base body (8a, 8b) and a plurality of wheels (13a..13b', 18a..18b', 20a, 20b, 25a, 25b, 27a, 27b, 45a, 45b, 47a, 47b, 49a, 49b, 51a, 51b, 53a, 53b) rotatably mounted on the base body (8a, 8b), and
a drive device (10a, 10b) for moving the transport carrier (3, 3a..3b) along the guide rail (2a..2b), wherein
the drive device (10a, 10b) has an electrically powered motor (11a, 11b) which is mounted on the transport carrier (3, 3a..3b),
a wheel of said plurality of wheels is configured as a drive wheel (13a..13b', 45a, 45b) which is coupled to the motor (11a, 11b),
the guide rail (2a..2b) is two-part and comprises a first partial guide rail (43a) with a first running surface (A1, K1) and a second partial guide rail (43b) with a second running surface (A2, K2), wherein the first running surface (A1, K1) and the second running surface (A2, K2) extend parallel to or inclined towards one another with a mutual horizontal spacing,
the electrically powered motor (11a, 11b) is arranged above the guide rail (2a..2b) when the transport carrier (3b) is suspended from the guide rail (2a..2b), and
the transport carrier (3, 3a..3b) has a support body (9) with a receiving means for suspending the hanging article (4),
**characterized in that**
the transport carrier (3, 3a..3b) has current collectors which are electrically connected to the motor (11a, 11b), and
an electrical energy supply system (29a, 29b) is provided which comprises an insulator and exposed electrical conductors (30a, 30b, 31a, 31b, 57a, 57b, 58a, 58b), wherein the electrical conductors are arranged along and with a spacing to the guide rail (2a..2b) and can be contacted with the current collectors and slide, brush or roll on the electrical conductors when the transport carrier (3, 3a..3b) moves.

2. The overhead conveying device (1a..1b) according to claim 1, **characterized in that** the drive wheel (13a..13b', 45a, 45b) lies on the running surface (A, A1, A2, K1, K2) in a rollable manner and **in that** the transport carrier (3, 3a..3b) is suspended from the guide rail (2a..2b) by the drive wheel (13a..13b', 45a, 45b).

3. The overhead conveying device (1a..1b) according to claim 1 or 2, **characterized in that** the overhead conveying device (1a..1b) comprises the hanging article (4) which is transportable with the transport carrier (3, 3a..3b), and the hanging article (4) has a transport bag with a bag body (5) for storing an article (7).

4. The overhead conveying device (1a..1b) according to one of claims 1 to 3, **characterized in that** the transport carrier (3, 3a..3b) and/or the hanging article (4), in particular the transport bag, has an energy storage (87) electrically connected to the motor (11a, 11b) and/or an energy source electrically connected to the motor (11a, 11b).

5. The overhead conveying device (1a..1b) according to one of claims 1 to 4, **characterized in that** the drive wheel (13a..13b', 45a, 45b) of the transport carrier (3, 3a..3b) is configured as a first drive wheel (13a, 13a', 45a, 73a) of a first drive wheel pair (14, 46, 74) and a further wheel of said plurality of wheels of the transport carrier (3, 3a..3b) is configured as a second drive wheel (13b, 13b', 45b) of the first drive wheel pair (14, 46, 74), wherein the first drive wheel (13a, 13a', 45a, 73a) and the second drive wheel (13b, 13b', 45b, 73b) of the first drive wheel pair (14, 46, 74) are arranged coaxially on a first drive shaft coupled to the motor (11a, 11b).

6. The overhead conveying device (1a..1b) according to claim 5, **characterized in that** the first drive wheel (13a, 13a', 45a, 73a) of the first drive wheel pair (14, 46, 74) lies on the first running surface (A, A1, A2, K1, K2) in a rollable manner and the second drive wheel (13b, 13b', 45b, 73b) of the first drive wheel pair (14, 46, 74) lies on the second running surface (A, A1, A2, K1, K2) in a rollable manner.

7. The overhead conveying device (1a..1b) according to claim 5 or 6, **characterized in that** the transport carrier (3, 3a..3b) is suspended from the guide rail (2a..2b) by said drive wheels (13a, 13b, 13a', 13b', 45a, 45b).

8. The overhead conveying device (1a..1b) according to one of claims 1 to 7, **characterized in that** the overhead conveying device (1a..1b) comprises a diverter (37, 37a, 37b) in a diverter section (E, N, W), wherein the guide rail (2a..2b) comprises a first rail route (F1, O1) upstream of the diverter (37, 37a, 37b) in a first transport direction (D1) of the transport carrier (3, 3a..3b) and a second rail route (F2, O2) and third rail route (F3, O3) downstream of the diverter (37, 37a, 37b) in the first transport direction (D1) of the transport carrier (3, 3a..3b), and **in that** the diverter (37, 37a, 37b) has a diverter element (38, 62) which is switchable between a first switch position and a second switch position in order to selectively direct the transport carrier (3, 3a..3b) along a first transport path between the first rail route (F1, O1) and the second rail route (F2, O2) or along a second transport path between the first rail route (F1, O1) and the third rail route (F3, O3).

9. The overhead conveying device (1a..1b) according to claim 8, **characterized in that** the diverter element (38, 62) is horizontally or vertically displaceable, in particular pivotable or slidable.

10. The overhead conveying device (1a..1b) according to one of claims 5 to 7 in combination with one of claims 8 or 9, **characterized in that** at least some of the plurality of wheels of the transport carrier (3, 3a..3b) are configured double and are arranged in pairs symmetrically to a vertical plane (G) extending in the longitudinal direction of the guide rail (2a..2b),
wherein in a switching state of the diverter (37, 37a, 37b) one set each of the wheels (13a..13b', 18a..18b', 20a, 20b, 25a, 25b, 27a, 27b, 45a, 45b, 47a, 47b, 49a, 49b, 51a, 51b, 53a, 53b) provided in pairs on the transport carrier (3, 3a..3b) is engaged with the diverter element (38, 62), or
wherein in a switching state of the diverter (37, 37a, 37b) both sets of the wheels (13a..13b', 18a..18b', 20a, 20b, 25a, 25b, 27a, 27b, 45a, 45b, 47a, 47b, 49a, 49b, 51a, 51b, 53a, 53b) provided in pairs on the transport carrier (3, 3a..3b) are engaged with the diverter element (38, 62) until a drive force for the transport carrier (3, 3a..3b) can be completely taken on by one set of the drive wheels (13a..13b', 45a, 45b) provided in pairs.

11. The overhead conveying device (1a..1b) according to one of claims 1 to 10, **characterized in that** the transport carrier (3, 3a..3b), the guide rail (2a..2b) and the diverter (37, 37a, 37b) have lateral guide elements which are provided with mutually complementary lateral guide surfaces in order to guide the transport carrier (3, 3a..3b) during a transport movement of the transport carrier (3, 3a..3b) along a longitudinal extension of the guide rail (2a..2b) or along a longitudinal extension of the diverter (37, 37a, 37b).

12. The overhead conveying device (1a..1b) according to one of claims 1 to 11, **characterized in that** the transport carrier (3, 3a..3b) has a driving control (95) and a writably and readably configured memory (96) connected to the driving control (95).

13. The overhead conveying device (1a..1b) according to claim 12, **characterized in that** the support structure (71) has at least one control element and the driving control (95) is configured to control a movement of at least one control element of the support structure (71) on the basis of control data stored in the memory (96), wherein the driving control (95) of the transport carrier (3, 3a..3b) and/or the at least one control element of the support structure (71) is configured for optical, wired or wireless communication, wherein the transport carrier (3, 3a..3b) has a light source (56) connected to the driving control (95) and the control element of the support structure (71) has a light-sensitive element (100), wherein a control command can be transmitted from the driving control (95) of the transport carrier (3, 3a..3b) to the control element of the support structure (71) with the light source (56) via the light-sensitive element (100).

14. The overhead conveying device (1a..1b) according to claim 13, **characterized in that** the control element of the support structure (71) is configured as a diverter (37, 37a, 37b), and a control command of the driving control (95) of the transport carrier (3, 3a..3b) triggers a switching of the diverter (37, 37a, 37b) into a predeterminable switch position.

15. The overhead conveying device (1a..1b) according to claim 12 to 14, **characterized in that** the transport carrier (3, 3a..3b) has a driving surface sensor (91) connected to the driving control (95) with which a driving marking (U) and/or control marking (V) arranged on the support structure (71) is readable, with which a movement of the transport carrier (3, 3a..3b) on the support structure (71) can be influenced.

16. The overhead conveying device (1a..1b) according to one of claims 12 to 15, **characterized in that** the driving control (95) of the transport carrier (3, 3a..3b) is configured
to closed-loop control a speed of the transport carrier (3, 3a..3b), and/or
to closed-loop control a distance from another transport carrier (3, 3a..3b).

17. The overhead conveying device (1a..1b) according to claim 16, **characterized in that** the transport carrier (3, 3a..3b) has a plurality of distance sensors (92), which are connected to the driving control (95) and are arranged in such a way that the distance sensors (92) form an angle greater than 0° and less than 180° in pairs.

18. The overhead conveying device (1a..1b) according to one of claims 15 to 17, **characterized in that** a desired speed of the transport carrier (3, 3a..3b) or a desired distance of the transport carrier (3, 3a..3b) from another transport carrier (3, 3a..3b) is set on the basis of the control marking (V), which is arranged in the region of the support structure (71) and can be detected by the transport carrier (3, 3a..3b).

## Revendications

1. Dispositif de convoyage suspendu (1a..1b) pour un système de préparation de commandes, comportant
une structure porteuse (71) configurée comme rail de guidage (2a..2b) avec une surface de roulement (A, A1, A2, K1, K2) s'étendant le long du rail de guidage (2a..2b),
un support de transport (3, 3a..3b) pour transporter des articles suspendus (4), lequel présente un corps de base (8a, 8b) et plusieurs roues montées de manière pivotante sur le corps de base (8a, 8b) (13a..13b', 18a..18b', 20a, 20b, 25a, 25b, 27a, 27b, 45a, 45b, 47a, 47b, 49a, 49b, 51a, 51b, 53a, 53b), et
un dispositif d'entraînement (10a, 10b) pour déplacer le support de transport (3, 3a..3b) le long du rail de guidage (2a..2b),
le dispositif d'entraînement (10a, 10b) présentant un moteur électrique (11a, 11b) monté sur le support de transport (3, 3a..3b),
une roue desdites plusieurs roues, configurée comme roue motrice (13a..13b', 45a, 45b) couplée au moteur (11a, 11b),
le rail de guidage (2a..2b) divisé en deux et comportant un premier tronçon de rail de guidage (43a) avec une première surface de roulement (A1, K1) et un deuxième tronçon de rail de guidage (43b) avec une deuxième surface de roulement (A2, K2), la première surface de roulement (A1, K1) et la deuxième surface de roulement (A2, K2) s'étendant parallèlement l'une à l'autre ou étant inclinées l'une par rapport à l'autre avec un écart horizontal réciproque,
le moteur électrique (11a, 11b) étant disposé au-dessus du rail de guidage (2a..2b) lorsque le support de transport (3b) est suspendu au rail de guidage (2a..2b), et
le support de transport (3, 3a..3b) présentant un corps porteur (9) avec un logement pour la suspension des articles suspendus (4),
**caractérisé en ce que**
le support de transport (3, 3a..3b) présente des capteurs de courant reliés électriquement au moteur (11a, 11b), et
un système d'alimentation électrique (29a, 29b) est prévu, lequel comporte un isolateur et des conducteurs électriques exposés (30a, 30b, 31a, 31b, 57a, 57b, 58a, 58b),
les conducteurs électriques étant disposés le long du rail de guidage (2a..2b) et à distance de celui-ci, étant susceptibles d'être mis en contact par les capteurs de courant et, lors du mouvement du support de transport (3, 3a..3b), glissant, frottant ou roulant sur les conducteurs électriques.

2. Dispositif de convoyage suspendu (1a..1b) selon la revendication 1, **caractérisé en ce que** la roue motrice (13a..13b', 45a, 45b) repose de façon à rouler sur la surface de roulement (A, A1, A2, K1, K2) et **en ce que** le support de transport (3, 3a..3b) est suspendu au rail de guidage (2a..2b) au moyen de la roue motrice (13a..13b', 45a, 45b).

3. Dispositif de convoyage suspendu (1a..1b) selon la revendication 1 ou 2, **caractérisé en ce que** le dispositif de convoyage suspendu (1a..1b) comporte les articles suspendus (4) transportables au moyen du support de transport (3, 3a..3b), et **en ce que** les articles suspendus (4) présentent un sac de transport avec un corps de sac (5) pour stocker une marchandise (7).

4. Dispositif de convoyage suspendu (1a..1b) selon l'une des revendications 1 à 3, **caractérisé en ce que** le support de transport (3, 3a..3b) et/ou les articles suspendus (4), en particulier le sac de transport, présentent un accumulateur d'énergie (87) relié électriquement au moteur (11a, 11b) et/ou une source d'énergie reliée électriquement au moteur (11a, 11b).

5. Dispositif de convoyage suspendu (1a..1b) selon l'une des revendications 1 à 4, **caractérisé en ce que** la roue motrice (13a..13b', 45a, 45b) du support de transport (3, 3a..3b) est configurée comme première roue motrice (13a, 13a', 45a, 73a) d'une première paire de roues motrices (14, 46, 74) et une autre roue desdites plusieurs roues du support de transport (3, 3a..3b) est configurée comme deuxième roue motrice (13b, 13b', 45b) de la première paire de roues motrices (14, 46, 74), la première roue motrice (13a, 13a', 45a, 73a) et la deuxième roue motrice (13b, 13b', 45b, 73b) de la première paire de roues motrices (14, 46, 74) étant disposées coaxialement sur un premier arbre d'entraînement couplé au moteur (11a, 11b).

6. Dispositif de convoyage suspendu (1a..1b) selon la revendication 5, **caractérisé en ce que** la première roue motrice (13a, 13a', 45a, 73a) de la première paire de roues motrices (14, 46, 74) repose de façon à rouler sur la première surface de roulement (A, A1, A2, K1, K2) et la deuxième roue motrice (13b, 13b', 45b, 73b) de la première paire de roues motrices (14, 46, 74) repose de façon à rouler sur la deuxième surface de roulement (A, A1, A2, K1, K2).

7. Dispositif de convoyage suspendu (1a..1b) selon la revendication 5 ou 6, **caractérisé en ce que** le support de transport (3, 3a..3b) est suspendu au rail de guidage (2a..2b) au moyen desdites roues motrices (13a, 13b, 13a', 13b', 45a, 45b).

8. Dispositif de convoyage suspendu (1a..1b) selon l'une des revendications 1 à 7, **caractérisé en ce qu'**il comporte, dans une zone d'aiguillage (E, N, W), un aiguillage (37, 37a, 37b), le rail de guidage (2a..2b) comportant un premier tronçon de rail (F1, O1) en amont de l'aiguillage (37, 37a, 37b) dans une première direction de transport (D1) du support de transport (3, 3a..3b) et un deuxième tronçon de rail (F2, O2) et un troisième tronçon de rail (F3, O3) en aval de l'aiguillage (37, 37a, 37b) dans la première direction de transport (D1) du support de transport (3, 3a..3b), et **en ce que** l'aiguillage (37, 37a, 37b) présentant un élément d'aiguillage (38, 62) commutable entre une première position de commutation et une deuxième position de commutation afin de guider le support de transport (3, 3a..3b), au choix, le long d'un premier trajet de transport entre le premier tronçon de rail (F1, O1) et le deuxième tronçon de rail (F2, O2) ou le long d'un deuxième trajet de transport entre le premier tronçon de rail (F1, O1) et le troisième tronçon de rail (F3, O3).

9. Dispositif de convoyage suspendu (1a..1b) selon la revendication 8, **caractérisé en ce que** l'élément d'aiguillage (38, 62) est réglable horizontalement ou verticalement, en particulier pivotable ou déplaçable par coulissement.

10. Dispositif de convoyage suspendu (1a..1c") selon l'une des revendications 5 à 7 en combinaison avec les revendications 8 ou 9, **caractérisé en ce qu'**au moins certaines des roues du support de transport (3, 3a..3b) sont réalisées en double et disposées par paires de manière symétrique par rapport à un plan vertical (G) s'étendant dans le sens longitudinal du rail de guidage (2a..2b),
dans un état de commutation de l'aiguillage (37, 37a, 37b), respectivement un ensemble des roues prévues par paires sur le support de transport (3, 3a..3b) (13a..13b', 18a..18b', 20a, 20b, 25a, 25b, 27a, 27b, 45a, 45b, 47a, 47b, 49a, 49b, 51a, 51b, 53a, 53b) étant en prise avec l'élément d'aiguillage (38, 62), ou
dans un état de commutation de l'aiguillage (37, 37a, 37b), les deux ensembles des roues (13a..13b', 18a..18b', 20a, 20b, 25a, 25b, 27a, 27b, 45a, 45b, 47a, 47b, 49a, 49b, 51a, 51b, 53a, 53b) prévues par paires sur le support de transport (3, 3a..3b) étant en prise avec l'élément d'aiguillage (38, 62) jusqu'à ce qu'une force d'entraînement pour le support de transport (3, 3a..3b) puisse être entièrement prise en charge par un ensemble des roues motrices prévues par paires (13a..13b', 45a, 45b).

11. Dispositif de convoyage suspendu (1a..1b) selon l'une des revendications 1 à 10, **caractérisé en ce que** le support de transport (3, 3a..3b), le rail de guidage (2a..2b) et l'aiguillage (37, 37a, 37b) présentent des éléments de guidage latéral dotés de surfaces de guidage latéral formées de manière complémentaire les unes aux autres afin de guider le support de transport (3, 3a..3b) pendant un mouvement de transport du support de transport (3, 3a..3b) le long d'une extension longitudinale du rail de guidage (2a..2b) ou le long d'une extension longitudinale de l'aiguillage (37, 37a, 37b).

12. Dispositif de convoyage suspendu (1a..1b) selon l'une des revendications 1 à 11, **caractérisé en ce que** le support de transport (3, 3a..3b) présente une commande de déplacement (95) et une mémoire (96) raccordée à la commande de déplacement (95) et configurée pour être écrite et lue.

13. Dispositif de convoyage suspendu (1a..1b) selon la revendication 12, **caractérisé en ce que** la structure porteuse (71) présente au moins un élément de commande et **en ce que** la commande de déplacement (95) est configurée pour commander, sur la base de données de commande enregistrées dans la mémoire (96), un mouvement d'au moins un élément de commande de la structure porteuse (71), la commande de déplacement (95) du support de transport (3, 3a..3b) et/ou au moins un élément de commande de la structure porteuse (71) étant configurés pour une communication optique, filaire ou radio, le support de transport (3, 3a..3b) présentant une source lumineuse (56) raccordée à la commande de déplacement (95) et l'élément de commande de la structure porteuse (71) présentant un élément photosensible (100), un ordre de commande pouvant être transmis de la commande de déplacement (95) du support de transport (3, 3a..3b) vers l'élément de commande de la structure porteuse (71) au moyen de la source lumineuse (56) via l'élément photosensible (100).

14. Dispositif de convoyage suspendu (1a..1b) selon la revendication 13, **caractérisé en ce que** l'élément de commande de la structure porteuse (71) est configuré comme aiguillage (37, 37a, 37b) et un ordre de commande de la commande de déplacement (95) du support de transport (3, 3a..3b) provoque une commutation de l'aiguillage (37, 37a, 37b) dans une position de commutation prédéfinissable.

15. Dispositif de convoyage suspendu (1a..1b) selon les revendications 12 à 14, **caractérisé en ce que** le support de transport (3, 3a..3b) présente un capteur de surface de roulage (91) raccordé à la commande de déplacement (95), permettant de lire un marquage de déplacement (U) et/ou un marquage de commande (V) disposé(s) sur la structure porteuse (71), ce marquage permettant d'influencer un mouvement du support de transport (3, 3a..3b) sur la structure porteuse (71).

16. Dispositif de convoyage suspendu (1a..1b) selon l'une des revendications 12 à 15, **caractérisé en ce que** la commande de déplacement (95) du support de transport (3, 3a..3b) est configurée
pour réguler une vitesse du support de transport (3, 3a..3b), et/ou
pour réguler une distance par rapport à un autre support de transport (3, 3a..3b).

17. Dispositif de convoyage suspendu (1a..1b) selon la revendication 16, **caractérisé en ce que** le support de transport (3, 3a..3b) présente plusieurs capteurs de distance (92) reliés à la commande de déplacement (95) et disposés de sorte qu'ils délimitent par paires un angle supérieur à 0° et inférieur à 180°.

18. Dispositif de convoyage suspendu (1a..1b) selon l'une des revendications 15 à 17, **caractérisé en ce qu'**un réglage d'une vitesse cible du support de transport (3, 3a..3b) ou d'une distance cible du support de transport (3, 3a..3b) par rapport à un autre support de transport (3, 3a..3b) est réalisé au moyen du marquage de commande (V) qui est disposé dans la zone de la structure porteuse (71) et peut être détecté par le support de transport (3, 3a..3b).
